(19) Europäisches Patentamt
European Patent Office
Office européen des brevets

(11) EP 3 360 930 A1

(12) **EUROPEAN PATENT APPLICATION**

(43) Date of publication:
**15.08.2018 Bulletin 2018/33**

(21) Application number: **18163310.8**

(22) Date of filing: **03.07.2015**

(51) Int Cl.:
*C09B 11/10* (2006.01) *B41M 5/00* (2006.01)
*C09B 67/20* (2006.01) *C09D 11/20* (2006.01)
*C09D 11/328* (2014.01) *D06P 1/40* (2006.01)
*D06P 3/24* (2006.01) *D06P 5/00* (2006.01)
*D06P 5/20* (2006.01) *C09B 11/04* (2006.01)
*C09B 11/12* (2006.01) *C09D 11/037* (2014.01)
*D06P 5/30* (2006.01) *D06P 1/00* (2006.01)
*D06P 1/46* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.07.2014 JP 2014139182**
**06.11.2014 JP 2014226290**
**20.02.2015 JP 2015031985**

(62) Document number(s) of the earlier application(s) in accordance with Art. 76 EPC:
**15815728.9 / 3 165 574**

(71) Applicant: **FUJIFILM Corporation**
**Tokyo 106-8620 (JP)**

(72) Inventors:
- **Yagi, Kazunari**
  **Shizuoka, 418-8666 (JP)**
- **Kobayashi, Hiromi**
  **Shizuoka, 418-8666 (JP)**
- **Iizumi, Takashi**
  **Shizuoka, 418-8666 (JP)**
- **Nagata, Yoshiaki**
  **Shizuoka, 418-8666 (JP)**
- **Tateishi, Keiichi**
  **Shizuoka, 418-8666 (JP)**
- **Furukawa, Kazushi**
  **Shizuoka, 418-8666 (JP)**

(74) Representative: **Hoffmann Eitle**
**Patent- und Rechtsanwälte PartmbB**
**Arabellastraße 30**
**81925 München (DE)**

Remarks:
This application was filed on 22-03-2018 as a divisional application to the application mentioned under INID code 62.

(54) **NOVEL COMPOUND, COLORING COMPOSITION FOR DYEING OR TEXTILE, INK JET INK, METHOD OF PRINTING ON FABRIC, AND DYED OR PRINTED FABRIC**

(57) Provided are a compound represented by Formula (2-1), a coloring composition for dyeing or textile printing including the compound, an ink jet ink including the coloring composition for dyeing or textile printing, a method of printing on fabric, and a dyed or printed fabric, in which the color is excellent, the color optical density is high, and light fastness, water fastness, and chlorine fastness are excellent.

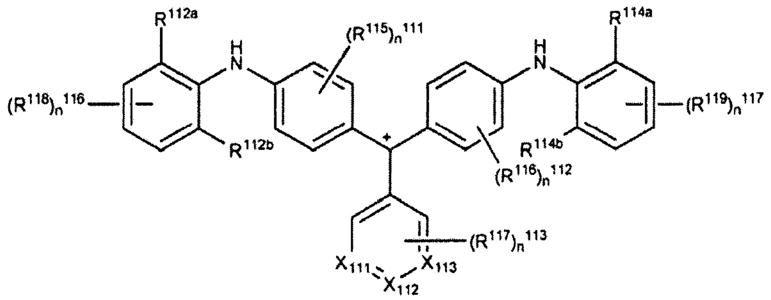

Formula (2-1)

EP 3 360 930 A1

## Description

## BACKGROUND OF THE INVENTION

1. Field of the Invention

The present invention relates to a novel compound, a coloring composition for dyeing or textile printing, an ink jet ink, a method of printing on fabric, and a dyed or printed fabric.

2. Description of the Related Art

In the related art, as a dye for dyeing fabric, for example, an acid dye, a reactive dye, a direct dye, or a disperse dye is used. As a dye for dyeing cellulose fibers such as cotton or viscose rayon, for example, a reactive dye, a direct dye, a sulfur dye, a vat dye, or a naphthol dye is known. As a dye for dyeing polyamide fibers such as silk, wool, or nylon, for example, an acid dye, an acid metal complex dye, an acid mordant dye, or a direct dye is known. Regarding ester fibers such as polyester fiber or cellulose ester fiber, it is known that a disperse dye or a pigment is used for dyeing. In addition, acrylic fibers are generally dyed with a cationic dye. However, some acrylic fibers are dyed with an acid dye.

As dyes, various color dyes can be used. In particular, as a cyan dye, a phthalocyanine dye or a triarylmethane dye is widely used.

In addition, as an industrial dyeing method for dyeing fabric, for example, screen printing, roller printing, or transfer printing has been used until now. These methods are dyeing techniques in which a series of steps including, for example, a step of planning a design pattern, an engraving or plate-making step, a step of preparing a printing paste, and a step of preparing a textile are integrated.

On the other hand, ink jet textile printing in which an ink jet method capable of directly supplying a dye to fabric is used has been proposed. Ink jet textile printing has advantageous effects in that, unlike textile printing of the related art, it is not necessary to make a plate and an image having excellent tone characteristics can be rapidly formed. Therefore, there are merits in that, for example, the delivery time can be reduced, many kinds in small quantities can be produced, and a plate-making step is unnecessary. Further, in ink jet textile printing, only an amount of ink required for forming an image is used. Therefore, it can be said that ink jet textile printing is an image forming method having excellent environmental friendliness in that, for example, the amount of waste liquid is less than that in a method of the related art.

JP2939908B describes a method of, using ink jet textile printing, designing a pattern suitable for a three-dimensional shape of a garment and rapidly reproducing the design image on a textile without deterioration.

In addition, JP2002-348502A describes an example in which a phthalocyanine dye is used in an ink jet textile printing method. JP1995-292581A (JP-H07-292581A) describes an example in which a triarylmethane dye is used in an ink jet textile printing method.

On the other hand, JP2003-73358A describes a triarylmethane compound having a heterocycle, in which an image is formed on paper by ink jet printing using a coloring composition including this compound, and the color, light fastness, and the like of the image are discussed.

JP2006-306933A describes a triarylmethane compound having an UV absorber as a counter anion, in which the light fastness and the like of an organic EL display obtained using this compound are discussed.

## SUMMARY OF THE INVENTION

However, in JP2002-348502A, fabric is printed using Direct Blue 87. It is known that a phthalocyanine dye has poor fixing properties on a polyamide fiber such as nylon. In particular, in a case where a phthalocyanine dye is used for dyeing in an ink jet textile printing method described below, the color optical density is insufficient. On the other hand, a dye having a triarylmethane skeleton which is known as Acid Blue 9 exhibits a vivid cyan color, and even polyamide can be dyed with this dye with a high density. In JP1995-292581A (JP-H07-292581A), fabric is printed using Acid Blue 9. However, this triarylmethane dye is insufficient in light fastness.

The triarylmethane compound having a heterocycle described in JP2003-73358A has fastness to light. However, in JP2003-73358A, issues (in particular, light fastness) arising in a case where the triarylmethane compound having a heterocycle is used for dyeing fabric are not discussed.

Regarding the triarylmethane compound having an UV absorber as a counter anion which is described in JP2006-306933A, in a case where fabric, in particular, a polyamide fiber is dyed with an acid dye, an acidic group is ionically bonded to the polyamide fiber. Therefore, it is assumed that no counter anion remains on the fabric. Therefore, it is difficult to use this triarylmethane compound for dyeing or textile printing. Therefore, a coloring composition for dyeing or textile printing, which has excellent fixing properties and with which dyed fabric having excellent performance such

as light fastness, water fastness, and chlorine fastness can be obtained, is required.

An object of the present invention is to provide: a compound having an excellent color, a high color optical density, and excellent light fastness, water fastness, and chlorine fastness; and a coloring composition for dyeing or textile printing including the compound. In addition, another object of the present invention is to provide an ink jet ink including the above-described coloring composition for dyeing or textile printing, a method of printing on fabric, and a dyed or printed fabric.

That is, the present invention is as follows.

[1] A compound represented by any one of the following Formulae (1) to (3),

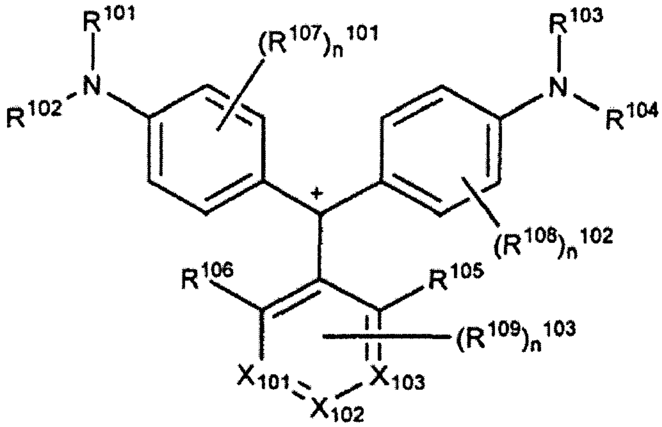

Formula (1)

in Formula (1), $R^{101}$ and $R^{103}$ each independently represent a hydrogen atom, an alkyl group, an aryl group, or a heterocyclic group, $R^{102}$ and $R^{104}$ each independently represent an alkyl group, an aryl group, or a heterocyclic group, $R^{105}$ and $R^{106}$ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group, $R^{107}$, $R^{108}$, and $R^{109}$ each independently represent a substituent, $X_{101}$, $X_{102}$, and $X_{103}$ each independently represent CH or a nitrogen atom, the number of nitrogen atoms in each of the groups represented by $X_{101}$ to $X_{103}$ is 0 to 2, $n^{101}$ and $n^{102}$ each independently represent an integer of 0 to 4, $n^{103}$ represents an integer of 0 to 3, in Formula (1), a substituent may be bonded after a hydrogen atom is removed, in a case where $n^{101}$, $n^{102}$, and $n^{103}$ each independently represent an integer of 2 or more, plural $R^{107}$'s, $R^{108}$'s, and $R^{109}$'s may be the same as or different from each other, $R^{107}$ and $R^{108}$ may be bonded to each other to form a ring, and the compound represented by Formula (1) has a counter anion,

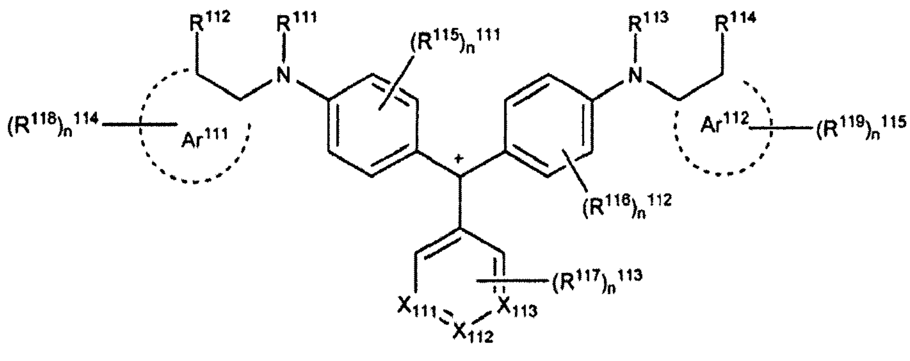

Formula (2)

in Formula (2), $R^{111}$ and $R^{113}$ each independently represent a hydrogen atom, an alkyl group, an aryl group, or a heterocyclic group, $R^{112}$ and $R^{114}$ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group, $R^{115}$, $R^{116}$, $R^{117}$, $R^{118}$,

and $R^{119}$ each independently represent a substituent, $X_{111}$, $X_{112}$, and $X_{113}$ each independently represent CH or a nitrogen atom, the number of nitrogen atoms in each of the groups represented by $X_{111}$ to $X_{113}$ is 0 to 2, $Ar^{111}$ and $Ar^{112}$ each independently represent a benzene ring, a naphthalene ring, or a heterocycle, $n^{111}$ and $n^{112}$ each independently represent an integer of 0 to 4, $n^{113}$ represents an integer of 0 to 5, $n^{114}$ and $n^{115}$ each independently represent an integer of 0 to 5, in Formula (2), a substituent may be bonded after a hydrogen atom is removed, in a case where $n^{111}$, $n^{112}$, $n^{113}$, $n^{114}$, and $n^{115}$ each independently represent an integer of 2 or more, plural $R^{115}$'s $R^{116}$'s $R^{117}$'s, $R^{118}$'s, and $R^{119}$'s may be the same as or different from each other, $R^{115}$ and $R^{116}$ may be bonded to each other to form a ring, and the compound represented by Formula (2) has a counter anion,

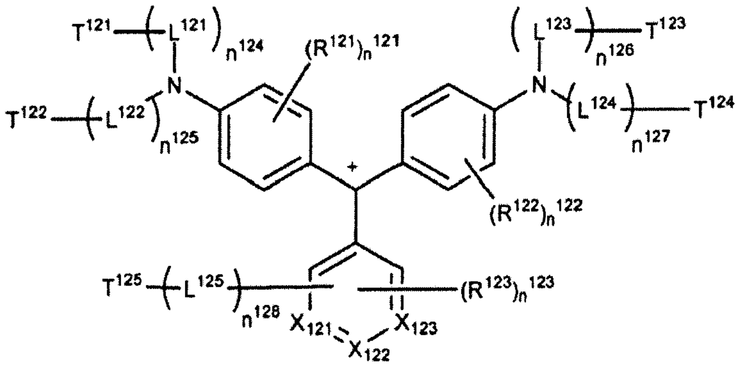

Formula (3)

in Formula (3), $L^{121}$, $L^{122}$, $L^{123}$, $L^{124}$, and $L^{125}$ each independently represent a divalent linking group, $T^{121}$, $T^{122}$, $T^{123}$, $T^{124}$, and $T^{125}$ each independently represent a hydrogen atom or a group represented by any one of the following Formulae (T-1) to (T-8), at least one of $T^{121}$, $T^{122}$, $T^{123}$, $T^{124}$, or $T^{125}$ represents a group represented by any one of Formulae (T-1) to (T-8), $R^{121}$, $R^{122}$, and $R^{123}$ each independently represent a substituent, $X_{121}$, $X_{122}$, and $X_{123}$ each independently represent CH or a nitrogen atom, the number of nitrogen atoms in each of the groups represented by $X_{121}$ to $X_{123}$ is 0 to 2, $n^{121}$ and $n^{122}$ each independently represent an integer of 0 to 4, $n^{123}$ represents an integer of 0 to 5, $n^{124}$, $n^{125}$, $n^{126}$, $n^{127}$, $n^{128}$ each independently represent an integer of 0 or 1, in a case where $n^{121}$, $n^{122}$ , and $n^{123}$ each independently represent an integer of 2 or more, plural $R^{121}$'s, $R^{122}$'s, and $R^{123}$'s may be the same as or different from each other, $R^{121}$ and $R^{122}$ may be bonded to each other to form a ring, and the compound represented by Formula (3) has a counter anion,

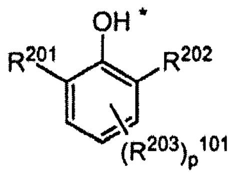

Formula (T-1)

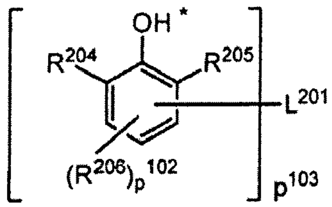

Formula (T-2)

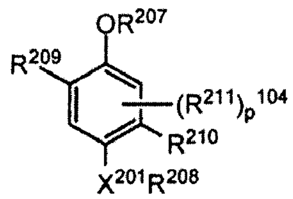

Formula (T-3)

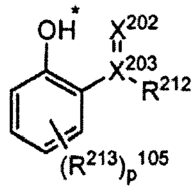

Formula (T-4)

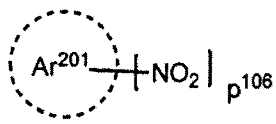

Formula (T-5)

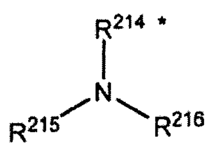

Formula (T-6)

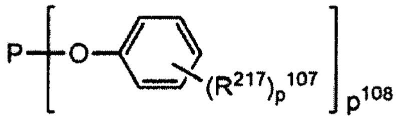

Formula (T-7)

$R^{218}-S-R^{219}$

Formula (T-8)

$R^{201}$, $R^{202}$, $R^{204}$, and $R^{207}$ each independently represent an alkyl group, $R^{205}$ and $R^{208}$ each independently represent a hydrogen atom or an alkyl group, $R^{209}$ and $R^{210}$ each independently represent a hydrogen atom, an alkyl group, or an alkoxy group, $R^{203}$, $R^{206}$, $R^{211}$, $R^{213}$, and $R^{217}$ each independently represent a substituent, $L^{201}$ represents a $p^{103}$-valent linking group, $R^{214}$ represents a hydrogen atom, an oxygen radical (-O·), a hydroxy group, an alkyl group, or an alkoxy group, $R^{215}$ and $R^{216}$ each independently represent an alkyl group, $R^{215}$ and $R^{216}$ may be bonded to each other to form a ring, $R^{218}$ and $R^{219}$ each independently represent a hydrogen atom, an alkyl group, an aryl group, or a heterocyclic group, $X^{202}$ represents an oxygen atom or a nitrogen atom, $X^{203}$ represents a carbon atom or a nitrogen atom, $R^{212}$ represents an aryl group, a heterocyclic group, or a group which is linked to $X^{202}$ to form an aryl group or a heterocyclic group, $Ar^{201}$ represents an aryl group or a heterocyclic group, $p^{101}$ represents 0 to 3, $p^{102}$ and $p^{104}$ each independently represent 0 to 2, $p^{103}$ represents 2 or 3, $p^{106}$ represents 1 to 3, $p^{105}$ and $p^{107}$ each independently represent 0 to 4, $p^{108}$ represents 2 to 3, $X^{201}$ represents an oxygen atom or $NR^{220}$, $R^{220}$ represents a hydrogen atom or an alkyl group, in a case where $X^{201}$ represents NH, at least one of $R^{209}$ or $R^{210}$ represents an alkyl group or an alkoxy group, in a case where $p^{101,}$ $p^{102}$, $p^{104}$, $p^{105}$, and $p^{107}$ each independently represent a number of 2 or more, plural $R^{203}$'s $R^{206}$'s $R^{211}$'s, $R^{213}$'s, and $R^{217}$'s may be the same as or different from each other, and

a group represented by any one of Formulae (T-1) to (T-8) is bonded to a linking group after any one of hydrogen atoms in the formula is removed, a hydrogen atom represented by * is not removed to allow linking, when $R^{214}$ in Formula (T-6) represents a hydrogen atom, $R^{214}$ is not removed to allow linking, in Formula (3) or any one of Formulae (T-1) to (T-8), a substituent may be bonded after a hydrogen atom is removed, and a hydrogen atom represented by * is not removed to allow bonding to a substituent.

[2] The compound according to [1] which is represented by any one of Formulae (1) to (3) and has at least one sulfo group.

[3] The compound according to [1] or [2],

wherein at least one of $T^{121}$, $T^{122}$, $T^{123}$, $T^{124}$, or $T^{125}$ represents a group represented by Formula (T-1), (T-3), (T-4), (T-5), or (T-6).

[4] The compound according to any one of [1] to [3],

wherein Formula (T-4) is represented by the following Formula (T-41), (T-42), or (T-43),

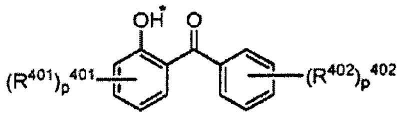

Formula (T-41)

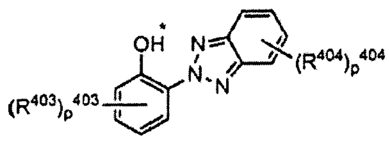

Formula (T-42)

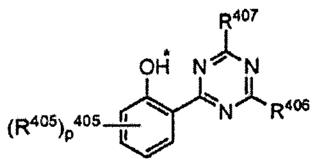

Formula (T-43)

$R^{401}$, $R^{402}$, $R^{403}$, $R^{404}$, and $R^{405}$ each independently represent a substituent, $R^{406}$ and $R^{407}$ each independently represent an aryl group or a heterocyclic group, $p^{401}$, $p^{403}$, $p^{404}$, and $p^{405}$ each independently represent 0 to 4, $p^{402}$ represents 0 to 5, and in a case where $p^{401,}$ $p^{402}$, $p^{403}$, $p^{404}$, and $p^{405}$ each independently represent a number of 2 or more, plural $R^{401}$'s $R^{402}$'s, $R^{403}$'s, $R^{404}$'s and $R^{405}$'s may be the same as or different from each other.

[5] A coloring composition for dyeing or textile printing comprising the compound according to any one of [1] to [4].

[6] An ink jet ink comprising the compound according to any one of [1] to [4].

[7] A textile printing method comprising the following steps (1) to (4):

(1) a step of adjusting a color paste by adding the coloring composition for dyeing or textile printing according to [5] to a solution including at least a polymer compound and water;
(2) a step of printing the color paste of (1) on fabric;
(3) a step of applying steam to the printed fabric; and
(4) a step of washing the printed fabric with water and drying the washed fabric.

[8] A textile printing method comprising the following steps (11) to (14):

(11) a step of applying a paste including at least a polymer compound and water to fabric;
(12) a step of printing the ink jet ink according to [6] on the fabric using an ink jet method;
(13) a step of applying steam to the printed fabric; and
(14) a step of washing the printed fabric with water and drying the washed fabric.

[9] The textile printing method according to [7] or [8],
wherein the fabric includes polyamide.
[10] A fabric which is dyed or printed using the coloring composition for dyeing or textile printing according to [5].
[11] A fabric which is printed using the method according to any one of [7] to [9].

According to the present invention, a compound having an excellent color, a high color optical density, and excellent light fastness, water fastness, and chlorine fastness, and a coloring composition for dyeing or textile printing including the compound can be provided. In addition, an ink jet ink including the above-described coloring composition for dyeing or textile printing, a method of printing on fabric, and a dyed or printed fabric can be provided.

## BRIEF DESCRIPTION OF THE DRAWINGS

Fig. 1 is a diagram showing aqueous solution absorbance spectra of Compound 59 and Compound 65.
Fig. 2 is a diagram showing aqueous solution absorbance spectra of Compound 110 and Compound 105.
Fig. 3 is a diagram showing absorbance spectra of 6 nylon fabrics dyed with Compound 59 and Compound 65.

## DESCRIPTION OF THE PREFERRED EMBODIMENTS

Hereinafter, the present invention will be described in detail.
First, specific examples of a substituent in the present invention are defined as a substituent group A.

(Substituent Group A)

Examples of the substituent group A includes a halogen atom, an alkyl group, an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkyl- or aryl-sulfonylamino group, a mercapto group, an alkylthio group, an arylthio group, a heterocyclic thio group, a sulfamoyl group, an alkyl- or aryl-sulfinyl group, an alkyl- or aryl-sulfonyl group, an acyl group, an aryloxycarbonyl group, an alkoxycarbonyl group, a carbamoyl group, an aryl or heterocyclic azo group, an imido group, a phosphino group, a phosphinyl group, a phosphinyloxy group, a phosphinylamino group, a silyl group, and an ionic hydrophilic group. These substituents may further have a substituent, and examples of this substituent include a group selected from the above-described substituent group A.
Examples of the halogen atom include a fluorine atom, a chlorine atom, a bromine atom, and a iodine atom.
Examples of the alkyl group include a linear, branched, or cyclic substituted or unsubstituted alkyl group. In addition, a cycloalkyl group, a bicycloalkyl group, a tricycloalkyl group and the like having many ring structures are also included. Alkyl groups (for example, an alkoxy group or an alkylthio group) in substituents described below are also included in the examples of the above-described alkyl group.
As the alkyl group, an alkyl group having 1 to 30 carbon atoms is preferable, and examples thereof include a methyl group, an ethyl group, a n-propyl group, an i-propyl group, a t-butyl group, a n-octyl group, an eicosyl group, a 2-chloroethyl group, a 2-cyanoethyl group, and a 2-ethylhexyl group. As the cycloalkyl group, a substituted or unsubstituted cycloalkyl group having 3 to 30 carbon atoms is preferable, and examples thereof include a cyclohexyl group, a cyclopentyl group, and a 4-n-dodecylcyclohexyl group. As the bicycloalkyl group, a substituted or unsubstituted bicycloalkyl group having 5 to 30 carbon atoms is preferable, that is, a monovalent group obtained by removing one hydrogen atom from bicycloalkane having 5 to 30 carbon atoms is preferable, and examples thereof include a bicyclo[1,2,2]heptan-2-yl group and a bicyclo[2,2,2]octan-3-yl group.
Examples of the aralkyl group include a substituted or unsubstituted aralkyl group. As the substituted or unsubstituted aralkyl group, an aralkyl group having 7 to 30 carbon atoms is preferable, and examples thereof include a

benzyl group and a 2-phenethyl group.

Examples of the alkenyl group include a linear, branched, or cyclic substituted or unsubstituted alkenyl group. In addition, a cycloalkenyl group and a bicycloalkenyl group are also included.

As the alkenyl group, a substituted or unsubstituted alkenyl group having 2 to 30 carbon atoms is preferable, and examples thereof include a vinyl group, an allyl group, a prenyl group, a geranyl group, and an oleyl group. As the cycloalkenyl group, a substituted or unsubstituted cycloalkenyl group having 3 to 30 carbon atoms is preferable, that is, a monovalent group obtained by removing one hydrogen atom from cycloalkene having 3 to 30 carbon atoms is preferable, and examples thereof include a 2-cyclopenten-1-yl group and a 2-cyclohexen-1-yl group. As the bicycloalkenyl group, a substituted or unsubstituted bicycloalkenyl group can be used. A substituted or unsubstituted bicycloalkenyl group having 5 to 30 carbon atoms is preferable, that is, a monovalent group obtained by removing one hydrogen atom from bicycloalkene having one double bond is preferable, and examples thereof include a bicyclo[2,2,1]hept-2-en-1-yl group and a bicyclo[2,2,2]oct-2-en-4-yl group.

As the alkynyl group, a substituted or unsubstituted alkynyl group having 2 to 30 carbon atoms is preferable, and examples thereof include an ethynyl group, a propargyl group, and a trimethylsilylethynyl group.

As the aryl group, a substituted or unsubstituted aryl group having 6 to 30 carbon atoms is preferable, and examples thereof include a phenyl group, a p-tolyl group, a naphthyl group, a m-chlorophenyl group, an o-hexadecanoylaminophenyl group.

As the heterocyclic group, a monovalent group obtained by removing one hydrogen atom from a 5- or 6-membered substituted or unsubstituted aromatic or nonaromatic heterocyclic compound is preferable, and a 5- or 6-membered aromatic heterocyclic group having 3 to 30 carbon atoms is more preferable, and examples thereof include a 2-furyl group, a 2-thienyl group, a 2-pyrimidinyl group, and a 2-benzothiazolyl group. Examples of the nonaromatic heterocyclic group include a morpholinyl group.

As the alkoxy group, a substituted or unsubstituted alkoxy group alkoxy group having 1 to 30 carbon atoms is preferable, and examples thereof include a methoxy group, an ethoxy group, an isopropoxy group, a t-butoxy group, a n-octyloxy group, and a 2-methoxyethoxy group.

As the aryloxy group, a substituted or unsubstituted aryloxy group having 6 to 30 carbon atoms is preferable, and examples thereof include a phenoxy group, a 2-methylphenoxy group, a 4-t-butylphenoxy group, a 3-nitrophenoxy group, and a 2-tetradecanoylaminophenoxy group.

As the silyloxy group, a substituted or unsubstituted silyloxy group having 0 to 20 carbon atoms is preferable, and examples thereof include a trimethylsilyloxy group and a diphenylmethylsilyloxy group.

As the heterocyclic oxy group, a substituted or unsubstituted heterocyclic oxy group having 2 to 30 carbon atoms is preferable, and examples thereof include a 1-phenyltetrazole-5-oxy group and a 2-tetrahydropyranyloxy group.

As the acyloxy group, a formyloxy group, a substituted or unsubstituted alkylcarbonyloxy group having 2 to 30 carbon atoms, or a substituted or unsubstituted arylcarbonyloxy group having 6 to 30 carbon atoms is preferable, and examples thereof include an acetyloxy group, a pivaloyloxy group, a stearoyloxy group, a benzoyloxy group, and a p-methoxyphenylcarbonyloxy group.

As the carbamoyloxy group, a substituted or unsubstituted carbamoyloxy group having 1 to 30 carbon atoms is preferable, and examples thereof include a N,N-dimethylcarbamoyloxy group, a N,N-diethylcarbamoyloxy group, a morpholinocarbonyloxy group, a N,N-di-n-octylaminocarbonyloxy group, and a N-n-octylcarbamoyloxy group.

As the alkoxycarbonyloxy group, a substituted or unsubstituted alkoxycarbonyloxy group having 2 to 30 carbon atoms is preferable, and examples thereof include a methoxycarbonyloxy group, an ethoxycarbonyloxy group, a t-butoxycarbonyloxy group, and an n-octylcarbonyloxy group.

As the aryloxycarbonyloxy group, a substituted or unsubstituted aryloxycarbonyloxy group having 7 to 30 carbon atoms is preferable, and examples thereof include a phenoxycarbonyloxy group, a p-methoxyphenoxycarbonyloxy group, and a p-n-hexadecyloxyphenoxycarbonyloxy group.

Examples of the amino group include an alkylamino group, an arylamino group, and a heterocyclic amino group. As the amino group, an amino group, a substituted or unsubstituted alkylamino group having 1 to 30 carbon atoms, a substituted or unsubstituted anilino group having 6 to 30 carbon atoms is preferable, and examples thereof include a methylamino group, a dimethylamino group, an anilino group, a N-methyl-anilino group, a diphenylamino group, and a triazinylamino group.

As the acylamino group, a formylamino group, a substituted or unsubstituted alkylcarbonylamino group having 1 to 30 carbon atoms, or a substituted or unsubstituted arylcarbonylamino group having 6 to 30 carbon atoms is preferable, and examples thereof include an acetylamino group, a pivaloylamino group, a lauroylamino group, a benzoylamino group, and a 3,4,5-tri-n-octyloxyphenylcarbonylamino group.

As the aminocarbonylamino group, a substituted or unsubstituted aminocarbonylamino group having 1 to 30 carbon atoms is preferable, and examples thereof include a carbamoylamino group, a N,N-dimethylaminocarbonylamino group, a N,N-diethylaminocarbonylamino group, and a morpholinocarbonylamino group.

As the alkoxycarbonylamino group, a substituted or unsubstituted alkoxycarbonylamino group having 2 to 30

carbon atoms is preferable, and examples thereof include a methoxycarbonylamino group, an ethoxycarbonylamino group, a t-butoxycarbonylamino group, a n-octadecyloxycarbonylamino group, and a N-methyl-methoxycarbonylamino group.

As the aryloxycarbonylamino group, a substituted or unsubstituted aryloxycarbonylamino group having 7 to 30 carbon atoms is preferable, and examples thereof include a phenoxycarbonylamino group, a p-chlorophenoxycarbonylamino group, and a m-n-octyloxyphenoxycarbonylamino group.

As the sulfamoylamino group, a substituted or unsubstituted sulfamoylamino group having 0 to 30 carbon atoms is preferable, and examples thereof include a sulfamoylamino group, a N,N-dimethylaminosulfonylamino group, and a N-n-octylaminosulfonylamino group.

As the alkyl- or aryl-sulfonylamino group, a substituted or unsubstituted alkylsulfonylamino group having 1 to 30 carbon atoms or a substituted or unsubstituted arylsulfonylamino group having 6 to 30 carbon atoms is preferable, and examples thereof include a methylsulfonylamino group, a butylsulfonylamino group, a phenylsulfonylamino group, a 2,3,5-trichlorophenylsulfonylamino group, and a p-methylphenylsulfonylamino group.

As the alkylthio group, a substituted or unsubstituted alkylthio group having 1 to 30 carbon atoms is preferable, and examples thereof include a methylthio group, an ethylthio group, and a n-hexadecylthio group.

As the arylthio group, a substituted or unsubstituted arylthio group having 6 to 30 carbon atoms is preferable, and examples thereof include a phenylthio group, a p-chlorophenylthio group, and a m-methoxyphenylthio group.

As the heterocyclic thio group, a substituted or unsubstituted heterocyclic thio group having 2 to 30 carbon atoms is preferable, and examples thereof include a 2-benzothiazolylthio group and a 1-phenyltetrazole-5-ylthio group.

As the sulfamoyl group, a substituted or unsubstituted sulfamoyl group having 0 to 30 carbon atoms is preferable, and examples thereof include a N-ethylsulfamoyl group, a N-(3-dodecyloxypropyl)sulfamoyl group, a N,N-dimethylsulfamoyl group, a N-acetylsulfamoyl group, a N-benzoylsulfamoyl group, and a N-(N'-phenylcarbamoyl)sulfamoyl group.

As the alkyl- or aryl-sulfinyl group, a substituted or unsubstituted alkylsulfinyl group having 1 to 30 carbon atoms or a substituted or unsubstituted arylsulfinyl group having 6 to 30 carbon atoms is preferable, and examples thereof include a methylsulfinyl group, an ethylsulfinyl group, a phenylsulfinyl group, and a p-methylphenylsulfinyl group.

As the alkyl- or aryl-sulfonyl group, a substituted or unsubstituted alkylsulfonyl group having 1 to 30 carbon atoms or a substituted or unsubstituted arylsulfonyl group having 6 to 30 carbon atoms is preferable, and examples thereof include a methylsulfonyl group, an ethylsulfonyl group, a phenylsulfonyl group, and a p-methylphenylsulfonyl group.

As the acyl group, a formyl group, a substituted or unsubstituted alkylcarbonyl group having 2 to 30 carbon atoms, a substituted or unsubstituted arylcarbonyl group having 7 to 30 carbon atoms, or a substituted or unsubstituted heterocyclic carbonyl group having 2 to 30 carbon atoms and being bonded to a carbonyl group through a carbon atom is preferable, and examples thereof include an acetyl group, a pivaloyl group, a 2-chloroacetyl group, a stearoyl group, a benzoyl group, a p-n-octyloxyphenylcarbonyl group, a 2-pyridylcarbonyl group, and a 2-furylcarbonyl group.

As the aryloxycarbonyl group, a substituted or unsubstituted aryloxycarbonyl group having 7 to 30 carbon atoms is preferable, and examples thereof include a phenoxycarbonyl group, an o-chlorophenoxycarbonyl group, a m-nitrophenoxycarbonyl group, and a p-t-butylphenoxycarbonyl group.

As the alkoxycarbonyl group, a substituted or unsubstituted alkoxycarbonyl group having 2 to 30 carbon atoms is preferable, and examples thereof include a methoxycarbonyl group, an ethoxycarbonyl group, a t-butoxycarbonyl group, and a n-octadecyloxycarbonyl group.

As the carbamoyl group, a substituted or unsubstituted carbamoyl group having 1 to 30 carbon atoms is preferable, and examples thereof include a carbamoyl group, a N-methylcarbamoyl group, a N,N-dimethylcarbamoyl group, a N,N-di-n-octylcarbamoyl group, and a N-(methylsulfonyl)carbamoyl group.

As the aryl- or heterocyclic azo group, a substituted or unsubstituted aryl azo group having 6 to 30 carbon atoms or a substituted or unsubstituted heterocyclic azo group having 3 to 30 carbon atoms is preferable, and examples thereof include a phenylazo group, a p-chlorophenylazo group, and a 5-ethylthio-1,3,4-thiadiazol-2-ylazo group.

As the imido group, for example, a N-succinimido group or a N-phthalimido group is preferable.

As the phosphino group, a substituted or unsubstituted phosphino group having 0 to 30 carbon atoms is preferable, and examples thereof include a dimethylphosphino group, a diphenylphosphino group, and a methylphenoxyphosphino group.

As the phosphinyl group, a substituted or unsubstituted phosphinyl group having 0 to 30 carbon atoms is preferable, and examples thereof include a phosphinyl group, a dioctyloxyphosphinyl group, and a diethoxyphosphinyl group.

As the phosphinyloxy group, a substituted or unsubstituted phosphinyloxy group having 0 to 30 carbon atoms is preferable, and examples thereof include a diphenoxyphosphinyloxy group and a dioctyloxyphosphinyloxy group.

As the phosphinylamino group, a substituted or unsubstituted phosphinylamino group having 0 to 30 carbon atoms is preferable, and examples thereof include a dimethoxyphosphinylamino group and a dimethylaminophosphinylamino group.

As the silyl group, a substituted or unsubstituted silyl group having 0 to 30 carbon atoms is preferable, and examples thereof include a trimethylsilyl group, a t-butyldimethylsilyl group, and a phenyldimethylsilyl group.

Examples of the ionic hydrophilic group include a sulfo group, a carboxyl group, a thiocarboxyl group, a sulfino group, a phosphono group, a dihydroxyphosphino group, and a quaternary ammonium group. Among these a sulfo group or a carboxyl group is more preferable. In addition, the carboxyl group, the phosphono group, or the sulfo group may be in the form of a salt, and examples of a counter cation which forms a salt with the carboxyl group, the phosphono group, or the sulfo group include an ammonium ion, an alkali metal ion (for example, a lithium ion, a sodium ion, or a potassium ion), and an organic cation (for example, a tetramethylammonium ion, a tetramethylguanidium ion, or tetramethylphosphonium). Among these, a lithium salt, a sodium salt, a potassium salt, or an ammonium salt is preferable, a sodium salt or a mixed salt containing a sodium salt as a major component is more preferable, and a sodium salt is most preferable.

In the present invention, in a case where a compound is a salt, the salt is dissociated and present in an water-soluble ink in the form of ions.

[Compound Represented by Any One of Formulae (1) to (3)]

In a case where a compound represented by any one of Formulae (1) to (3) is used as a coloring composition for dyeing or textile printing, fabrics dyed in various colors including cyan to blue can be obtained. In a colored portion of the dyed fabrics, the improvement of light fastness is verified. The mechanism of action is not clear but is thought to be that, since a portion which is likely to be decomposed by light is shielded in the compound represented by Formula (1) or (2), the light fastness is improved. In addition, in the compound represented by Formula (3), an anti-fading portion is introduced into a dye through a covalent bond. Therefore, it is thought to be that the dye is not faded by light and the anti-fading portion present right near the dye functions to improve the light fastness.

In addition, in a case where dyeing or textile printing is performed using the compound represented by Formula (3), the improvement of chlorine fastness is verified. The mechanism of action is not clear but is thought to be that, since an easily oxidized portion such as phenol is introduced in the compound represented by Formula (3), this portion is oxidized in chlorine water without a dye being oxidized, and thus the chlorine fastness is improved.

First, the compound represented by Formula (1) will be described.

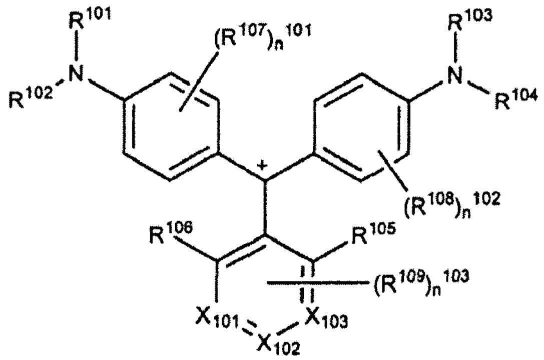

Formula (1)

In Formula (1), $R^{101}$ and $R^{103}$ each independently represent a hydrogen atom, an alkyl group, an aryl group, or a heterocyclic group. $R^{102}$ and $R^{104}$ each independently represent an alkyl group, an aryl group, or a heterocyclic group. $R^{105}$ and $R^{106}$ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. $R^{107}$, $R^{108}$, and $R^{109}$ each independently represent a substituent, and $X_{101}$, $X_{102}$, and $X_{103}$ each independently represent CH or a nitrogen atom. The number of nitrogen atoms in each of the groups represented by $X_{101}$ to $X_{103}$ is 0 to 2. $n^{101}$ and $n^{102}$ each independently represent an integer of 0 to 4, and $n^{103}$ represents an integer of 0 to 3. In Formula (1), a substituent may be bonded after a hydrogen atom is removed. In a case where $n^{101}$, $n^{102}$, and $n^{103}$ each independently represent an integer of 2 or more, plural $R^{107}$'s, $R^{108}$'s, and $R^{109}$'s may be the same as or different from each other. $R^{107}$ and $R^{108}$ may be bonded to each other to form a ring. The compound represented by Formula (1) has a counter anion.

In a case where $R^{101}$, $R^{102}$, $R^{103}$, and $R^{104}$ in Formula (1) represent an alkyl group, an aryl group, or a heterocyclic group, these groups may have a substituent.

In a case where $R^{105}$ and $R^{106}$ each independently represent an alkyl group, an alkoxy group, an acyloxy group,

a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, or an imido group, these groups may have a substituent.

In a case where each group has a substituent, the substituent may be selected from, for example, the substituent group A.

$R^{101}$ and $R^{103}$ represent preferably a hydrogen atom, an alkyl group which may have a substituent, or an aryl group which may have a substituent.

$R^{102}$ and $R^{104}$ represent preferably an alkyl group which may have a substituent or an aryl group which may have a substituent, and more preferably an alkyl group which has a substituent or an aryl group which has a substituent.

As the alkyl group represented by $R^{101}$, $R^{102}$, $R^{103}$, and $R^{104}$, an alkyl group having 1 to 6 carbon atoms is preferable, an alkyl group having 1 to 3 carbon atoms is more preferable, and a methyl group or an ethyl group is still more preferable. When $R^{102}$ and $R^{104}$ represent an alkyl group, a methyl group which is substituted with a phenyl group is most preferable. The methyl group which is substituted with a phenyl group may further have a substituent.

As the aryl group represented by $R^{101}$, $R^{102}$, $R^{103}$, and $R^{104}$, a phenyl group or a naphthyl group is preferable, and a phenyl group is more preferable. In a case where $R^{102}$ and $R^{104}$ represent an aryl group, it is preferable that $R^{101}$ and $R^{103}$ represent a hydrogen atom.

It is preferable that $R^{105}$ and $R^{106}$ represent a halogen atom, an alkyl group which may have a substituent, an alkoxy group which may have a substituent, an acyloxy group which may have a substituent, an sulfamoyl group which may have a substituent, an acyl group which may have a substituent, an alkoxycarbonyl group which may have a substituent, or a sulfo group.

It is more preferable that $R^{105}$ and $R^{106}$ represent an alkyl group which may have a substituent or a halogen atom, in which a chloro group is preferable as the halogen atom.

The substituent represented by $R^{107}$, $R^{108}$, and $R^{109}$ may be selected from, for example, the substituent group A. As the substituent, an alkyl group, a sulfo group, an sulfamoyl group which may have a substituent, a halogen atom, an alkoxy group which may have a substituent, an aryloxy group which may have a substituent, an heterocyclic oxy group which may have a substituent, an acyloxy group which may have a substituent, an alkylamino group which may have a substituent, an arylamino group which may have a substituent, an heterocyclic amino group which may have a substituent, an acylamino group which may have a substituent, an aminocarbonylamino group which may have a substituent, an alkoxycarbonylamino group which may have a substituent, an aryloxycarbonylamino group which may have a substituent, or an alkyl- or aryl-sulfonylamino group which may have a substituent is preferable, and an alkyl group, a sulfo group, or an alkylamino group which may have a substituent, or an arylamino group which may have a substituent is more preferable.

It is preferable that $n^{101}$ and $R^{102}$ represent 0 to 2. It is preferable that $n^{103}$ represents 0 or 1.

$X_{101}$, $X_{102}$, and $X_{103}$ each independently represent CH or a nitrogen atom and preferably CH. In a case where $X_{101}$, $X_{102}$, and $X_{103}$ represent CH, a substituent $R^{109}$ may be bonded after a hydrogen atom is removed.

In general, a triphenylmethane compound is an ionic compound and has a resonance structure. Therefore, for example, regarding Acid Blue 7, the following (A) to (C) represent the same compound.

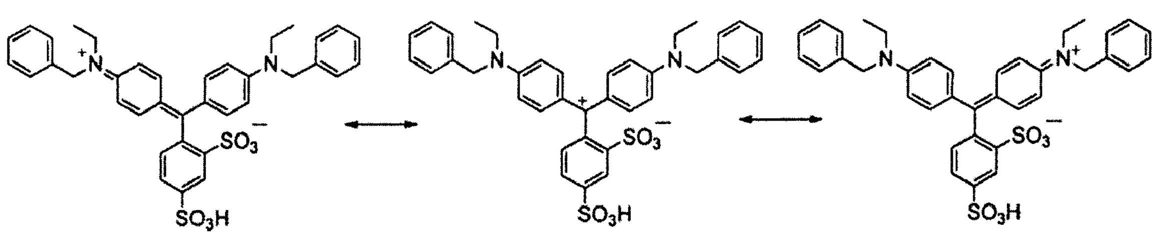

(A) (B) (C)

Acid Blue 7

Formula (1) is represented by preferably the following Formula (1-1) or (1-2), and more preferably the following Formula (1-2).

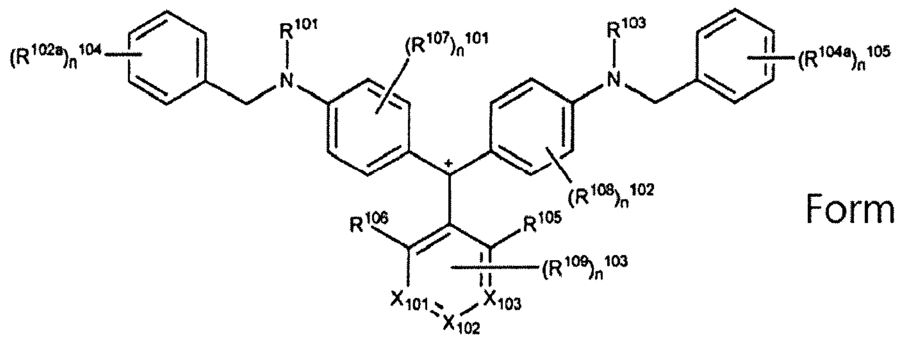

Formula (1-1)

In Formula (1-1), $R^{101}$ and $R^{103}$ each independently represent a hydrogen atom, an alkyl group, an aryl group, or a heterocyclic group. $R^{105}$ and $R^{106}$ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. $R^{102a}$, $R^{104a}$, $R^{107}$, $R^{108}$, and $R^{109}$ each independently represent a substituent, and $X_{101}$, $X_{102}$, and $X_{103}$ each independently represent CH or a nitrogen atom, The number of nitrogen atoms in each of the groups represented by $X_{101}$ to $X_{103}$ is 0 to 2. $n^{101}$ and $n^{102}$ each independently represent an integer of 0 to 4, $n^{103}$ represents an integer of 0 to 3, and $n^{104}$ and $n^{105}$ each independently represent an integer of 0 to 5. In Formula (1-1), a substituent may be bonded after a hydrogen atom is removed. In a case where $n^{101}$, $n^{102}$, $n^{103}$, $n^{104}$, and $n^{105}$ each independently represent an integer of 2 or more, plural $R^{107}$'s $R^{108}$'s $R^{109}$'s, $R^{102a}$'s, and $R^{104a}$'s may be the same as or different from each other. The compound represented by Formula (1-1) has a counter anion,

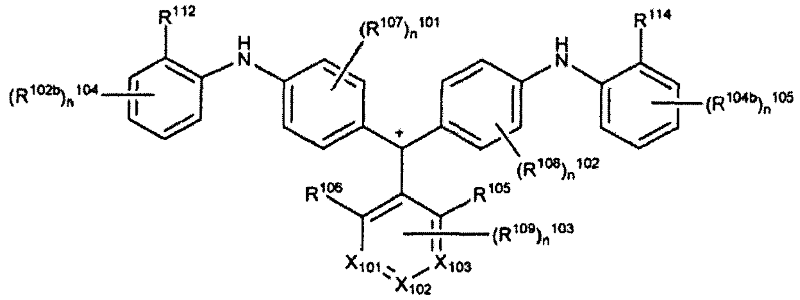

Formula (1-2)

In Formula (1-2), $R^{105}$ and $R^{106}$ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. $R^{112}$ and $R^{114}$ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group, $R^{102b}$, $R^{104b}$, $R^{107}$, $R^{108}$, and $R^{109}$ each independently represent a substituent, and $X_{101}$, $X_{102}$, and $X_{103}$ each independently represent CH or a nitrogen atom. The number of nitrogen atoms in each of the groups represented by $X_{101}$ to $X_{103}$ is 0 to 2. $n^{101}$ and $n^{102}$ each independently represent an integer of 0 to 4, and $n^{103}$ represents an integer of 0 to 3. $n^{104}$ and $n^{105}$ each independently represent an integer of 0 to 5. In Formula (1-2), a substituent may be bonded after a hydrogen atom is removed. In a case where $n^{101}$, $n^{102}$, $n^{103}$, $n^{104}$, and $n^{105}$ each independently represent an integer of 2 or more, plural $R^{107}$'s $R^{108}$'s $R^{109}$'s, $R^{102b}$'s, and $R^{104b}$'s may be the same as or different from each other. The compound represented by Formula (1-2) has a counter anion,

$R^{101}$ and $R^{103}$ in Formula (1-1) have the same specific examples and the same preferable ranges as $R^{101}$ and $R^{103}$ in Formula (1).

$R^{105}$ , $R^{106}$, $R^{107}$, $R^{108}$, and $R^{109}$ in Formulae (1-1) and (1-2) have the same specific examples and the same preferable ranges as $R^{105}$, $R^{106}$, $R^{107}$, $R^{108}$, and $R^{109}$ in Formula (1).

$X_{101}$, $X_{102}$, $X_{103}$, $n^{101}$, $n^{102}$, and $n^{103}$ in Formulae (1-1) and (1-2) have the same preferable ranges as $X_{101}$,

$X_{102}$, $X_{103}$, $n^{101}$, $n^{102}$, and $n^{103}$ in Formula (1).

$R^{102a}$, $R^{104a}$, $R^{102b}$, and $R^{102b}$ in Formulae (1-1) and (1-2) have the same specific examples and the same preferable ranges as $R^{105}$, $R^{106}$, $R^{107}$, $R^{108}$, and $R^{109}$ in Formula (1).

$R^{112}$ and $R^{114}$ in Formula (1-2) have the same specific examples and the same preferable ranges as $R^{112}$ and $R^{114}$ in Formula (2) described below.

In Formulae (1-1) and (1-2), $n^{104}$ and $n^{105}$ represent preferably 1 to 3.

Next, the compound represented by Formula (2) will be described.

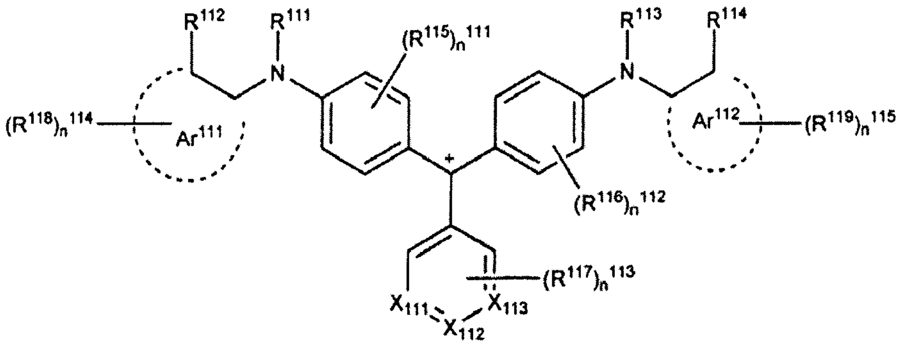

Formula (2)

In Formula (2), $R^{111}$ and $R^{113}$ each independently represent a hydrogen atom, an alkyl group, an aryl group, or a heterocyclic group. $R^{112}$ and $R^{114}$ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. $R^{115}$ , $R^{116}$, $R^{117}$, $R^{118}$, and $R^{119}$ each independently represent a substituent, and $X_{111}$, $X_{112}$, and $X_{113}$ each independently represent CH or a nitrogen atom. The number of nitrogen atoms in each of the groups represented by $X_{111}$ to $X_{113}$ is 0 to 2. $Ar^{111}$ and $Ar^{112}$ each independently represent a benzene ring, a naphthalene ring, or a heterocycle. $n^{111}$ and $n^{112}$ each independently represent an integer of 0 to 4, $n^{113}$ represents an integer of 0 to 5, and $n^{114}$ and $n^{115}$ each independently represent an integer of 0 to 5. In Formula (2), a substituent may be bonded after a hydrogen atom is removed. In a case where $n^{111}$, $n^{112}$, $n^{113}$, $n^{114}$, and $n^{115}$ each independently represent an integer of 2 or more, plural $R^{115}$'s $R^{116}$'s $R^{117}$'s, $R^{118}$'s, and $R^{119}$'s may be the same as or different from each other. $R^{115}$ and $R^{116}$ may be bonded to each other to form a ring. The compound represented by Formula (2) has a counter anion.

In a case where $R^{111}$ and $R^{113}$ represent an alkyl group, an aryl group, or a heterocyclic group, these groups may have a substituent.

In a case where $R^{112}$ and $R^{114}$ each independently represent an alkyl group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, or an imido group, these groups may have a substituent.

In a case where each group has a substituent, the substituent may be selected from, for example, the substituent group A.

$R^{111}$ and $R^{113}$ represent preferably a hydrogen atom or an alkyl group which may have a substituent, and more preferably a hydrogen atom.

$R^{112}$ and $R^{114}$ represents preferably a halogen atom, an alkyl group which may have a substituent, an alkoxy group which may have a substituent, an acyloxy group which may have a substituent, an sulfamoyl group which may have a substituent, an acyl group which may have a substituent, an alkoxycarbonyl group which may have a substituent, a carbamoyl group, or a sulfo group, and more preferably an alkyl group which may have a substituent or a halogen atom. As the halogen atom, a chloro group is preferable.

As the alkyl group represented by $R^{111}$, $R^{112}$, $R^{113}$, and $R^{114}$, an alkyl group having 1 to 6 carbon atoms is preferable, an alkyl group having 1 to 3 carbon atoms is more preferable, a methyl group or an ethyl group is still more preferable, and a methyl group is even still more preferable.

The substituent represented by $R^{115}$, $R^{116}$, $R^{117}$, $R^{118}$, and $R^{119}$ may be selected from, for example, the substituent group A. As the substituent, an alkyl group, a sulfo group, an sulfamoyl group which may have a substituent, a halogen atom, an alkoxy group which may have a substituent, an aryloxy group which may have a substituent, an heterocyclic oxy group which may have a substituent, an acyloxy group which may have a substituent, an amino group

which may have a substituent, an alkylamino group which may have a substituent, an arylamino group which may have a substituent, an heterocyclic amino group which may have a substituent, an acylamino group which may have a substituent, an aminocarbonylamino group which may have a substituent, an alkoxycarbonylamino group which may have a substituent, an aryloxycarbonylamino group which may have a substituent, an alkyl- or aryl-sulfonylamino group which may have a substituent, an alkylthio group which may have a substituent, an alkylsulfonyl group which may have a substituent, or an alkylaminocarbonyl group which may have a substituent is preferable, and an alkyl group, a sulfo group, an alkylamino group which may have a substituent, or an arylamino group which may have a substituent is more preferable. In addition, in a case where the alkylamino group and the arylamino group have a substituent, the substituent is selected from, for example, the substituent group A. As the substituent, an alkyl group, a halogen atom, an alkoxycarbonyl group, or a sulfo group is preferable.

As the alkyl group represented by $R^{115}$, $R^{116}$, $R^{117}$, $R^{118}$, and $R^{119}$, an alkyl group having 1 to 10 carbon atoms is preferable, an alkyl group having 1 to 6 carbon atoms is more preferable, and a methyl group, an ethyl group, an isopropyl group, or a tert-butyl group is still more preferable. From the viewpoint of light fastness, an ethyl group is more preferable rather than a methyl group, and an isopropyl group is more preferable rather than an ethyl group.

As a substitution site in an aromatic ring of $R^{115}$ and $R^{116}$, an ortho position from a nitrogen atom is preferable.

$Ar^{111}$ and $Ar^{112}$ represent preferably a benzene ring or a naphthalene ring, and more preferably a benzene ring.

It is preferable that $n^{111}$ and $n^{112}$ represent 0 to 2. It is preferable that $n^{113}$ represents 0 to 3. It is preferable that $n^{114}$ and $R^{115}$ represent 0 to 5.

$X_{111}$, $X_{112}$, and $X_{113}$ each independently represent CH or a nitrogen atom and preferably CH. In a case where $X_{111}$, $X_{112}$, and $X_{113}$ represent CH, a substituent $R^{117}$ may be bonded after a hydrogen atom is removed.

Formula (2) is represented by preferably the following Formula (2-1) or (2-2), and more preferably the following Formula (2-2).

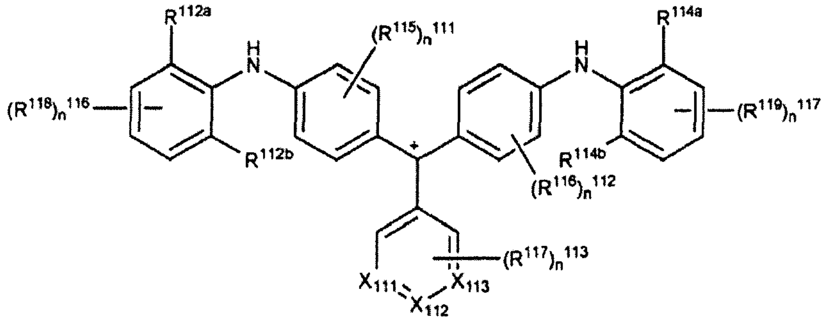

Formula (2-1)

In Formula (2-1), $R^{112a}$, $R^{112b}$, $R^{114a}$ and $R^{114b}$ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. $R^{115}$, $R^{116}$, $R^{117}$, $R^{118}$, and $R^{119}$ each independently represent a substituent, and $X_{111}$, $X_{112}$, and $X_{113}$ each independently represent CH or a nitrogen atom. The number of nitrogen atoms in each of the groups represented by $X_{111}$ to $X_{113}$ is 0 to 2. $n^{111}$ and $n^{112}$ each independently represent an integer of 0 to 4, $n^{113}$ represents an integer of 0 to 5, and $n^{116}$ and $n^{117}$ each independently represent an integer of 0 to 3. In Formula (2-1), a substituent may be bonded after a hydrogen atom is removed. In a case where $n^{111}$, $n^{112}$, $n^{113}$, $n^{116}$, and $n^{117}$ each independently represent an integer of 2 or more, plural $R^{115}$'s $R^{116}$'s $R^{117}$'s, $R^{118}$'s, and $R^{119}$'s may be the same as or different from each other. The compound represented by Formula (2-1) has a counter anion,

$R^{112a}$, $R^{112b}$, $R^{114a}$, and $R^{114b}$ in Formula (2-1) have the same specific examples and the same preferable ranges as $R^{112}$ and $R^{114}$ in Formula (2).

$R^{115}$, $R^{116}$, $R^{117}$, $R^{118}$, and $R^{119}$ in Formula (2-1) have the same specific examples and the same preferable ranges as $R^{115}$, $R^{116}$, $R^{117}$, $R^{118}$, and $R^{119}$ in Formula (2).

$X_{111}$, $X_{112}$, $X_{113}$, $n^{111}$, $n^{112}$, and $n^{113}$ in Formula (2-1) have the same preferable ranges as $X_{111}$, $X_{112}$, $X_{113}$, $n^{111}$ , $n^{112}$ , and $n^{113}$.

It is preferable that $n^{116}$ and $n^{117}$ represent 0 to 2.

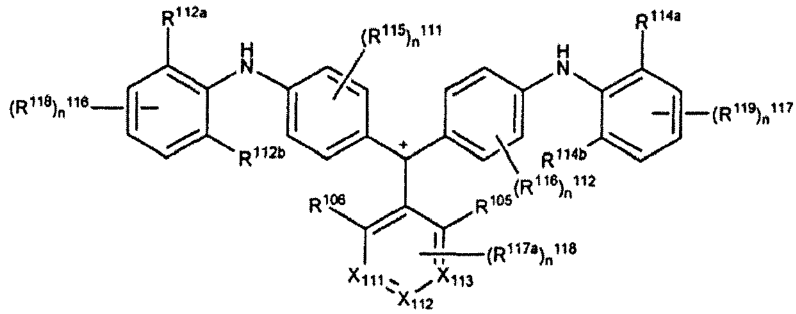

Formula (2-2)

In Formula (2-2), $R^{112a}$, $R^{112b}$, $R^{114a}$, $R^{114b}$, $R^{105}$, and $R^{106}$ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. $R^{115}$, $R^{116}$, $R^{117a}$, $R^{118}$, and $R^{119}$ each independently represent a substituent, and $X_{111}$, $X_{112}$, and $X_{113}$ each independently represent CH or a nitrogen atom. The number of nitrogen atoms in each of the groups represented by $X_{111}$ to $X_{113}$ is 0 to 2. $n^{111}$ and $n^{112}$ each independently represent an integer of 0 to 4, and $n^{116}$, $n^{117}$, and $n^{118}$ each independently represent an integer of 0 to 3. In Formula (2-2), a substituent may be bonded after a hydrogen atom is removed. In a case where $n^{111}$, $n^{112}$, $n^{116}$, $n^{117}$, and $n^{118}$ each independently represent an integer of 2 or more, plural $R^{115}$'s $R^{116}$'s $R^{118}$'s, $R^{119}$'s, and $R^{117a}$'s may be the same as or different from each other. The compound represented by Formula (2-2) has a counter anion.

$R^{112a}$, $R^{112b}$, $R^{114a}$, and $R^{114b}$ in Formula (2-2) have the same specific examples and the same preferable ranges as $R^{112}$ and $R^{114}$ in Formula (2).

$R^{115}$, $R^{116}$, $R^{117a}$, $R^{118}$, and $R^{119}$ in Formula (2-2) have the same specific examples and the same preferable ranges as $R^{115}$, $R^{116}$, $R^{117}$, $R^{118}$, and $R^{119}$ in Formula (2).

$X_{111}$, $X_{112}$, $X_{113}$, $n^{111}$, and $n^{112}$ in Formula (2-2) have the same preferable ranges as $X_{111}$, $X_{112}$, $X_{113}$, $n^{111}$, and $n^{112}$.

It is preferable that $n^{116}$ and $n^{117}$ represent 0 to 2. It is preferable that $n^{118}$ represents 0 or 1.

Next, the compound represented by Formula (3) will be described.

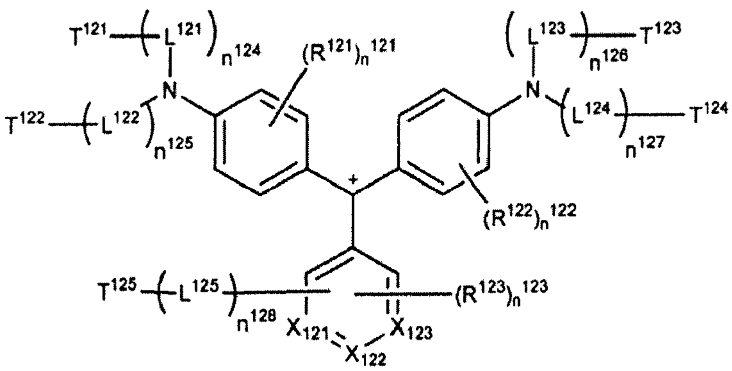

Formula (3)

In Formula (3), $L^{121}$, $L^{122}$, $L^{123}$, $L^{124}$, and $L^{125}$ each independently represent a divalent linking group, and $T^{121}$, $T^{122}$, $T^{123}$, $T^{124}$, and $T^{125}$ each independently represent a hydrogen atom or a group represented by any one of the following Formulae (T-1) to (T-8). At least one of $T^{121}$, $T^{122}$, $T^{123}$, $T^{124}$, or $T^{125}$ represents a group represented by any one of Formulae (T-1) to (T-8). $R^{121}$, $R^{122}$, and $R^{123}$ each independently represent a substituent, and $X_{121}$, $X_{122}$, and $X_{123}$ each independently represent CH or a nitrogen atom. The number of nitrogen atoms in each of the groups represented by $X_{121}$ to $X_{123}$ is 0 to 2. $n^{121}$ and $n^{122}$ each independently represent an integer of 0 to 4, and $n^{123}$ represents an integer of 0 to 5. $n^{124}$, $n^{125}$, $n^{126}$, $n^{127}$, $n^{128}$ each independently represent an integer of 0 or 1. In a case where $n^{121}$, $n^{122}$, and $n^{123}$ each independently represent an integer of 2 or more, plural $R^{121}$'s, $R^{122}$'s, and $R^{123}$'s may be the same as or different from each other. $R^{121}$ and $R^{122}$ may be bonded to each other to form a ring. The compound represented by Formula (3) has a counter anion,

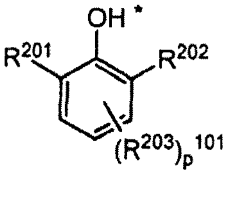

Formula (T-1)

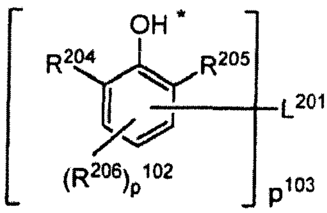

Formula (T-2)

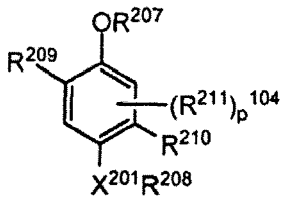

Formula (T-3)

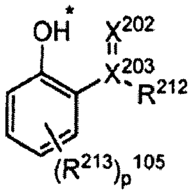

Formula (T-4)

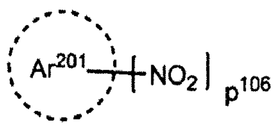

Formula (T-5)

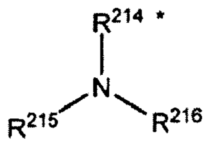

Formula (T-6)

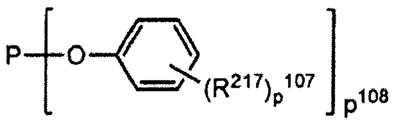

Formula (T-7)

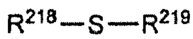

Formula (T-8)

$R^{201}$, $R^{202}$, $R^{204}$, and $R^{207}$ each independently represent an alkyl group. $R^{205}$ and $R^{208}$ each independently represent a hydrogen atom or an alkyl group. $R^{209}$ and $R^{210}$ each independently represent a hydrogen atom, an alkyl group, or an alkoxy group. $R^{203}$, $R^{206}$, $R^{211}$, $R^{213}$, and $R^{217}$ each independently represent a substituent. $L^{201}$ represents a $p^{103}$-valent linking group. $R^{214}$ represents a hydrogen atom, an oxygen radical (-O·), a hydroxy group, an alkyl group, or an alkoxy group. $R^{215}$ and $R^{216}$ each independently represent an alkyl group. $R^{215}$ and $R^{216}$ may be bonded to each other to form a ring. $R^{218}$ and $R^{219}$ each independently represent a hydrogen atom, an alkyl group, an aryl group, or a heterocyclic group. $X^{202}$ represents an oxygen atom or a nitrogen atom. $X^{203}$ represents a carbon atom or a nitrogen atom. $R^{212}$ represents an aryl group, a heterocyclic group, or a group which is linked to $X^{202}$ to form an aryl group or a heterocyclic group. $Ar^{201}$ represents an aryl group or a heterocyclic group. $p^{101}$ represents 0 to 3, $p^{102}$ and $p^{104}$ each independently represent 0 to 2, $p^{103}$ represents 2 or 3, and $p^{106}$ represents 1 to 3. $p^{105}$ and $p^{107}$ each independently represent 0 to 4. $p^{108}$ represents 2 to 3. $X^{201}$ represents an oxygen atom or $NR^{220}$, and $R^{220}$ represents a hydrogen atom or an alkyl group. In a case where $X^{201}$ represents NH, at least one of $R^{209}$ or $R^{210}$ represents an alkyl group or an alkoxy group. In a case where $p^{101,}$ $p^{102}$, $p^{104}$, $p^{105}$, and $p^{107}$ each independently represent a number of 2 or more, plural $R^{203}$'s $R^{206}$'s $R^{211}$'s, $R^{213}$'s, and $R^{217}$'s may be the same as or different from each other.

A group represented by any one of Formulae (T-1) to (T-8) is bonded to a linking group after any one of hydrogen atoms in the formula is removed. A hydrogen atom represented by * is not removed to allow linking. When $R^{214}$ in Formula (T-6) represents a hydrogen atom, $R^{214}$ is not removed to allow linking. In Formula (3) or any one of Formulae (T-1) to (T-8), a substituent may be bonded after a hydrogen atom is removed. A hydrogen atom represented by * is not removed to allow bonding to a substituent.

In a case where $L^{121}$, $L^{122}$, $L^{123}$, $L^{124}$, and $L^{125}$ represent a divalent linking group, specific examples of the divalent linking group include an alkylene group, an arylene group, a heteryl group, an ether bond, an amino group, a thioether bond, a carbonyl group, a sulfonyl group, and a divalent linking group obtained by combining at least two of the above-described groups. These linking groups may have a substituent. In a case where each group has a substituent, the substituent may be selected from, for example, the substituent group A.

It is preferable that one to four of $T^{121}$, $T^{122}$, $T^{123}$, $T^{124}$, or $T^{125}$ represents a group represented by any one of Formulae (T-1) to (T-8), it is more preferable that one to three of $T^{121}$, $T^{122}$, $T^{123}$, $T^{124}$, or $T^{125}$ represents a group represented by any one of Formulae (T-1) to (T-8), and it is still more preferable that one or two of $T^{121}$, $T^{122}$, $T^{123}$, $T^{124}$, or $T^{125}$ represents a group represented by any one of Formulae (T-1) to (T-8). As the number of groups represented by

Formulae (T-1) to (T-8) increases, an effect of improving light fastness and chlorine fastness is likely to be obtained.

The substituent represented by $R^{121}$, $R^{122}$, and $R^{123}$ may be selected from, for example, the substituent group A. As the substituent, an alkyl group, a sulfo group, an sulfamoyl group which may have a substituent, a halogen atom, an alkoxy group which may have a substituent, an aryloxy group which may have a substituent, an heterocyclic oxy group which may have a substituent, an acyloxy group which may have a substituent, an alkylamino group which may have a substituent, an arylamino group which may have a substituent, an heterocyclic amino group which may have a substituent, an acylamino group which may have a substituent, an aminocarbonylamino group which may have a substituent, an alkoxycarbonylamino group which may have a substituent, an aryloxycarbonylamino group which may have a substituent, or an alkyl- or aryl-sulfonylamino group which may have a substituent is preferable. Among these, an alkyl group, a sulfo group, an alkylamino group which may have a substituent, or an arylamino group which may have a substituent is more preferable.

It is preferable that $n^{121}$ and $n^{122}$ represent 0 to 2. It is preferable that $n^{123}$ represents 0 to 3.

$X_{121}$, $X_{122}$, and $X_{123}$ each independently represent CH or a nitrogen atom and preferably CH. In a case where $X_{121}$, $X_{122}$, and $X_{123}$ represent CH, a substituent may be bonded after a hydrogen atom is removed, and examples of the substituent include $-(L^{125})n^{128}-T^{125}$ and $R^{123}$.

In Formulae (T-1) to (T-3), in a case where $R^{201}$, $R^{202}$, $R^{204}$, $R^{205}$, $R^{207}$, and $R^{208}$ represent an alkyl group, the alkyl group may have a substituent.

In a case where $R^{209}$ and $R^{210}$ represent an alkyl group or an alkoxy group, these groups may have a substituent.

In a case where each group has a substituent, the substituent may be selected from, for example, the substituent group A.

$X^{201}$ represents an oxygen atom or $NR^{220}$, and $R^{220}$ represents a hydrogen atom or an alkyl group which may have a substituent. As the alkyl group represented by $R^{220}$, an alkyl group having 1 to 6 carbon atoms is preferable, an alkyl group having 1 to 4 carbon atoms is more preferable, and specific examples thereof include a methyl group, an ethyl group, and a propyl group.

As the alkyl group represented by $R^{201}$, $R^{202}$, $R^{204}$, $R^{205}$, $R^{209}$, and $R^{210}$, an alkyl group having 1 to 6 carbon atoms is preferable, an alkyl group having 1 to 4 carbon atoms is more preferable, and a methyl group, an ethyl group, an isopropyl group, or a tert-butyl group is still more preferable.

In a case where $X^{201}$ represents NH, at least one of $R^{209}$ or $R^{210}$ represents an alkyl group or an alkoxy group.

As the alkyl group represented by $R^{207}$ and $R^{208}$, an alkyl group having 1 to 10 carbon atoms is preferable, an alkyl group having 1 to 6 carbon atoms is more preferable, and a methyl group, an ethyl group, a propyl group, a butyl group, an isobutyl group, or a hexyl group is still more preferable.

As the alkoxy group represented by $R^{209}$ and $R^{210}$, an alkoxy group having 1 to 6 carbon atoms is preferable, an alkoxy group having 1 to 3 carbon atoms is more preferable, and a methoxy group or an ethoxy group is still more preferable.

As the divalent linking group represented by $L^{201}$, the same divalent linking groups represented by $L^{121}$, $L^{123}$, $L^{123}$, $L^{124}$, and $L^{125}$ can be used. Examples of the trivalent linking group include a triazine linking group and a cyanuric acid linking group. It is preferable that $L^{201}$ represents a divalent linking group.

The substituent represented by $R^{203}$ , $R^{206}$, and $R^{211}$ may be selected from, for example, the substituent group A.

$p^{101}$ represents 0 to 3 and preferably 0 or 1. $p^{102}$ and $p^{104}$ represent 0 to 2 and preferably 0 or 1.

Preferable forms where the compounds represented by Formulae (T-1) and (T-3) are linked are as follows. The following means that the compounds represented by Formulae (T-1) and (T-3) are linked to linking groups through *.

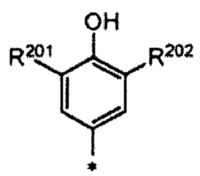

Formula (T-11)

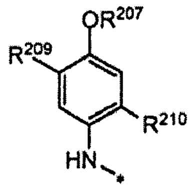

Formula (T-31)

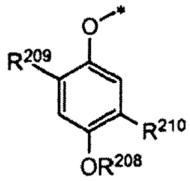

Formula (T-32)

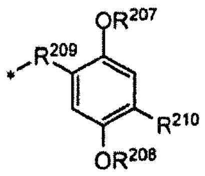

Formula (T-33)

In Formula (T-4), the aryl group and the heterocyclic group represented by $R^{212}$, and the aryl group or the heterocyclic group which is formed by $R^{212}$ linking to $X^{202}$ may have a substituent.

In a case where each group has a substituent, the substituent may be selected from, for example, the substituent group A.

It is preferable that $R^{212}$ represents an aryl group. Examples of the aryl group represented by $R^{212}$ include a phenyl group and a naphthyl group. Among these, a phenyl group is preferable.

It is also preferable that $R^{212}$ is linked to $X^{202}$ to form a heterocyclic group. Examples of the formed heterocycle include a benzotriazole ring, a triazole ring, a triazine ring, and a pyrimidine ring.

The substituent of $R^{213}$ may be selected from, for example, the substituent group A. $p^{105}$ represents 0 to 4 and preferably 0 to 2.

It is preferable that Formula (T-4) is represented by Formula (T-41), (T-42), or (T-43).

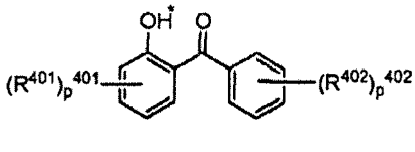

Formula (T-41)

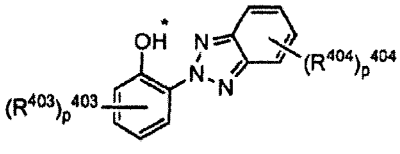

Formula (T-42)

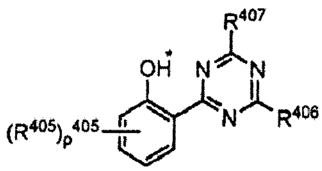

Formula (T-43)

$R^{401}$, $R^{402}$, $R^{403}$, $R^{404}$, and $R^{405}$ each independently represent a substituent. $R^{406}$ and $R^{407}$ each independently represent an aryl group or a heterocyclic group. $p^{401}$, $p^{403}$, $p^{404}$, and $p^{405}$ each independently represent 0 to 4, and $p^{402}$ represents 0 to 5. In a case where $p^{401}$, $p^{402}$, $p^{403}$, $p^{404}$, and $p^{405}$ each independently represent a number of 2 or more, plural $R^{401}$'s $R^{402}$'s, $R^{403}$'s, $R^{404}$'s and $R^{405}$'s may be the same as or different from each other.

$R^{401}$, $R^{402}$, $R^{403}$, $R^{404}$, and $R^{405}$ each independently represent a substituent. The substituent may be selected from, for example, the substituent group A.

$R^{406}$ and $R^{407}$ each independently represent an aryl group or a heterocyclic group. It is preferable that $R^{406}$ and $R^{407}$ represent a phenyl group.

It is preferable that $R^{401}$, $R^{403}$, $R^{404}$, and $R^{405}$ represent 0 to 2. It is preferable that $p^{402}$ represents 0 to 2.

Preferable forms where the compound represented by Formula (T-4) is linked are as follows.

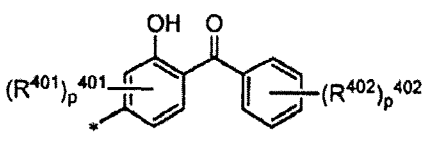

Formula (T-411)

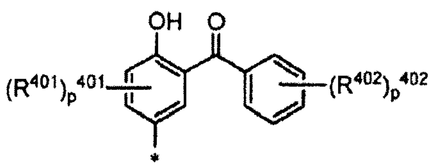

Formula (T-412)

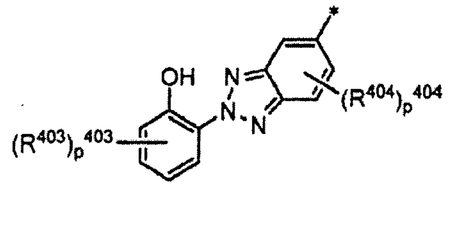

Formula (T-421)

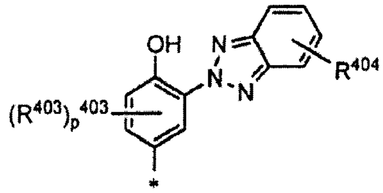

Formula (T-422)

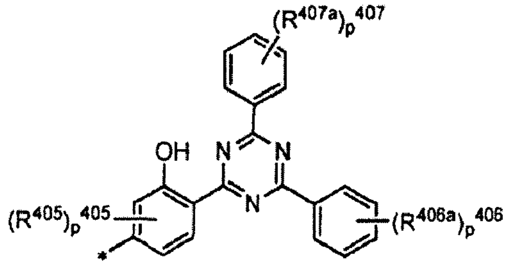

Formula (T-431)

$R^{406a}$ and $R^{407a}$ each independently represent a substituent. $R^{406a}$ and $R^{407a}$ have the same preferable range as that of $R^{405}$. $p^{406}$ and $p^{407}$ each independently represent 0 to 5. In a case where $p^{406}$ and $n^{407}$ each independently represent a number of 2 or more, plural $R^{406a}$'s and $R^{407a}$'s may be the same as or different from each other.

In Formula (T-5), the aryl group or the heterocyclic group represented by $Ar^{201}$ may have a substituent. In a case where each group has a substituent, the substituent may be selected from, for example, the substituent group A.

It is preferable that $Ar^{201}$ represents an aryl group. Examples of the aryl group represented by $Ar^{201}$ include a phenyl group and a naphthyl group. Among these, a phenyl group is preferable.

$p^{106}$ represents 1 to 3 and preferably 1 to 2.

Preferable forms where the compound represented by Formula (T-5) is linked are as follows.

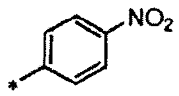

Formula (T-51)

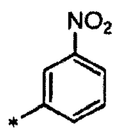

Formula (T-52)

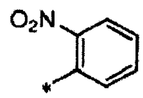

Formula (T-53)

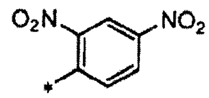

Formula (T-54)

In Formula (T-6), the alkyl group and the alkoxy group represented by $R^{214}$ and the alkyl group represented by $R^{215}$ may have a substituent. In a case where each group has a substituent, the substituent may be selected from, for example, the substituent group A.

It is preferable that $R^{214}$ represents a hydrogen atom or an alkyl group. As the alkyl group represented by $R^{214}$, an alkyl group having 1 to 6 carbon atoms is preferable, an alkyl group having 1 to 4 carbon atoms is more preferable, and a methyl group, an ethyl group, a propyl group, or a butyl group is still more preferable.

As the alkyl group represented by $R^{215}$ and $R^{216}$, a branched alkyl group is preferable, and a secondary alkyl group having 1 to 10 carbon atoms or a tertiary alkyl group having 1 to 10 carbon atoms is more preferable. Specific examples of the secondary alkyl group include an isopropyl group, a s-butyl group, and a cyclohexyl group. Specific examples of the tertiary alkyl group include a tert-butyl group and a tert-amyl group. $R^{215}$ and $R^{216}$ may be bonded to each other to form a ring. In a case where the ring is formed, the number of carbon atoms in the formed ring is preferably 2 to 20 and more preferably 2 to 10. Examples of the formed ring include an aziridine ring, a piperidine ring, and a pyrrolidine ring. In particular, it is preferable that $R^{215}$ and $R^{216}$ represent a tertiary alkyl group and are bonded to each other to form a piperidine ring.

It is preferable that Formula (T-6) is represented by Formula (T-61).

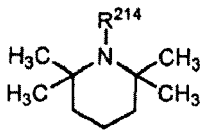

Formula (T-61)

A preferable form where the compound represented by Formula (T-6) is linked is as follows.

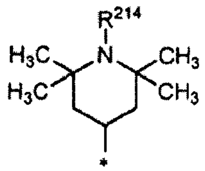

Formula (T-611)

In Formula (T-7), the substituent of $R^{217}$ may be selected from, for example, the substituent group A.
$p^{107}$ represents 0 to 4 and preferably 0 to 2. $p^{108}$ represents 2 to 3.
In Formula (T-8), the alkyl group, the aryl group, and the heterocyclic group represented by $R^{218}$ and $R^{219}$ may have a substituent.
It is preferable that $R^{218}$ and $R^{219}$ represent a hydrogen atom, an alkyl group, or an aryl group. As the alkyl group represented by $R^{218}$ and $R^{219}$, an alkyl group having 1 to 6 carbon atoms is preferable, an alkyl group having 1 to 4 carbon atoms is more preferable, and a methyl group, an ethyl group, a propyl group, or a butyl group is still more preferable. Specific examples of the aryl group represented by $R^{218}$ and $R^{219}$ include a phenyl group and a naphthyl group. Among these, a phenyl group is preferable.
Preferable forms where the compound represented by Formula (T-8) is linked are as follows.

$*\!-\!S\!-\!R^{219}$ Formula (T-81)

$*\!-\!R^{218}\!-\!S\!-\!R^{219}$ Formula (T-82)

It is preferable that at least one of $T^{121}$, $T^{122}$, $T^{123}$, $T^{124}$, or $T^{125}$ represents a group represented by Formula (T-1), (T-3), (T-4), (T-5), or (T-6).
It is preferable that the compound represented by any one of Formulae (1) to (3) has at least one sulfo group.
It is preferable that a counter cation salt included in the compound represented by any one of Formulae (1) to (3) is a sulfo group present in a molecule.
Hereinafter, specific examples of the dye compound represented by any one of Formulae (1) to (3) will be shown. However, the present invention is not limited to these specific examples. iPr represents an isopropyl group, and Ac represents an acetyl group.

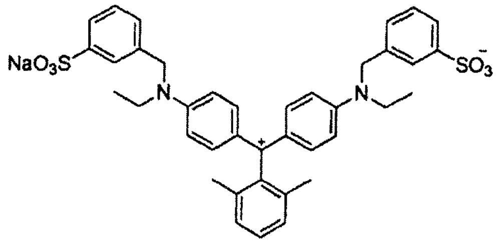

Compound 1

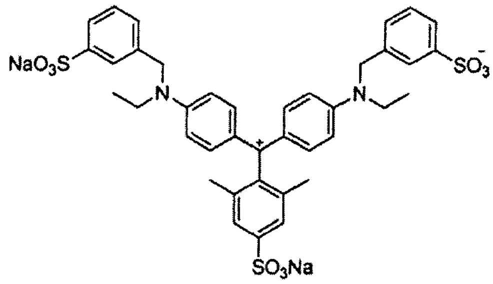

Compound 2

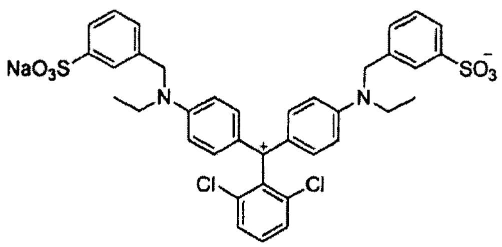

Compound 3

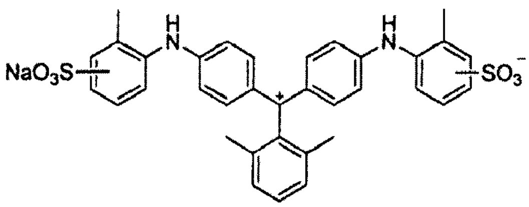

Compound 5

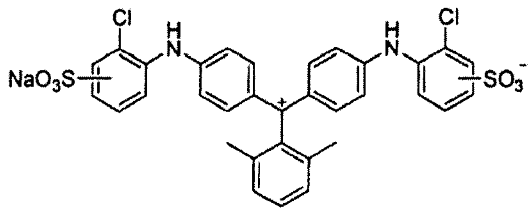

Compound 6

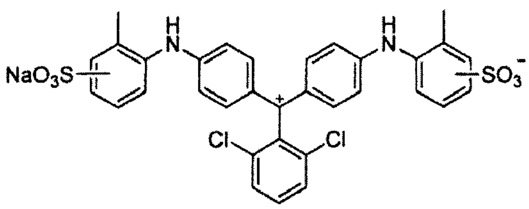

Compound 7

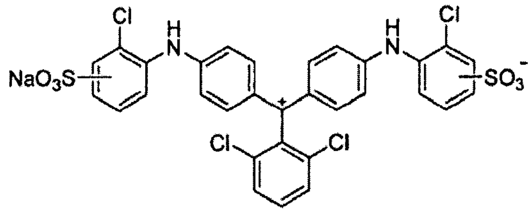

Compound 8

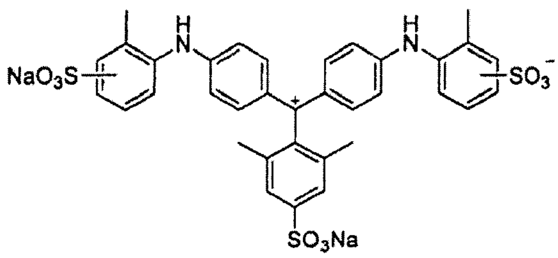

Compound 9

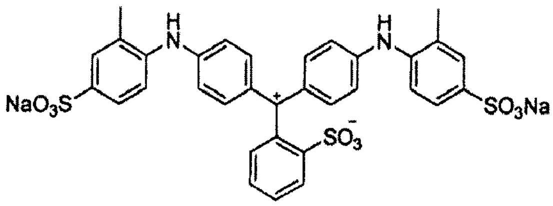

Compound 11

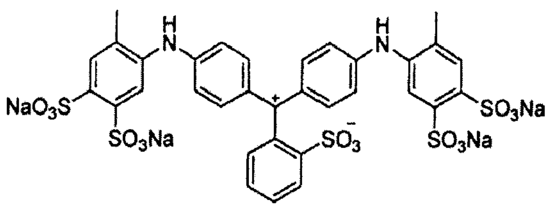

Compound 12

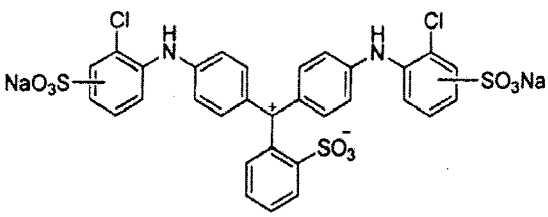

Compound 13

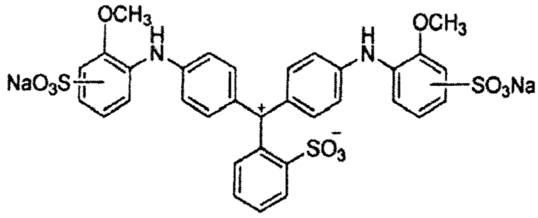

Compound 14

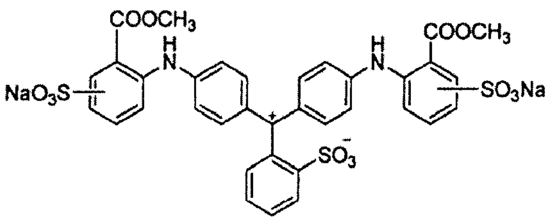

Compound 15

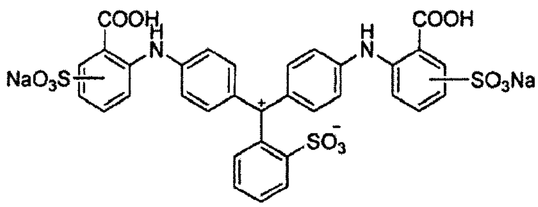

Compound 16

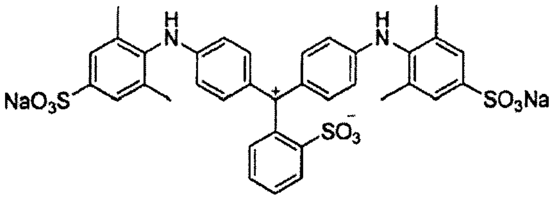

Compound 17

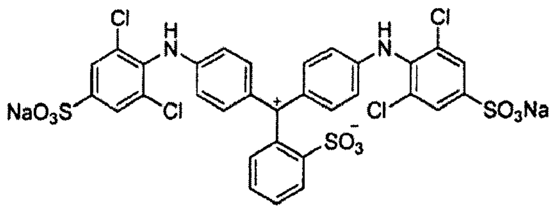

Compound 18

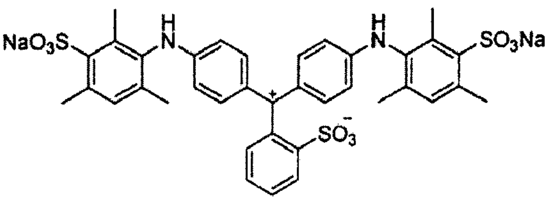

Compound 19

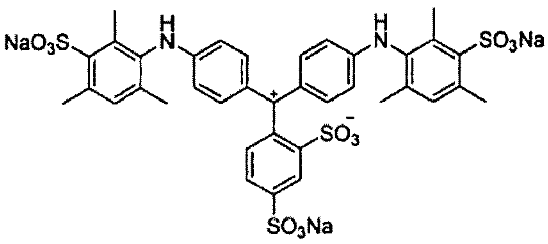

Compound 20

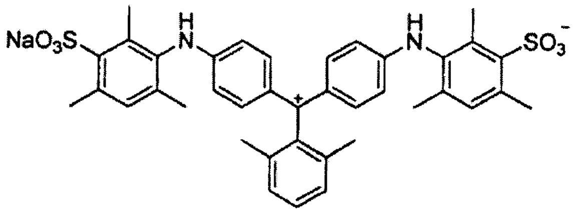

Compound 21

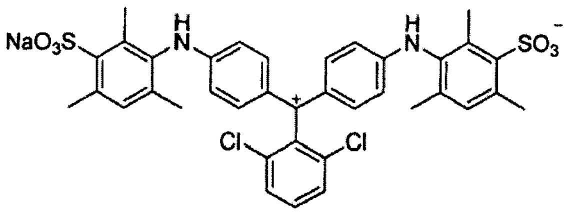

Compound 22

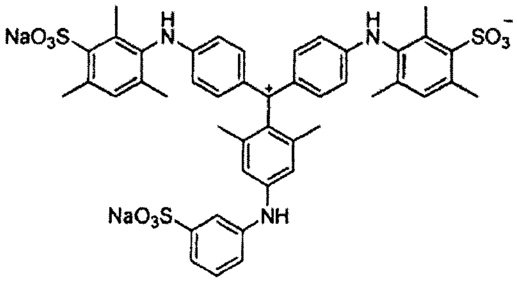

Compound 25

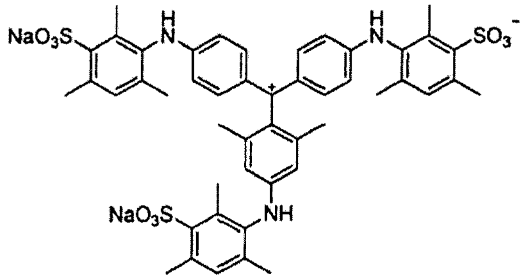

Compound 26

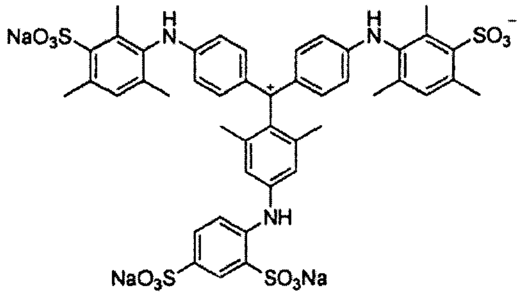

Compound 27

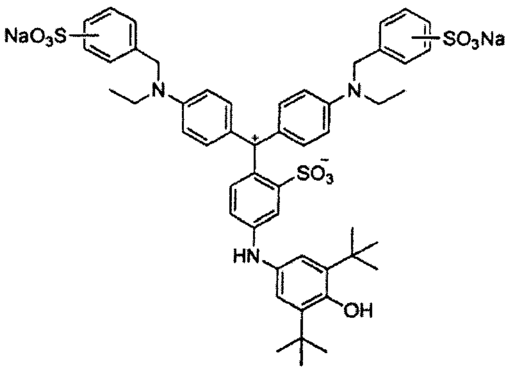

Compound 29

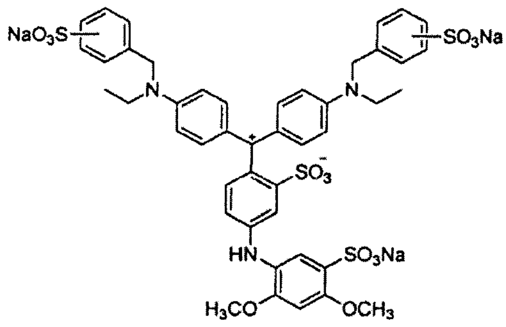

Compound 30

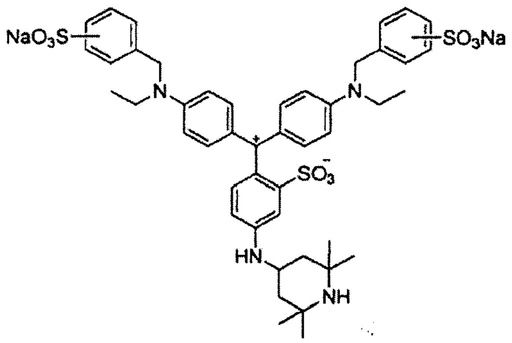

Compound 31

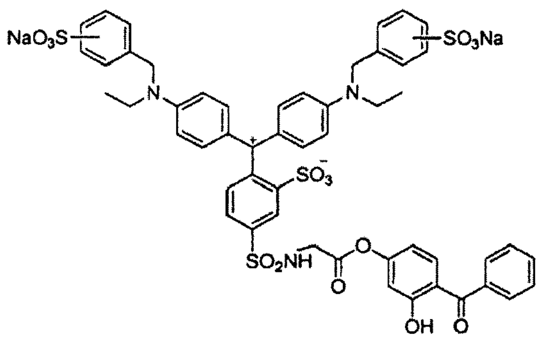

Compound 32

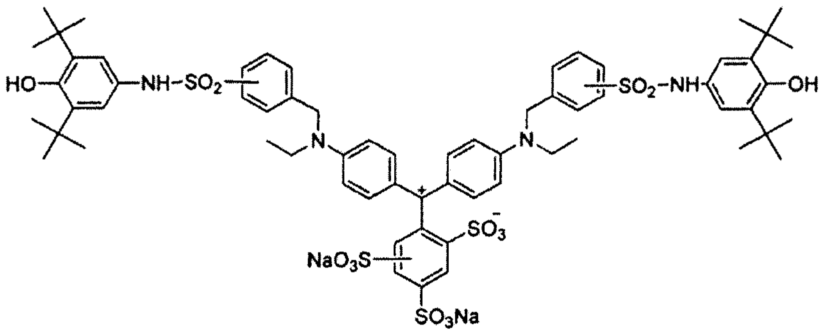

Compound 33

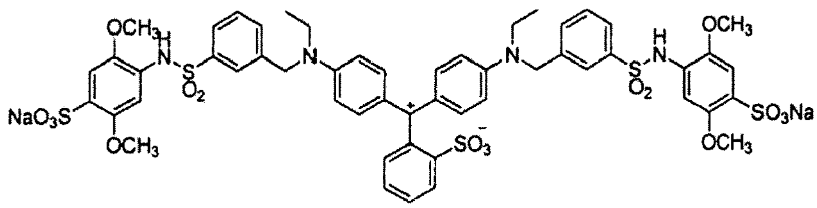

Compound 34

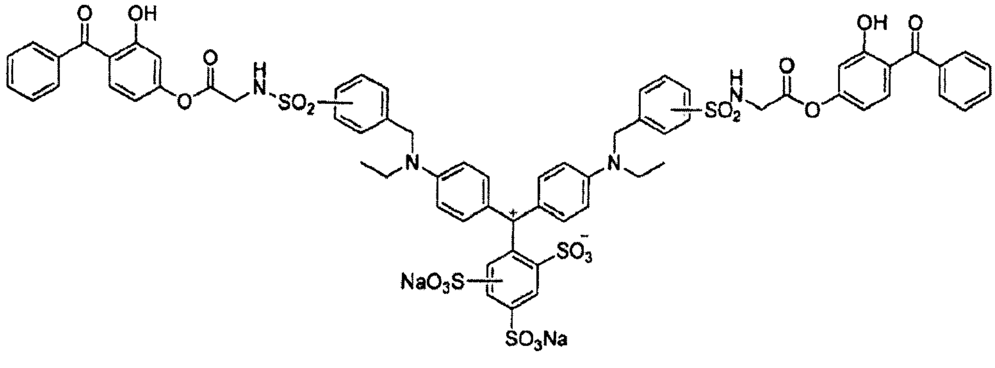

Compound 35

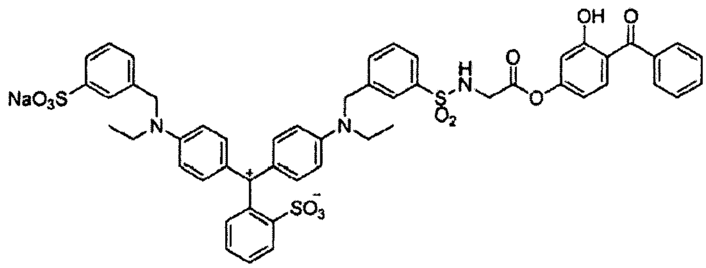

Compound 36

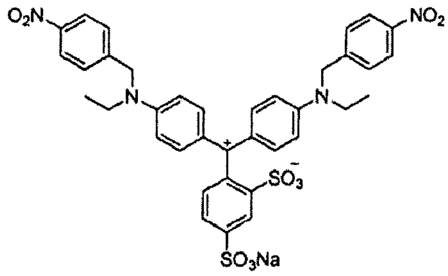

Compound 37

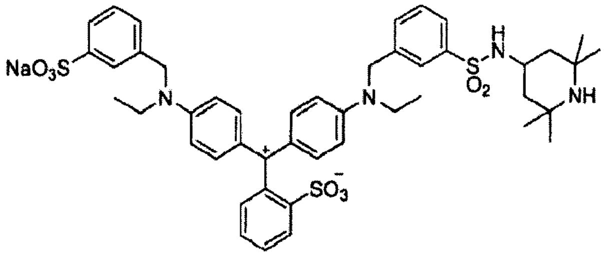

Compound 38

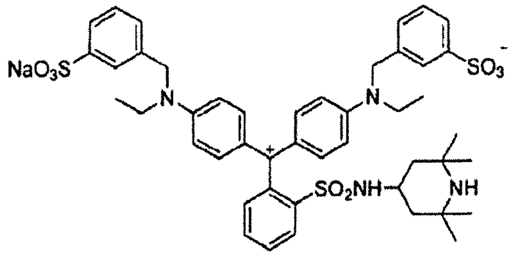

Compound 39

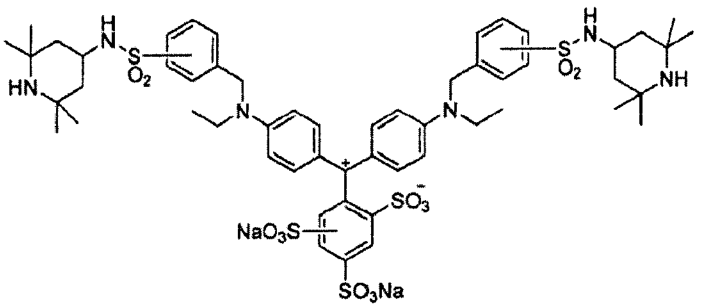

Compound 40

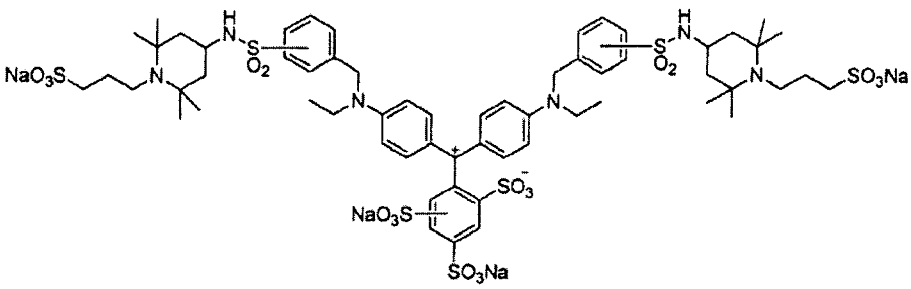

Compound 41

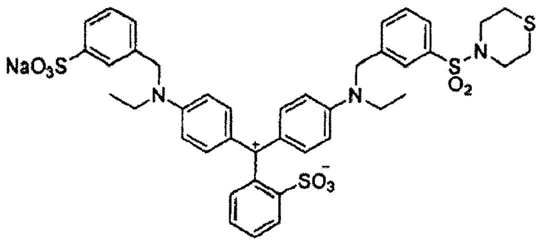

Compound 42

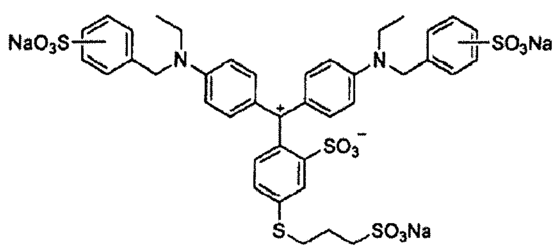

Compound 43

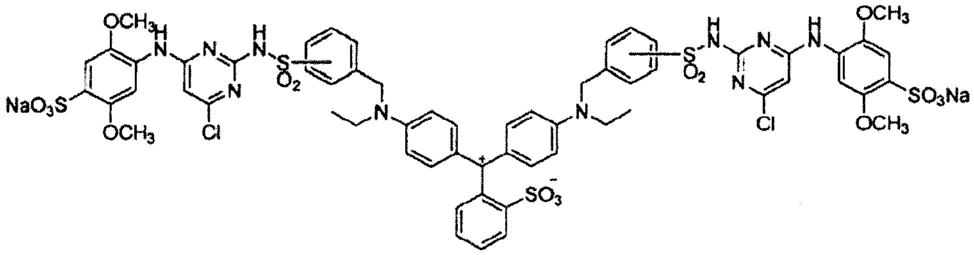

Compound 44

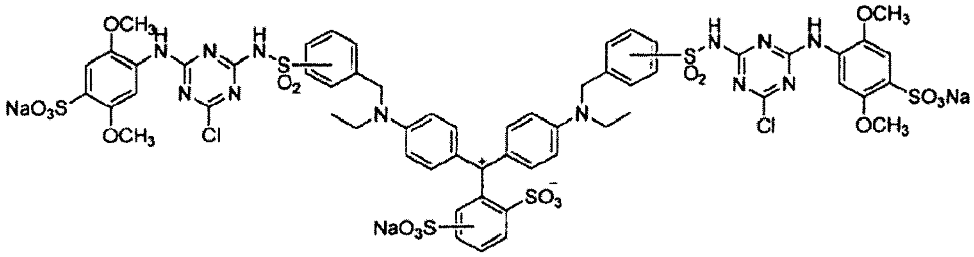

Compound 45

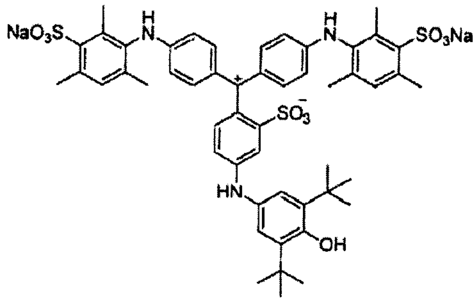

Compound 46

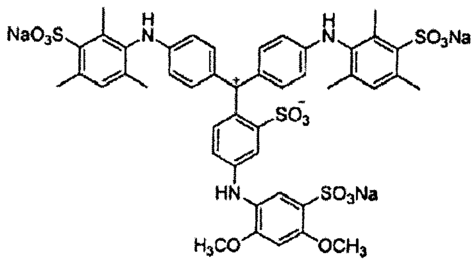

Compound 47

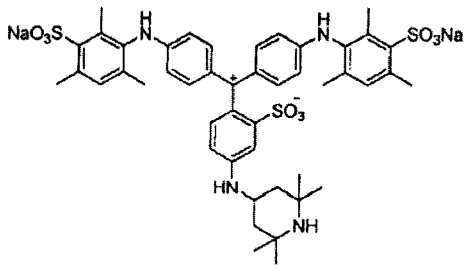

Compound 48

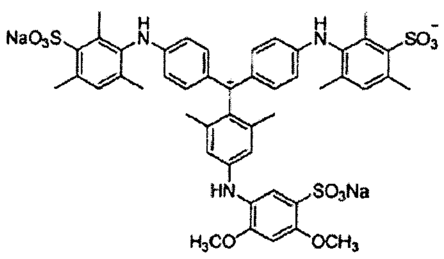

Compound 49

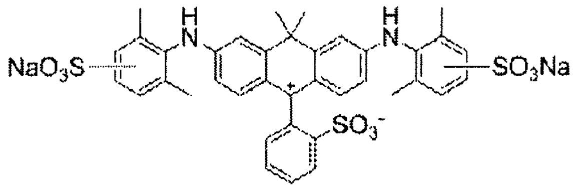

Compound 50

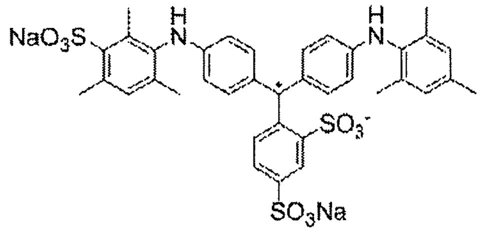

Compound 51

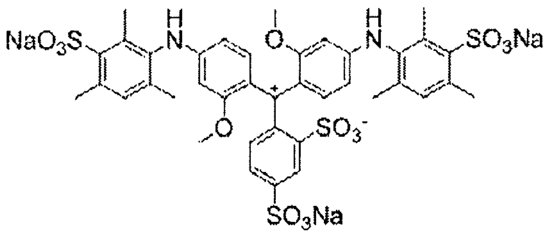

Compound 52

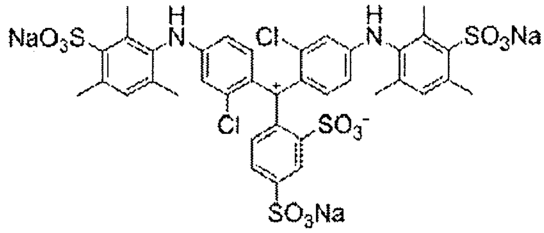

Compound 53

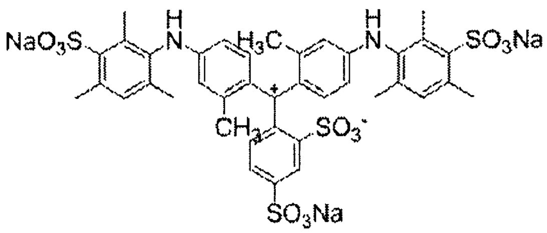

Compound 54

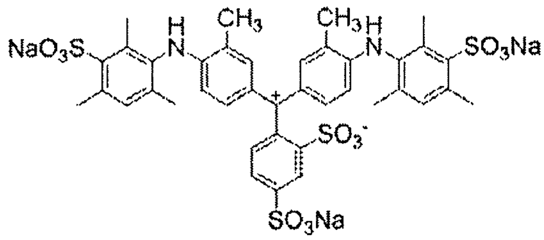

Compound 55

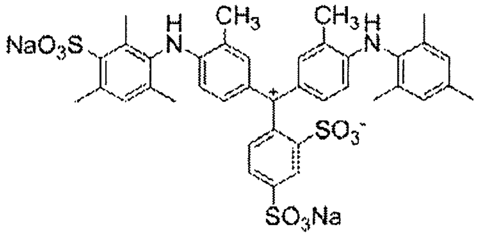

Compound 56

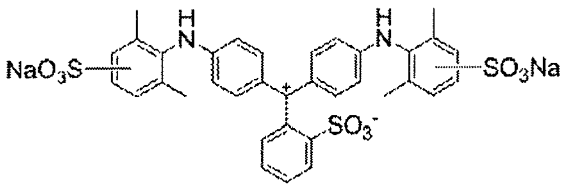

Compound 57

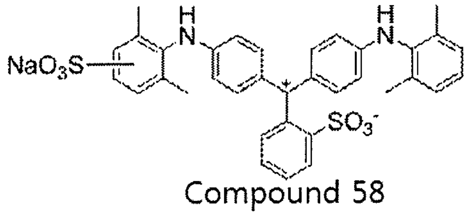

Compound 58

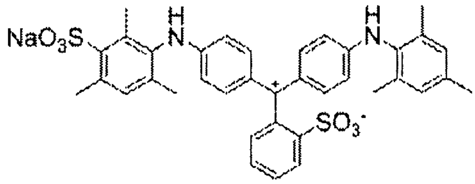

Compound 59

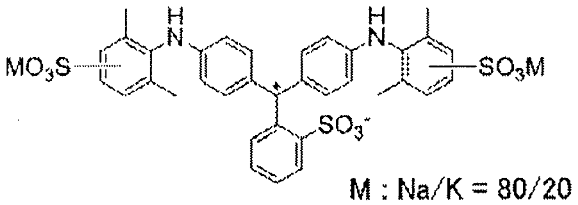

M : Na/K = 80/20

Compound 60

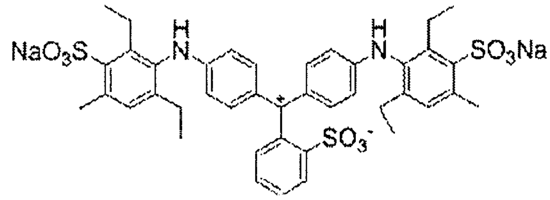

Compound 61

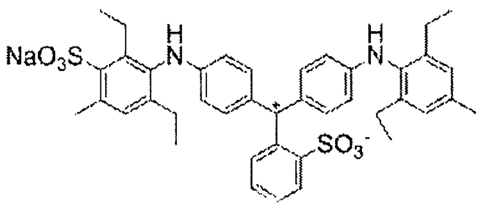

Compound 62

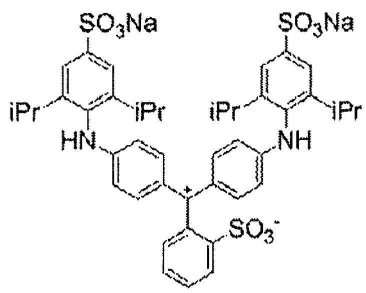

Compound 63

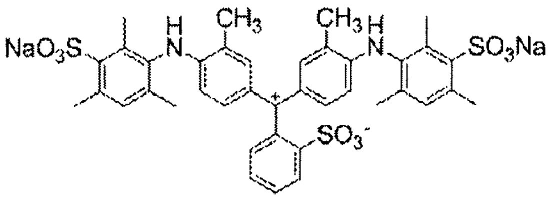

Compound 64

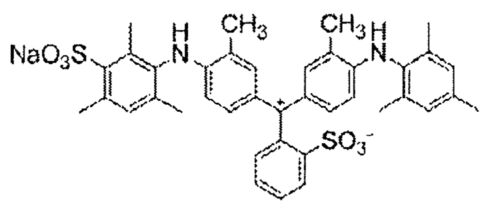

Compound 65

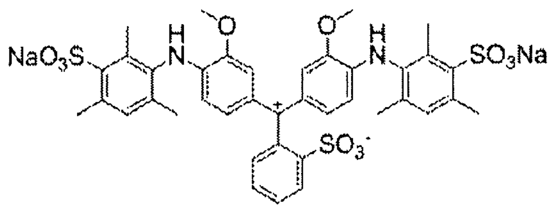

Compound 66

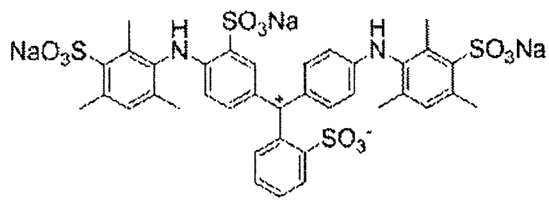

Compound 67

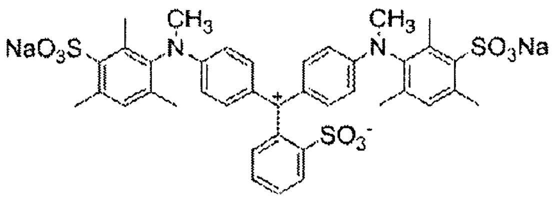

Compound 68

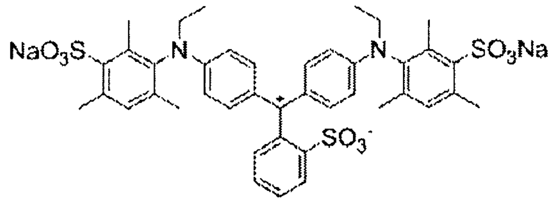

Compound 69

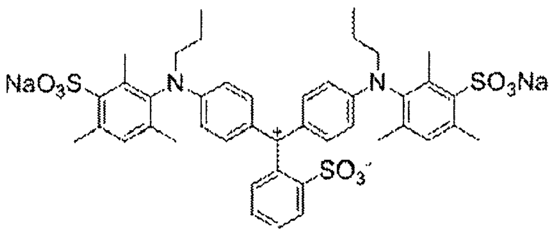

Compound 70

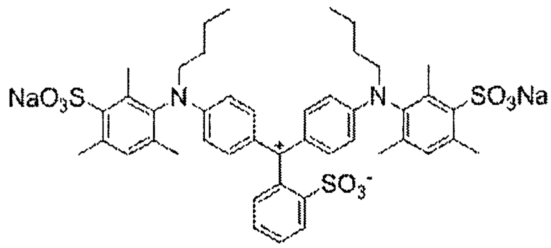

Compound 71

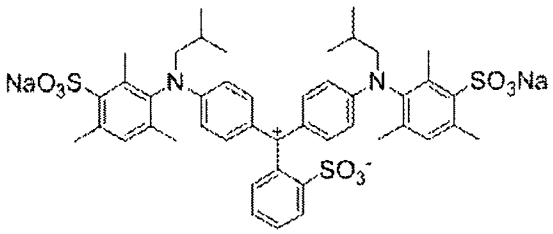

Compound 72

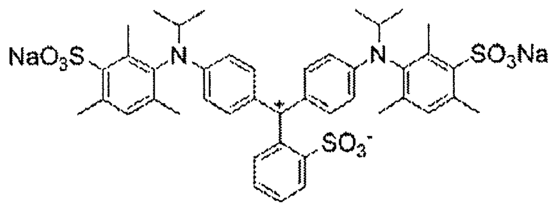

Compound 73

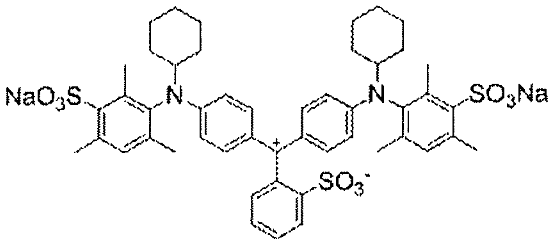

Compound 74

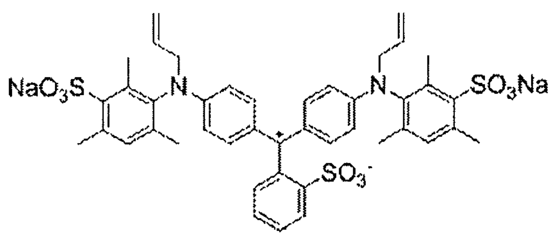

Compound 75

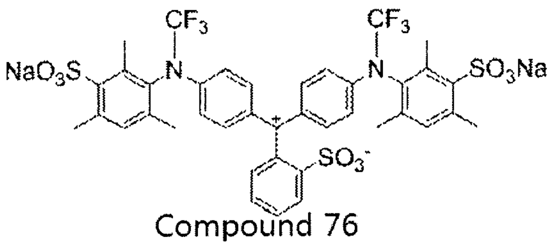

Compound 76

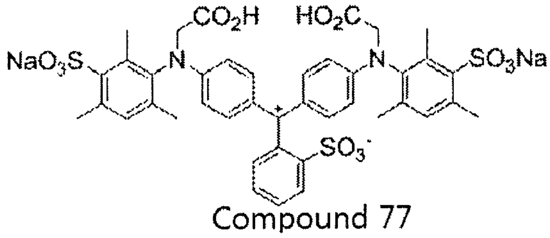

Compound 77

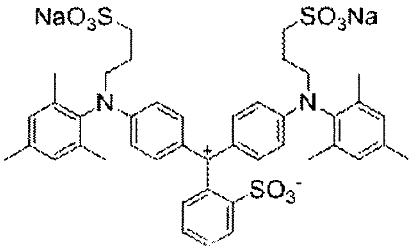

Compound 78

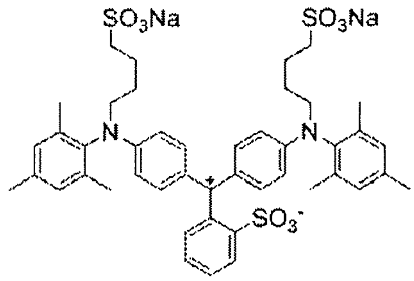

Compound 79

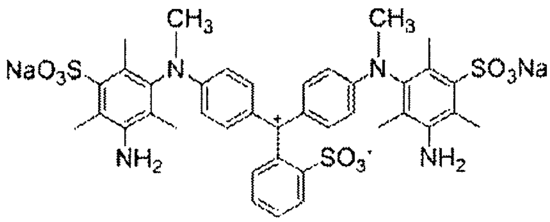

Compound 80

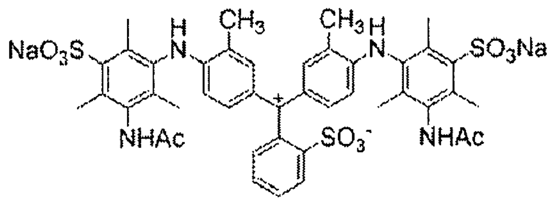

Compound 81

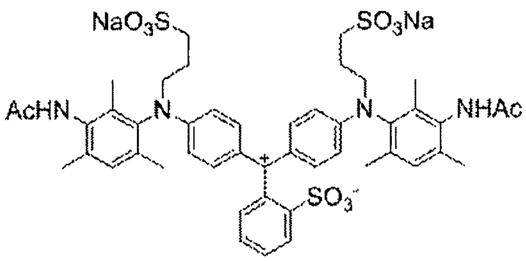

Compound 82

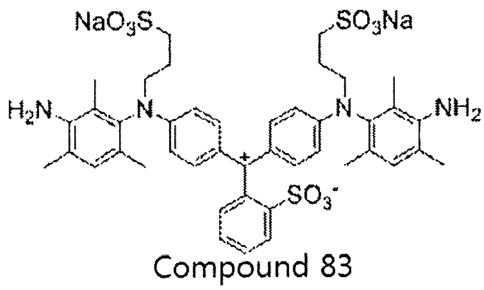

Compound 83

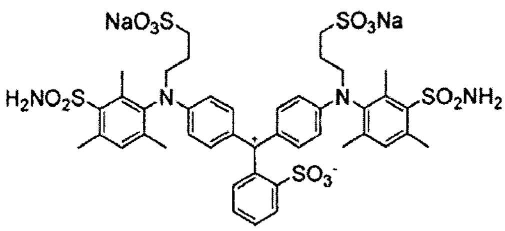

Compound 84

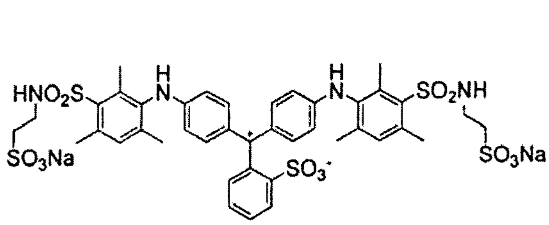

Compound 85

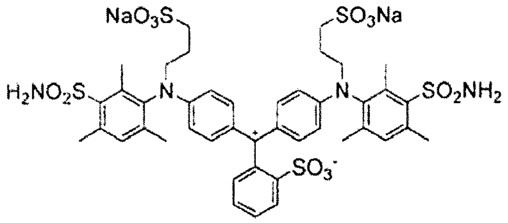

Compound 86

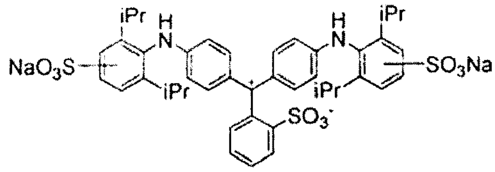

Compound 87

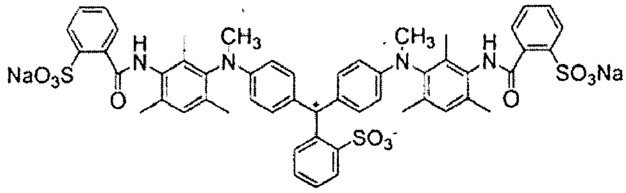

Compound 88

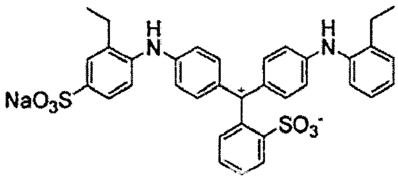

Compound 89

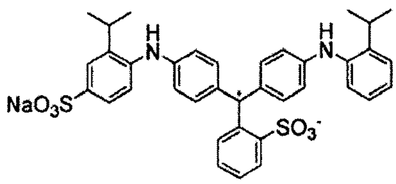

Compound 90

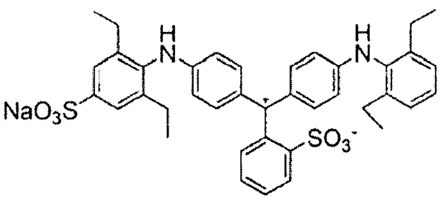

Compound 91

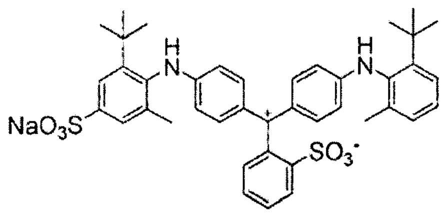

Compound 92

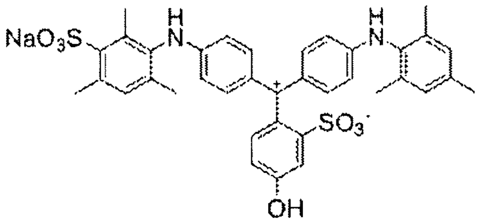

Compound 93

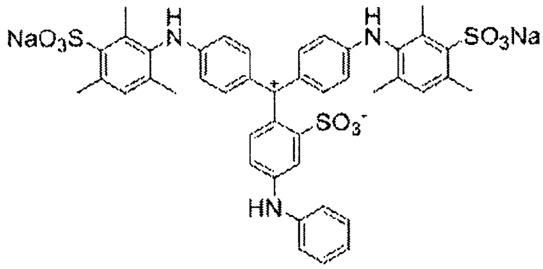

Compound 94

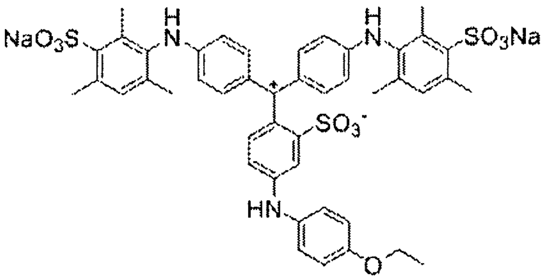

Compound 95

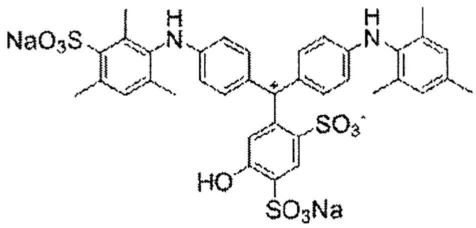

Compound 96

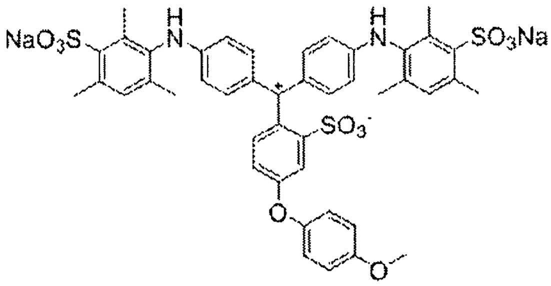

Compound 97

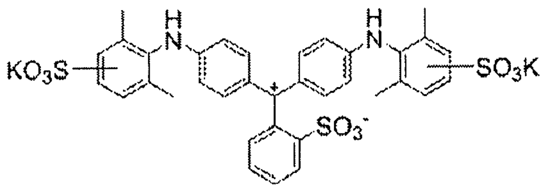

Compound 98

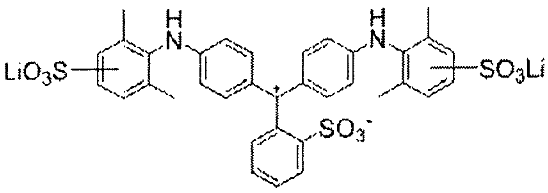

Compound 99

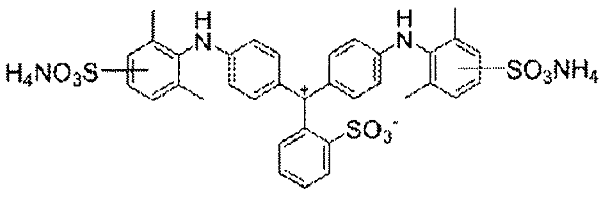

Compound 100

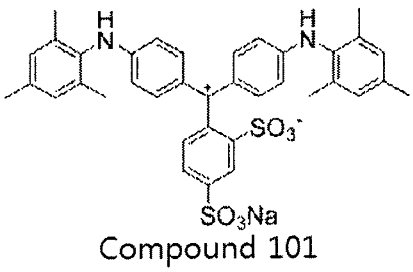

Compound 101

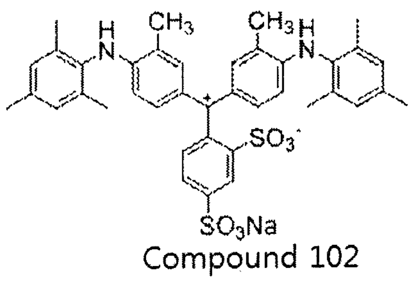

Compound 102

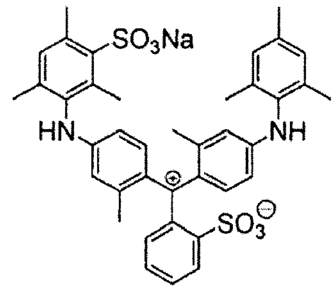

Compound 103

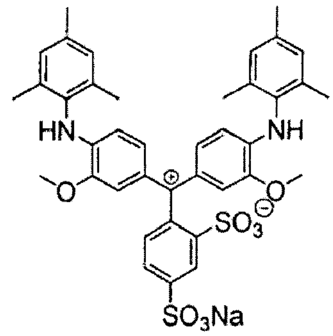

Compound 104

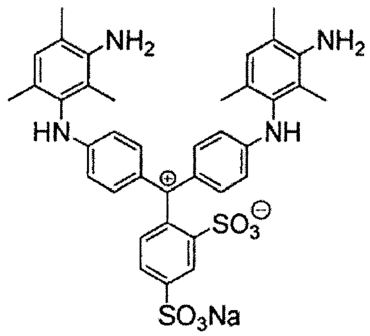

Compound 105

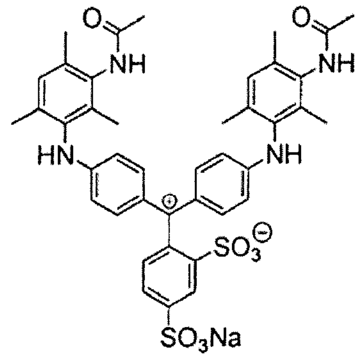

Compound 106

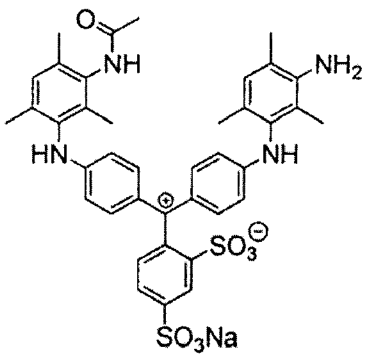

Compound 107

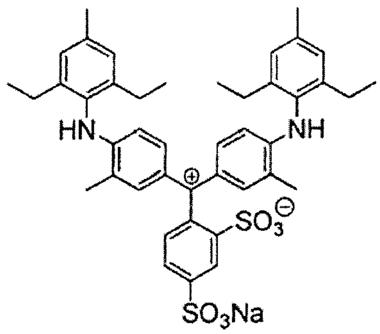

Compound 108

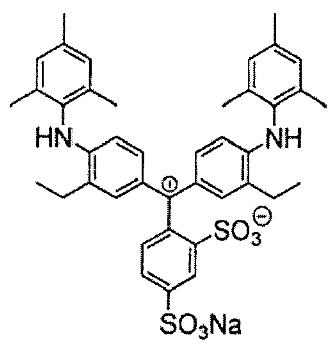

Compound 109

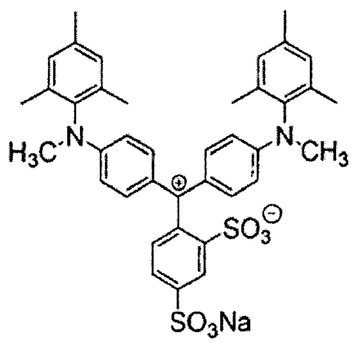

Compound 110

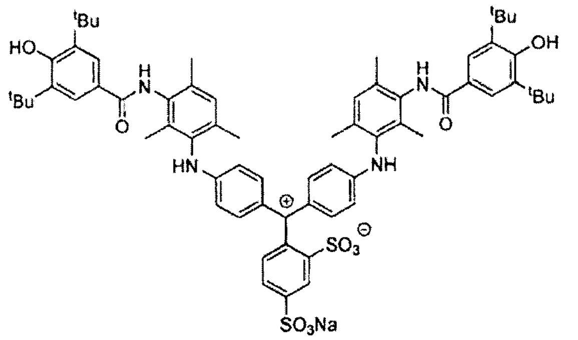

Compound 201

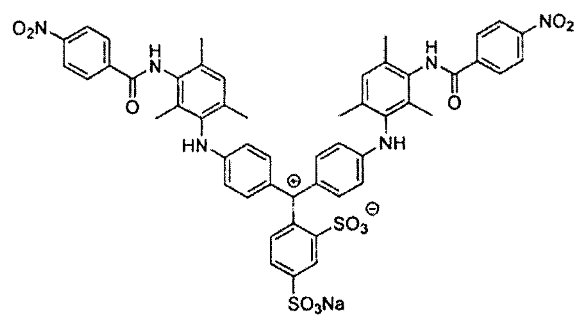

Compound 202

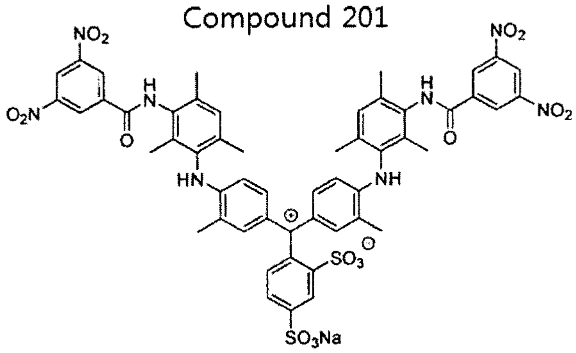

Compound 203

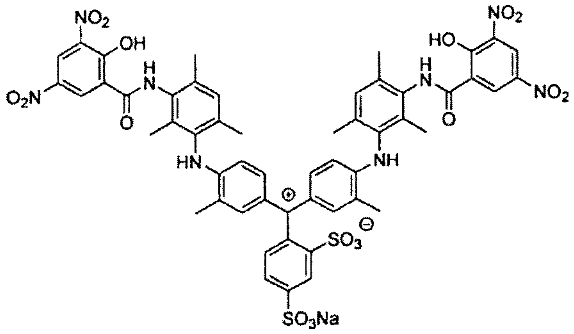

Compound 204

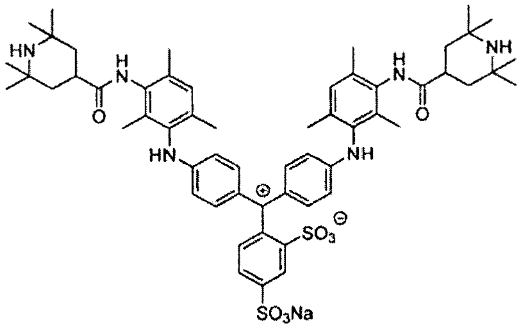

Compound 205

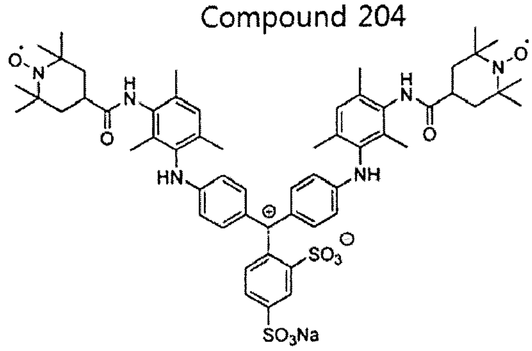

Compound 206

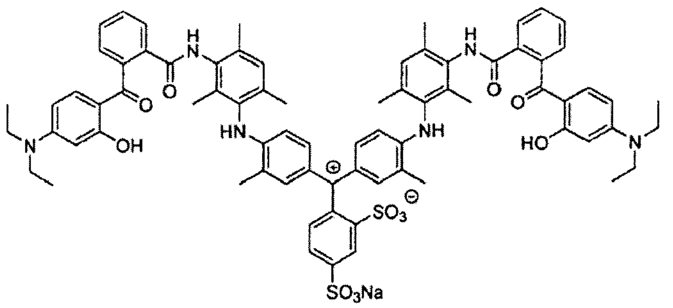

Compound 207

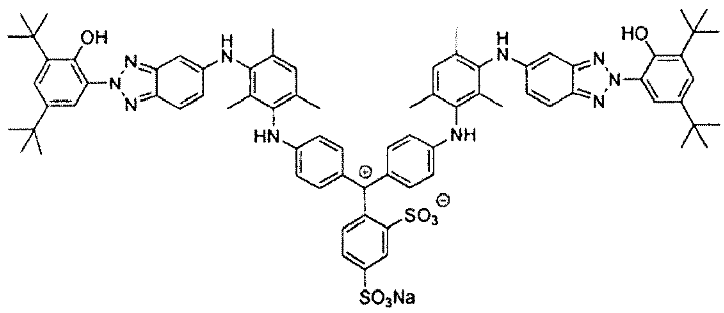

Compound 208

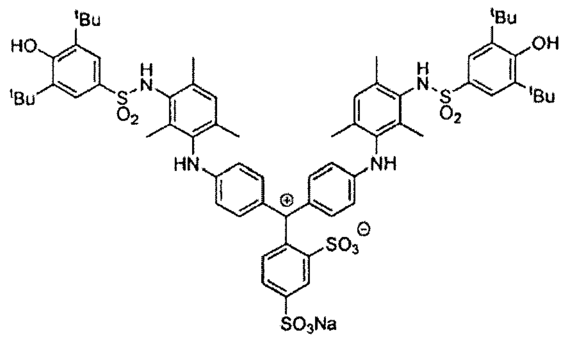

Compound 209

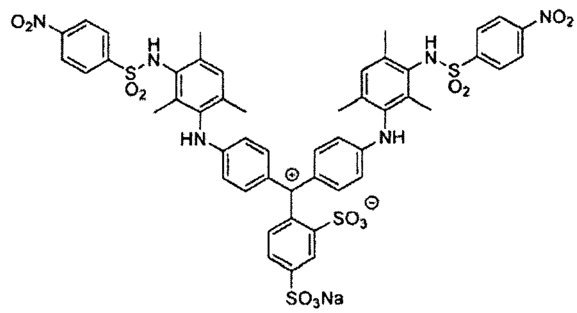

Compound 210

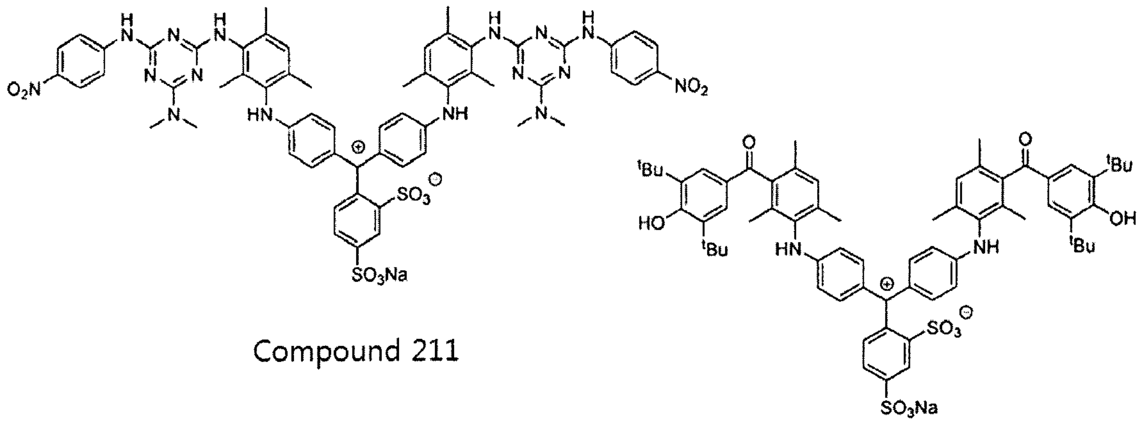

Compound 211

Compound 212

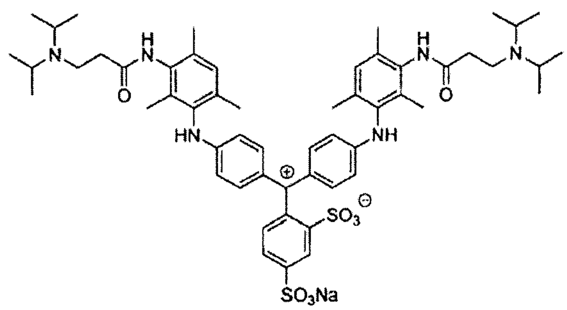

Compound 213

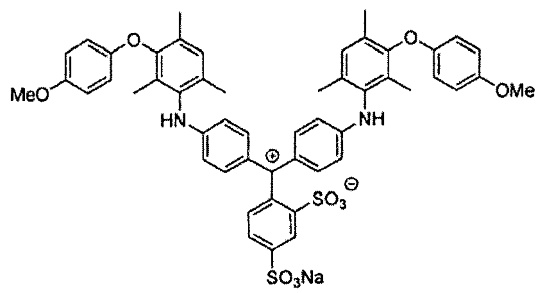

Compound 214

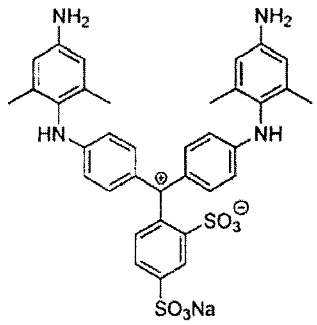

Compound 301

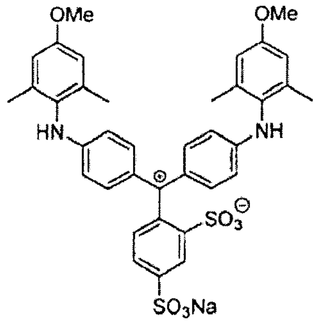

Compound 302

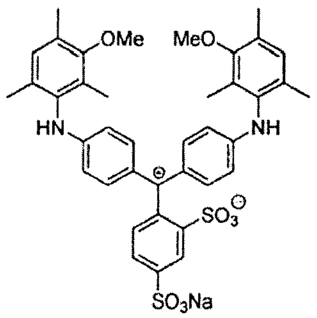

Compound 303

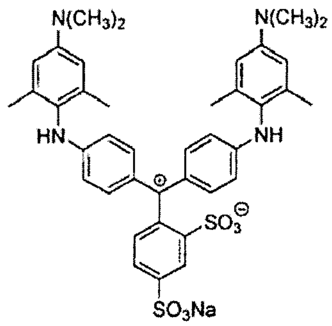

Compound 304

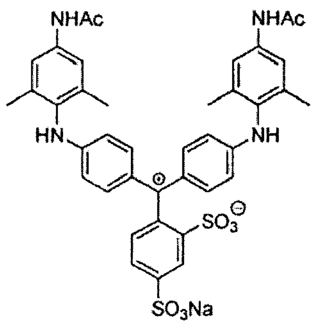

Compound 305

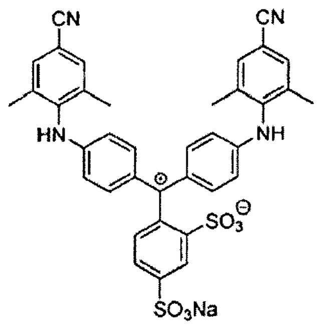

Compound 306

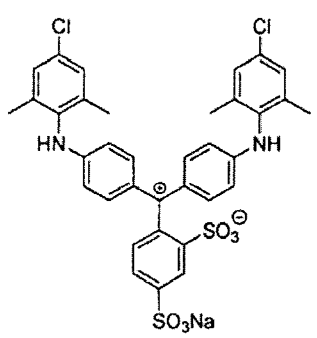

Compound 307

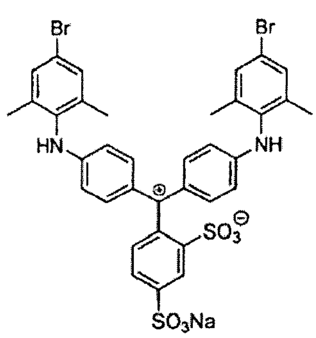

Compound 308

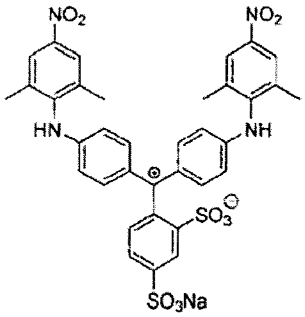

Compound 309

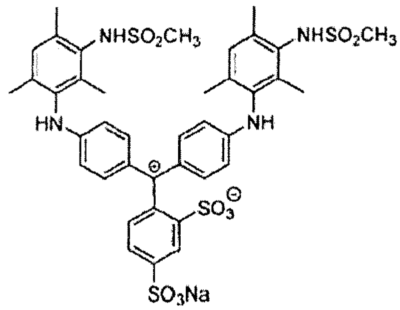

Compound 310

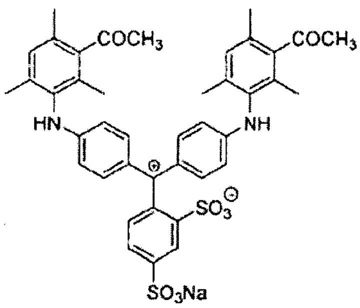

Compound 311

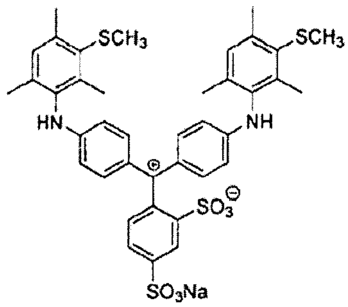

Compound 312

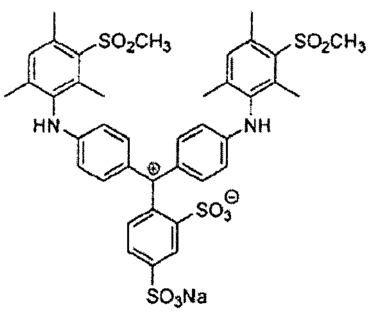

Compound 313

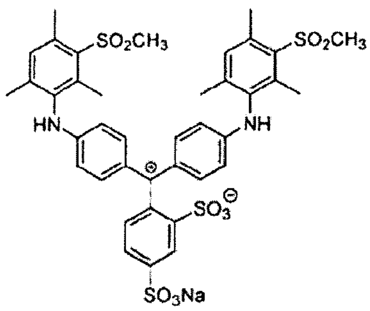

Compound 314

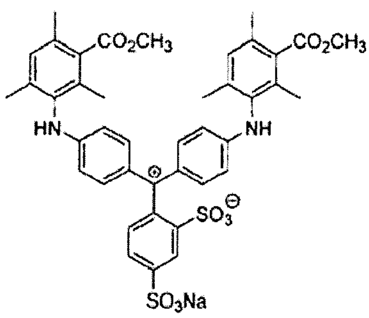

Compound 315

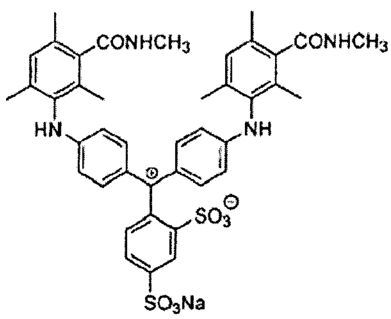

Compound 316

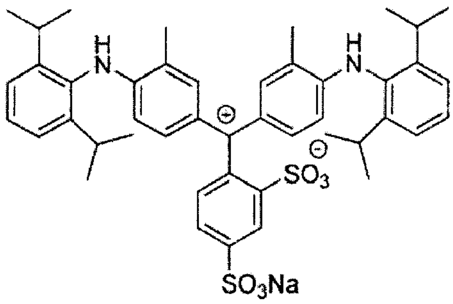

Compound 401

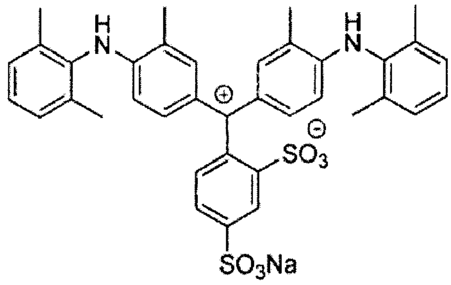

Compound 402

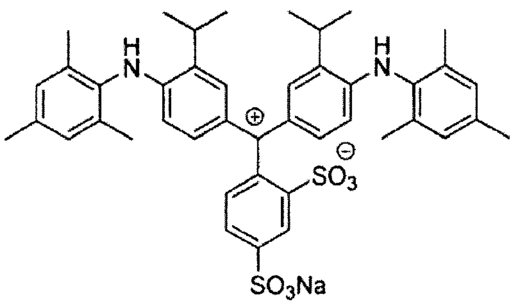

Compound 403

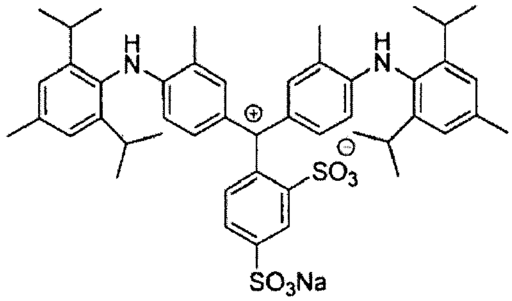

Compound 404

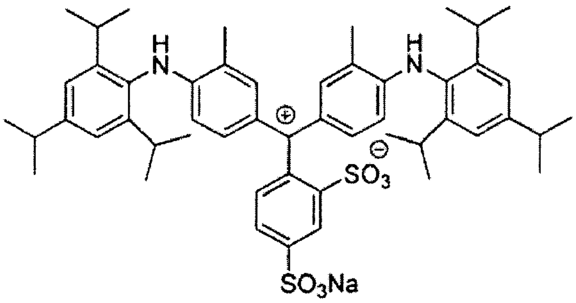

Compound 405

[Synthesis Method]

A method of synthesizing the compound represented by any one of Formulae (1) to (3) will be described.

The compound represented by any one of Formulae (1) to (3) can be synthesized using a well-known method of synthesizing a triarylmethane dye of the related art. For example, the compound represented by Formula (1) or (2) can be obtained by causing a condensation reaction to occur using two equivalents of an aniline derivative and one equivalent of a benzaldehyde derivative and then oxidizing the obtained condensate. The compound represented by Formula (3) may be synthesized as described above by condensing an aniline derivative into which a substituent is introduced in advance and/or a benzaldehyde derivative, or may be synthesized by synthesizing a triarylmethane compound using a well-known synthesis method and then introducing a substituent thereinto through an addition reaction or the like. In the latter case, a triarylmethane compound may be used.

The method of manufacturing the compound represented by any one of Formulae (1) to (3) is not limited the above-described methods because the compound represented by any one of Formulae (1) to (3) can be synthesized using a well-known manufacturing method.

General Method of Synthesizing Compound Represented by Formula (1)

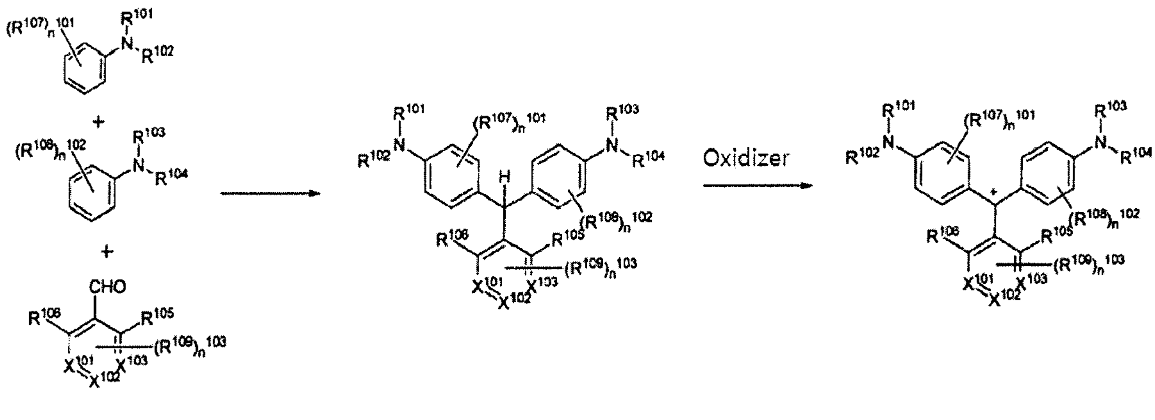


General Method of Synthesizing Compound Represented by Formula (2)

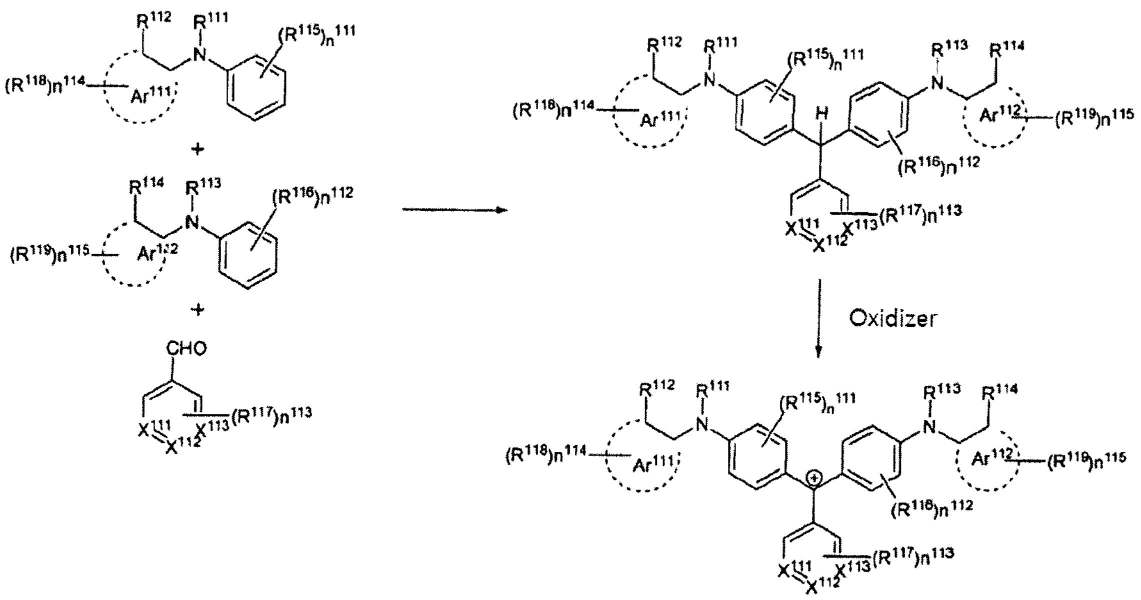


[Coloring Composition]

The coloring composition according to the present invention at least includes the compound represented by any one of Formulae (1) to (3).

The coloring composition according to the present invention may include one compound or plural compounds among the compounds represented by Formulae (1) to (3). Among these compounds represented by the formulae, one kind may be used alone, or two or more kinds may be used in combination.

The coloring composition according to the present invention may consist of only the compound represented by any one of Formulae (1) to (3) but may further include other colorants within a range where the effects of the present invention do not deteriorate. Examples of the other colorants which may be used in combination with the compound represented by any one of Formulae (1) to (3) include dyes described in pp. 33 to 121 and pigments described in pp. 124 to 130 of "Dyeing Note" (Vol. 24, Published by Shikisensha Co., Ltd.; hereinafter, the same shall be applied).

The content of the compound represented by any one of Formulae (1) to (3) in the coloring composition is preferably 1 to 20 mass% and more preferably 1 to 10 mass%. By adjusting the content of the compound represented by any one of Formulae (1) to (3) in the coloring composition to be 1 mass% or higher, the printing density of ink on a recording medium during printing can be improved, and a required image density can be secured. In addition, by adjusting

the total content of the compound represented by any one of Formulae (1) to (3) in the coloring composition to be 20 mass% or lower, in a case where the coloring composition is used in an ink jet method, the jettability is excellent, and an effect of preventing the clogging or the like of an ink jet nozzle can be obtained.

In general, the coloring composition according to the present invention includes a solvent in addition to the compound represented by any one of Formulae (1) to (3). The kind and amount of the solvent may vary depending on the kind, dyeing concentration, and dyeing method of the compound represented by any one of Formulae (1) to (3). However, the content of the solvent in the coloring composition is preferably 40 mass% or higher with respect to the total mass of the coloring composition. It is preferable that the solvent includes water, and the content of water in the solvent is preferably 50 mass% or higher with respect to the total mass of the solvent. In addition, the content of water in the solvent is more preferably 30 mass% or higher with respect to the total mass of the coloring composition.

Examples of the recording medium for printing the coloring composition according to the present invention thereon include various fabrics, papers, coated papers on which an ink absorbing layer is formed, and plastic films, and an ink which is suitable for performing ink jet recording on each of the recording mediums has been performed.

The coloring composition according to the present invention can be used for, for example, a coloring composition for dyeing or textile printing on fabric, an ink jet recording ink for forming an image on paper, a color toner, or a resist for a color filter. In particular, the coloring composition according to the present invention is suitable as a coloring composition for dyeing or textile printing on fabric.

[Coloring Composition for Dyeing or Textile Printing, and Dyeing or Textile Printing Method]

The coloring composition for dyeing or textile printing according to the present invention is not limited in the form of use as long as it is a coloring composition for dyeing a fiber. A method of dyeing a fiber is roughly classified into a dip dyeing method and a textile printing method. Dip dyeing is a process of dipping fabric to be dyed or yarn to be dyed in a dye solution, which is obtained by dissolving or dispersing a dye in a solvent, such that the dye is uniformly adsorbed on a surface of a fiber, is diffused into the fiber, and is fixed on the fiber by bonding. Textile printing is a dyeing method of producing a dyed material having a pattern by applying a dye or a pigment to fabric to be dyed to form a pattern thereon and fixing the dye or pigment on the fabric, and an effect of forming a pattern using one color or multiple colors can be exhibited. Industrially, screen printing and roller printing in which a plate is used, transfer printing in which transfer paper is used, or ink jet textile printing in which a plate-making step is unnecessary is performed.

[[Coloring Composition for Dip Dyeing and Method using The Same]]

Dip dyeing includes: a step of dipping fabric or yarn in a dye solution such that a dye is fixed on the fabric or the yarn; a washing step of washing off a portion of the dye which is not fixed on the fiber; and a drying step. In a case where the coloring composition according to the present invention is used for dip dyeing, the coloring composition can be used in the form of a dye solution in which fabric or yarn can be dipped. In this case, the dye solution may include not only a dye but also a solvent, a level dyeing agent, a pH adjuster, an inorganic neutral salt, or a dispersant. As the solvent, in general, water is used. As the additives such as a level dyeing agent, well-known additives can be used, and examples thereof include a wetting agent and a penetrant described in pp. 134 to 145 of "Dyeing Note", a metal ion binding agent described in pp. 147 to 154 of "Dyeing Note", a dispersant described in pp. 216 to 222 of "Dyeing Note", a level dyeing agent described in pp. 230 to 255 of "Dyeing Note", a resisting agent described in pp. 285 and 286 of "Dyeing Note", a migration inhibitor described in pp. 279 to 284 of "Dyeing Note", a dye fixing agent and a color fastness improving agent described in pp. 304 to 321 of "Dyeing Note", and a pH adjuster described in pp. 322 to 334 of "Dyeing Note". For uniform dyeing of a dye with high concentration, in addition to a method of using additives, a method of controlling dye concentration, dye-bath pH, salt concentration, dyeing temperature, dyeing time, pressure, and liquid current can be used.

In the washing step, water or warm water is used in a temperature range of normal temperature to 100°C. Water for washing may include a soaping agent. By completely removing a non-fixed portion of a colorant, satisfactory results can be obtained in various kinds of water fastness, for example, washing fastness or perspiration fastness.

In the drying step, specifically, washed fabric is squeezed or dehydrated and then is hung out to dry or dried using a heat roll, an iron, or the like.

[[Coloring Composition for Screen Printing, Roller Printing, or Transfer Printing, and Textile Printing Method using The Same]

In a case where the coloring composition according to the present invention is used for screen printing, roller printing, or transfer printing, the coloring composition is used in the form of a color paste which is printed on fabric through a plate or transfer paper.

The textile printing method according to the present invention includes at least the following steps (1) to (4):

(1) a step of adjusting a color paste by adding the coloring composition for dyeing or textile printing according to the present invention to a solution including at least a polymer compound and water;
(2) a step of printing the color paste of (1) on fabric;
(3) a step of applying steam to the printed fabric; and
(4) a step of washing the printed fabric with water and drying the washed fabric.

The color paste is required to satisfy the following suitabilities: printing suitability for printing the color paste on a plate; and dyeing suitability for a printed material in fixing and water washing treatments.

Therefore, in order to impart the printing suitability and the dyeing suitability, the color paste may include not only a dye but also a paste, a solvent, dyeing auxiliaries, and the like.

The paste is a medium of the coloring composition, and a water-soluble polymer is used. Examples of the water-soluble polymer include a well-known water-soluble polymer such as a starch, a seaweed, a natural gum, a cellulose derivative, sodium alginate, a protein material, a tannin material, or a lignin material. In addition, a well-known synthetic polymer such as a polyvinyl alcohol compound, a polyethylene oxide compound, an acrylic acid aqueous polymer, a styrene aqueous polymer, or a maleic anhydride aqueous polymer can also be used as the paste. For example, a paste for textile printing described in pp. 349 to 361 of "Dyeing Note" can also be used. In addition, the paste can be used in combination with a printing paste improving agent described in pp. 367 to 369 of "Dyeing Note". A mixture of two or more kinds of pastes may be used. As the solvent, a water-soluble solvent is preferably used, and a solvent including at least water is most preferably used.

Examples of the dyeing auxiliaries include a color former such as an acid or an alkali, a dye solubilizer, a wetting agent, a moisture absorbent, a deep dyeing agent, an anti-reducing agent, a metal ion binding agent, a ultraviolet absorber, a dispersant, a resisting agent, a discharge agent, a preservative, an fungicide, an antioxidant, a migration inhibitor, a dye fixing agent, and a defoaming agent.

As the dyeing auxiliaries, well-known dyeing auxiliaries can be used, and examples thereof include a solubilizer and a solubilizing agent described in pp. 336 to 338 of "Dyeing Note", a deep dyeing agent, a level dyeing agent, and a penetrant described in pp. 339 to 345 of "Dyeing Note", a defoaming agent described in pp. 346 to 348 of "Dyeing Note", a metal ion binding agent described in pp. 147 to 154 of "Dyeing Note", a dispersant described in pp. 216 to 222 of "Dyeing Note", a resisting agent described in pp. 370 to 374 of "Dyeing Note", a discharge agent described in pp. 375 to 381 of "Dyeing Note", a preservative and an fungicide described in pp. 362 to 363 of "Dyeing Note", a migration inhibitor described in pp. 279 to 284 of "Dyeing Note", a dye fixing agent described in pp. 426 to 429 of "Dyeing Note", a wet fastness improving agent described in JP1994-166969A (JP-H06-166969A), and a light fastness improving agent described in US5336443A.

Dyeing auxiliaries are added to a paste solution obtained by dissolving or dispersing a paste in a solvent, a dye solution obtained by dissolving or dispersing a dye in a solvent is added to the paste solution, and the components are stirred. As a result, a color paste is prepared (a step of preparing a color paste).

In the textile printing method, unlike the dip dyeing method, after printing the color paste on fabric (a step of printing the color paste on fabric), a treatment of fixing the colorant, which is printed on the fabric, on the fiber. This treatment is called a color developing step, and a method using heated air or a method using normal pressure saturated steam or superheated steam can be performed for the treatment. In particular, a method using normal pressure saturated steam is preferable. In the present invention, a step of applying steam to the printed fabric is performed. In the step of applying steam to the printed fabric, the temperature and time in the steam treatment vary depending on the kind of the coloring composition and the kind of the fabric. For example, the temperature is preferably 90°C to 140°C and more preferably 100°C to 108°C, and the time is preferably 1 to 60 minutes and more preferably 1 to 30 minutes. After the step of applying steam to the printed fabric, as in the case of dip dyeing, a washing step and a drying step are performed to obtain a printed material. It is preferable that the fabric includes polyamide.

[[Coloring Composition for Ink Jet Textile Printing and Method using The Same]]

In a case where the coloring composition according to the present invention is used for ink jet textile printing, the coloring composition is used in the form of an ink for ink jet textile printing. An ink jet textile printing method has advantageous effects in that, compared to a textile printing method of the related art, an image having excellent tone characteristics can be rapidly formed. Therefore, there are merits in that, for example, the delivery time can be reduced, many kinds in small quantities can be produced, and a plate-making step is unnecessary. Further, in ink jet textile printing, only an amount of ink required for forming an image is used. Therefore, it can be said that ink jet textile printing is an image forming method having excellent environmental friendliness in that, for example, the amount of waste liquid is less than that in a method of the related art.

The ink jet ink causes nozzle clogging of an ink jet head in a case where the viscosity thereof increases due to evaporation of water, an aqueous organic solvent, or the like from a nozzle tip or a case where a dye as a solid

component is deposited. Therefore, it is required that the ink for ink jet textile printing has more satisfactory color developing properties than that used in textile printing of the related art. In addition, it is required that ink suitability such as ink storage stability or jetting stability, dyeing suitability such as bleeding prevention or contamination prevention, and image fastness such as light fastness, water fastness, or chlorine fastness are also imparted to the ink for ink jet textile printing.

An ink jet textile printing method according to the present invention includes the following steps (11) to (14):

(11) a step of applying a paste including at least a polymer compound and water to fabric;
(12) a step of printing the ink jet ink according to the present invention on the fabric using an ink jet method;
(13) a step of applying steam to the printed fabric; and
(14) a step of washing the printed fabric with water and drying the washed fabric.

In a case where a color paste used in a textile printing method of the related art is used in the ink jet textile printing method, nozzle clogging occurs. Therefore, in the ink jet textile printing method, a pre-treatment step of applying a paste to fabric in advance (the step of applying a paste including at least a polymer compound and water to fabric) is necessary. By performing the pre-treatment step, fabric handleability is improved. Specifically, pre-treated fabric is obtained by applying a paste solution including a paste, a solvent, and a hydrotropy agent to fabric and drying the fabric. It is preferable that the fabric includes polyamide.

As the paste, the same paste as that used for screen printing or the like can be used. As the solvent, a water-soluble solvent is preferably used, and a solvent including at least water is most preferably used.

In general, the hydrotropy agent serves to increase the color optical density of an image when fabric to which an ink composition is applied is heated by steam. For example, typically, urea, alkyl urea, ethylene urea, propylene urea, thiourea, guanidine hydrochloride, or tetraalkyl ammonium halide is used. In addition, a well-known hydrotropy agent can be used, and examples thereof include a dye fixing agent described in pp. 426 to 429 of "Dyeing Note". The content of the hydrotropy agent is preferably 0.01 mass% to 20 mass% with respect to the total solid content of the paste solution.

Optionally, the paste solution further includes, for example, a pH adjuster, an aqueous (water-soluble) metal salt, a water repellant, a surfactant, a migration inhibitor, or a micropore forming agent. As these additives, well-known additives can be used, and examples thereof include a solubilizer and a solubilizing agent described in pp. 336 to 338 of "Dyeing Note", a deep dyeing agent, a level dyeing agent, and a penetrant described in pp. 339 to 345 of "Dyeing Note", a metal ion binding agent described in pp. 147 to 154 of "Dyeing Note", a resisting agent described in pp. 370 to 374 of "Dyeing Note", a discharge agent described in pp. 375 to 381 of "Dyeing Note", a preservative and an fungicide described in pp. 362 to 363 of "Dyeing Note", a migration inhibitor described in pp. 279 to 284 of "Dyeing Note", a micropore forming agent described in JP1995-316991A (JP-H07-316991A), a wet fastness improving agent described in JP1994-166969A (JP-H06-166969A), and a light fastness improving agent described in US5336443A. In addition, an additive described in paragraphs "0096" to "0101" of JP2013-209786A can also be used.

In the pre-treatment, the paste solution is padded at an squeezing rate of 5% to 150% and preferably 10% to 130%.

In the pre-treatment, a method of applying the respective paste solutions to fabric is not particularly limited, and examples thereof include methods which are typically performed, for example, a padding method, a coating method, a screening method, a spraying method, a transfer method, and an ink jet method.

Next, the pre-treated fabric is printed using the ink jet ink.

The ink for ink jet textile printing can be prepared by dissolving and/or dispersing the compound (which may be a mixture) represented by any one of Formulae (1) to (3) according to the present invention in a lipophilic medium or an aqueous medium. It is preferable that an aqueous medium is used to prepare the ink for ink jet textile printing. Therefore, in order to impart ink suitability, dyeing suitability, and image fastness, the ink for ink jet textile printing can include a solvent and a surfactant in addition to the dye.

The solvent is determined based on, for example, the kind of the substituent used in any one of Formulae (1) to (3), the kind of the solvent component used for producing the coloring composition, and the kind of fabric to be dyed. As the solvent, an aqueous medium is preferably used, and water or a water-soluble organic solvent is more preferably used. The ink for ink jet textile printing can be prepared by using a lipophilic solvent or a water-soluble solvent and the solvent and dissolving and/or dispersing the compound represented by any one of Formulae (1) to (3) according to the present invention therein.

It is preferable that an organic solvent which may be included in the ink composition according to the present invention is an aqueous organic solvent, and examples thereof include a polyhydric alcohol such as diethylene glycol or glycerin, an amine, a monohydric alcohol, and a polyhydric alcohol alkyl ether. In addition, each compound which is described as an example of a water-miscible organic solvent in paragraph "0076" of JP2002-371079A is preferable.

The content of the organic solvent in the ink composition according to the present invention is preferably 10 mass% to 60 mass% with respect to the total mass of the ink jet ink composition.

As the surfactant, any one of a cationic surfactant, an anionic surfactant, an amphoteric surfactant, and a nonionic surfactant can be used. Examples of the cationic surfactant include an aliphatic amine salt and an aliphatic quaternary ammonium salt. Examples of the anionic surfactant include a fatty acid soap and a N-acyl-N-methylglycine salt. Examples of the amphoteric surfactant include carboxy betaine, sulfo betaine, aminocarboxylate, and imidazolinium betaine. Examples of the nonionic surfactant include polyoxyethylene alkyl ether, acetylenic glycol, and acetylene alcohol. A surfactant which is described as an example of a surface tension adjuster in paragraph "0073" of JP2002-371079A, or a surfactant which is described in JP2008-266466A or JP1999-2693929A (JP-H11-2693929A) is preferably used. In addition, the ink jet ink according to the present invention optionally includes other additives within a range where the effects of the present invention do not deteriorate. Examples of the other additives include well-known additives such as an anti-drying agent (wetting agent), an anti-fading agent, an emulsion stabilizer, a penetration enhancer, a ultraviolet absorber, an infrared absorber, a preservative, a fungicide, a pH adjuster, a surface tension adjuster, a defoaming agent, a viscosity adjuster, a dispersant, a dispersion stabilizer, a rust inhibitor, a chelating agent, an anti-reducing agent, an antioxidant, an antistatic agent, and a fluorescence brightening agent. In the case of a water-soluble ink, these various additives are directly added to the ink solution. In a case where an oil-soluble dye is used in the form of a dispersion, in general, the additives are added to a dye dispersion after the preparation of the dispersion. However, the additives may be added in the form of an oil phase or an aqueous phase during the preparation. In a case where an oil-soluble dye is used in the form of a dispersion, a dispersant can be used. As the dispersant, for example, a dispersant described in pp. 216 to 222 of "Dyeing Note" can be used. As the anti-drying agent, the anti-fading agent, the ultraviolet absorber, the fungicide, the pH adjuster, the surface tension adjuster, the defoaming agent, and the chelating agent, those described in paragraphs "0224" to "0231" of JP2014-5462A can be used. In addition, the ink for ink jet textile printing according to the present invention may also include a wet fastness improving agent described in JP1994-166969A (JP-H06-166969A) and a light fastness improving agent described in US5336443A. The penetration enhancer is used in order to enhance the penetration of the ink jet ink into the fiber and the fixing of the ink thereon. As the penetration enhancer, a well-known additive can be used. For example, a wetting agent, a penetrant, a level dyeing agent, a retarding agent, and an alcohol such as ethanol, isopropanol, butanol, di(tri)ethylene glycol monobutyl ether, or 1,2-hexanediol described in pp. 223 to 255 of "Dyeing Note"; sodium lauryl sulfate, sodium oleate, a nonionic surfactant; or a branched polyhydric alcohol described in WO10/109867A or JP1994-57644A (JP-H06-57644A) can be used. Typically, these penetration enhancers function in a case where the addition thereof is 5 to 35 mass%. It is preferable that the penetration enhancer is used in an addition amount range where bleeding does not occur after dyeing and where ink leakage from a back surface does not occur.

In a case where the compound according to the present invention is dispersed in an aqueous medium, the compound can be dispersed using a method described in paragraphs "0232" and "0233" of JP2014-5462A.

In the present invention, the content of the compound represented by any one of Formulae (1) to (3) in the coloring composition is determined based on, for example, the kind of the substituent used in any one of Formulae (1) to (3), and the kind of the solvent component used for producing the coloring composition. The content of the compound represented by any one of Formulae (1) to (3) in the coloring composition is preferably 1 to 20 mass% and more preferably 1 to 10 mass% with respect to the total mass of the coloring composition.

The viscosity of the ink jet recording ink according to the present invention is preferably 30 mPa·s or lower. In addition, the surface tension of the ink for ink jet textile printing according to the present invention is preferably 25 mN/m to 70 mN/m. The viscosity and the surface tension can be adjusted by adding various additives such as a viscosity adjuster, a surface tension adjuster, a specific resistance adjuster, a film conditioner, a ultraviolet absorber, an antioxidant, an anti-fading agent, a fungicide, a rust inhibitor, a dispersant, and a surfactant.

The ink jet ink according to the present invention can be used not only for forming a monochromic image but also forming a full-color image. In order to form a full-color image, a magenta ink, a cyan ink, and a yellow ink can be used. In addition, in order to adjust the color, a black ink may be further used. As the dye, a dye described in paragraphs "0237" to "0240" of JP2014-5462A can be used.

After drying, fabric which is printed using an ink jet method undergoes the color developing step, the washing step, and the drying step to obtain a printed material as in the case of other textile printing methods. A preferable method for performing the color developing step to the drying step is the same as in screen printing or the like.

The fabric used in the present invention is optionally pre-treated. The treatment may be performed before or after applying the paste to the fabric in the ink jet textile printing method. In addition, a pre-treatment agent may be added to the paste solution which applied before dyeing. Specific examples of a pre-treatment method include methods described in JP2002-339268A, JP2000-54277A, JP1995-150482A (JP-H07-150482A), JP2008-174865A, JP2012-154006A, JP2012-12730A, JP1990-68372A (JP-H02-68372A), JP1988-31594B (JP-S63-31594B), JP2002-275769A, JP2001-81680A, JP2004-68208A, JP1999-43873A (JP-H11-43873A), JP2007-217829A, JP2006-83495A, JP2005-154936A, JP2002-105875A, JP2002-348786A, JP1999-81163A (JP-H11-81163A), JP1990-61183A (JP-H02-61183A), JP2001-295186A, JP2004-60073A, JP2003-113583A, JP1996-100379A (JP-H08-100379A), JP1990-53976A (JP-H02-53976A), JP2000-226781A, JP2004-292989A, JP2002-249991A, JP2002-363872A, JP1994-341070A (JP-H06-341070A), JP2004-197237A, JP2008-223192A, and JP2011-179130A.

On the dyed fabric according to the present invention, optionally, a flame-retardant treatment described JP1987-257464A (JP-S62-257464A), a plasma treatment JP1990-47378A (JP-H02-47378A), or a treatment for improving fastness such as light fastness, wet fastness, or chlorine fastness described in JP1985-94678A (JP-S60-94678A), JP2002-266236A, JP2007-321247A, JP1991-287873A (JP-H03-287873A), or JP2004-131919A is performed. These treatments may be performed before or after dyeing.

A method for ink jet textile printing in which the ink according to the present invention is used is not particularly limited as long as it includes a step of jetting the ink on fabric using an ink jet device. For example, methods for ink jet textile printing described in JP1997-296379A (JP-H09-296379A), JP1999-43873A (JP-H11-43873A), JP1995-70953A (JP-H07-70953A), JP1995-197384A (JP-H07-197384A), JP1995-70950A (JP-H07-70950A), JP1991-104977A (JP-H03-104977A), JP2007-303046A, JP2007-313717A, and JP2008-248437A are known.

In addition, as a device for ink jet textile printing, an arbitrary ink jet device can be used. For example, methods described in JP1991-45774A (JP-H03-45774A), JP2001-277656A, JP2000-290882A, JP2001-18390A, JP2010-83040A, and JP2011-31418A are known.

[Form of Coloring Compound and Fabric to be Dyed]

The compound according to the present invention represented by any one of Formulae (1) to (3) is used as a dye to dye or print fabric. By changing the kind of the substituent of the compound represented by any one of Formulae (1) to (3), various kinds of dyes can be prepared. In a case where the compound represented by any one of Formulae (1) to (3) includes at least one acidic group such as a sulfo group or a carboxyl group, an acid dye is prepared such that a protein fiber such as silk or wool or a polyamide fiber such as 6 nylon or 66 nylon can be dyed. In a case where the compound represented by any one of Formulae (1) to (3) is an oil-soluble compound which is insoluble in water, a disperse dye is prepared such that a hydrophobic fiber such as polyester can be generally dyed but an acrylic fiber or a polyamide fiber can also be dyed. In a case where the compound represented by any one of Formulae (1) to (3) includes at least one basic group such as an amino group, a cationic dye is prepared such that an acrylic fiber can be dyed. In a case where the compound represented by any one of Formulae (1) to (3) includes at least one group which is reactive with a fiber, a reactive dye is prepared such that a cellulose fiber such as cotton, or a polyamide fiber can be dyed with this compound. Specific examples of the group which is reactive with a fiber include a chlorotriazinyl group, a chloropyrimidyl group, a vinylsulfonyl group, a chloroethylsulfonyl group, a sulfatoethylsulfonyl group, and a thiosulfatoethylsulfonyl group.

As the fabric, fabric made of one fiber may be used, or a composite fiber made of two or more fibers may be used.

It is preferable that the compound represented by any one of Formulae (1) to (3) according to the present invention is an acid dye. In particular, when a polyamide fiber is dyed with this acid dye, excellent fixing properties can be obtained, and various performances of dyed fabric such as light fastness, water fastness, and chlorine fastness can be improved.

A polyamide fiber which is preferable for fabric to be dyed is not particularly limited as long as it includes a polyamide fiber. Fabric made of only polyamide may be used, fabric made of a composite fiber may be used. Examples of the composite fiber include fibers described in JP2008-202210A, JP2006-322131A, and JP2007-100270A. Among these polyamide fibers, fibers including 6 nylon and 66 nylon are preferable.

As the fiber to be used, fabric is preferable. However, even in a case where yarn is dyed, the same effects can be obtained.

[Examples]

Hereinafter, the present invention will be described using examples, but the present invention is not limited to these examples. Unless specified otherwise, "%" and "part(s)" represent "mass%" and "part(s) by mass".

[Synthesis Examples]

(Synthesis of Compound 1)

Using a method described in JP1996-333517A (JP-H08-333517A), one equivalent of 2,6-dimethylbenzaldehyde, two equivalents of N-(m-sulfobenzyl)-N-ethylaniline, and 2.5 L/mol of methanesulfonic acid were dissolved in an amount of water, which was two times that of a reactant synthesis, to cause a condensation reaction to occur, and then the precipitated solid was washed with isopropanol. As a result, Intermediate Product A was obtained. Next, one equivalent

of Intermediate Product A was oxidized with three equivalents of ammonium thiosulfate and then was neutralized with sodium hydroxide. As a result, Compound 1 was obtained. The ESI-mass spectrum of the obtained crystals were measured, and a peak of 695 ([M-Na]$^-$, 100%) was found.

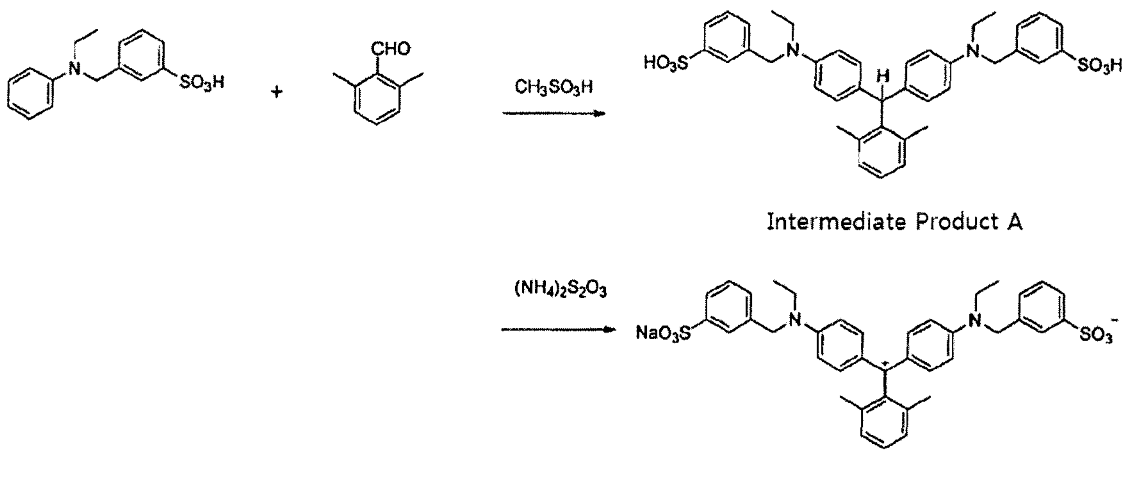


Intermediate Product A

Compound 1

(Synthesis of Comparative Compound 1)

Comparative Compound 1 was synthesized using the same method as in the synthesis of Compound 1, except that 2,6-dimethylbenzaldehyde was changed to 2-methylbenzaldehyde. The ESI-mass spectrum of the obtained crystals were measured, and a peak of 681 ([M-Na]$^-$, 100%) was found.

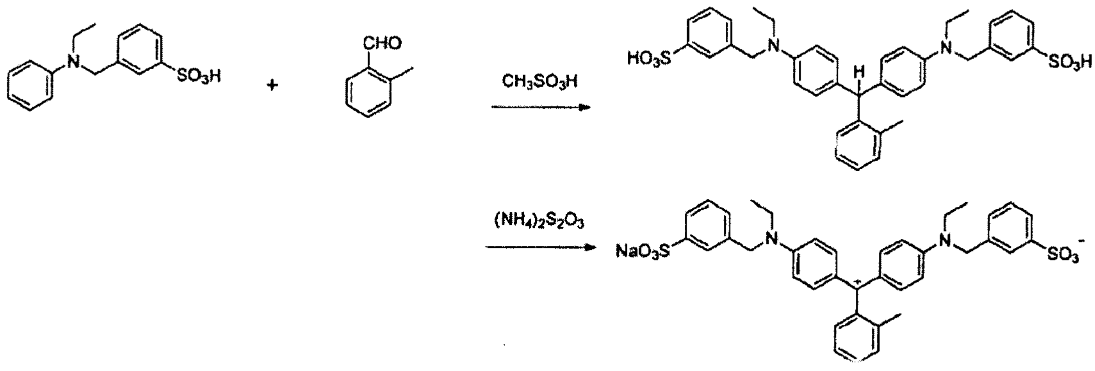


Comparative Compound 1

(Synthesis of Compound 19)

Using the same method as in the synthesis of Compound 1, one equivalent of sodium sulfobenzaldehyde, two equivalents of N-(2,4,6-trimethylphenyl)aniline, and 2.5 L/mol of methanesulfonic acid were dissolved in an amount of water, which was two times that of a reactant synthesis, to cause a condensation reaction to occur, and then the precipitated solid was washed with isopropanol. As a result, Intermediate Product B was obtained. Next, one equivalent of Intermediate Product B was oxidized with three equivalents of ammonium thiosulfate, was chlorosulfonated using a method described in JP2014-5462A, was alkali-hydrolyzed with sodium hydroxide, and was further neutralized. As a result, Compound 19 was obtained. The ESI-mass spectrum of the obtained crystals were measured, and a peak of 747 ([M-2Na+H]$^-$, 100%) was found.

Solution absorbance spectrum of Compound 19: $\lambda$max=605 nm (aqueous solution)

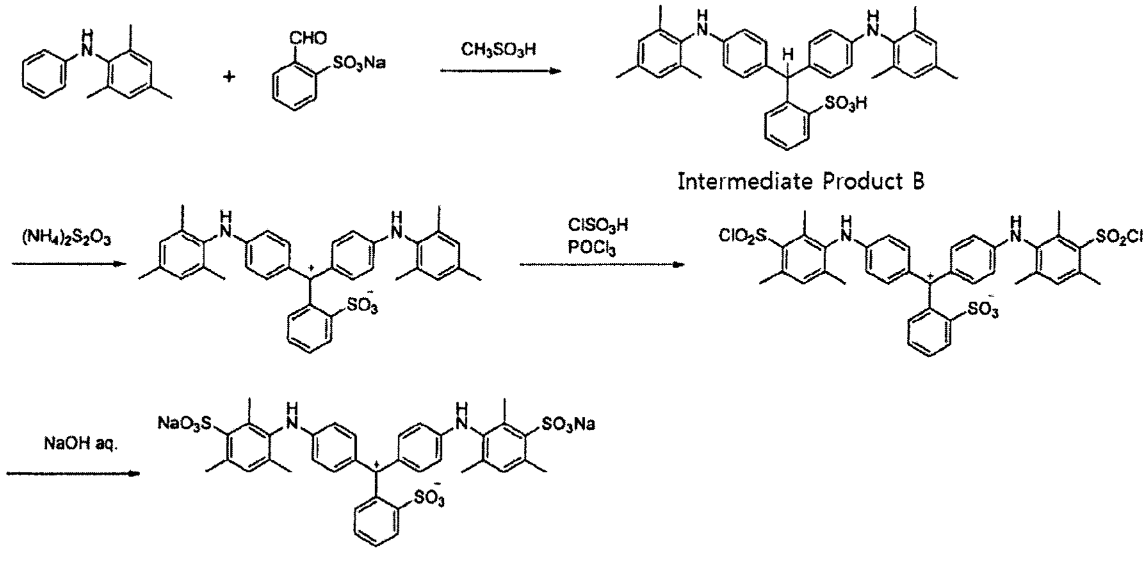


Compound 19

(Synthesis of Comparative Compound 2)

Comparative Compound 2 was synthesized using the same method as in the synthesis of Compound 19, except that N-(2,4,6-trimethylphenyl)aniline was changed to diphenyl aniline. The ESI-mass spectrum of the obtained crystals were measured, and a peak of 663 ($[M-2Na+H]^-$, 100%) was found.

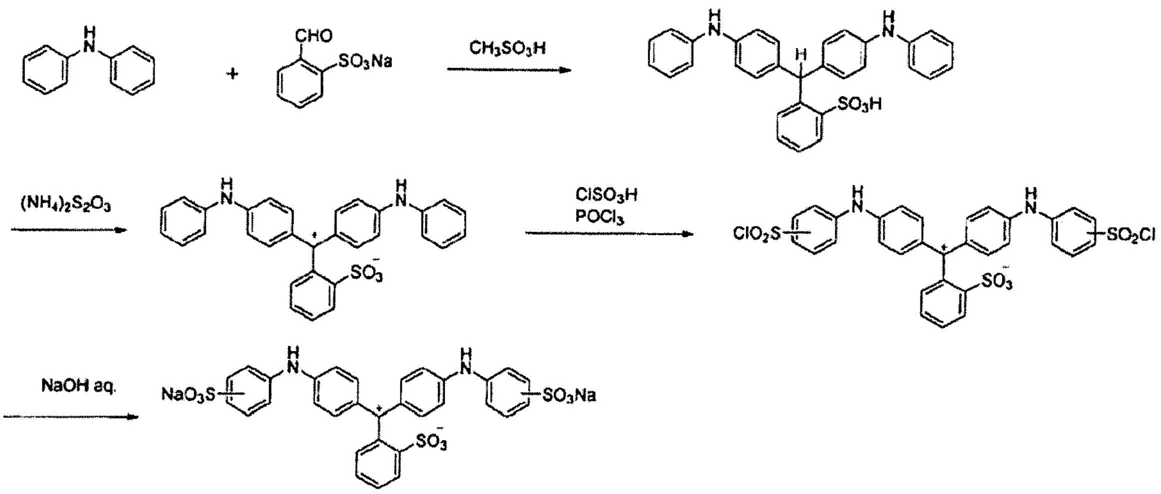


Comparative Compound 2

(Synthesis of Compound 23)

Using the same method as in the synthesis of Compound 1, one equivalent of 2,6-dimethylbenzaldehyde, two equivalents of N-(2,4,6-trimethylphenyl)aniline, and 2.5 L/mol of methanesulfonic acid were dissolved in an amount of water, which was two times that of a reactant synthesis, to cause a condensation reaction to occur, and then the precipitated solid was washed with isopropanol. Next, an oxidation reaction was performed using the same method as in the synthesis of Compound 19, and salt exchange was performed using potassium chloride. As a result, Compound 23 was obtained.

(Synthesis of Compound 21)

The obtained Compound 23 was chlorosulfonated using a method described in JP2014-5462A, was alkali-hydrolyzed with sodium hydroxide, and was further neutralized. As a result, Compound 21 was obtained. The ESI-mass spectrum of the obtained crystals were measured, and a peak of 695 ([M-Na]$^-$, 100%) was found.

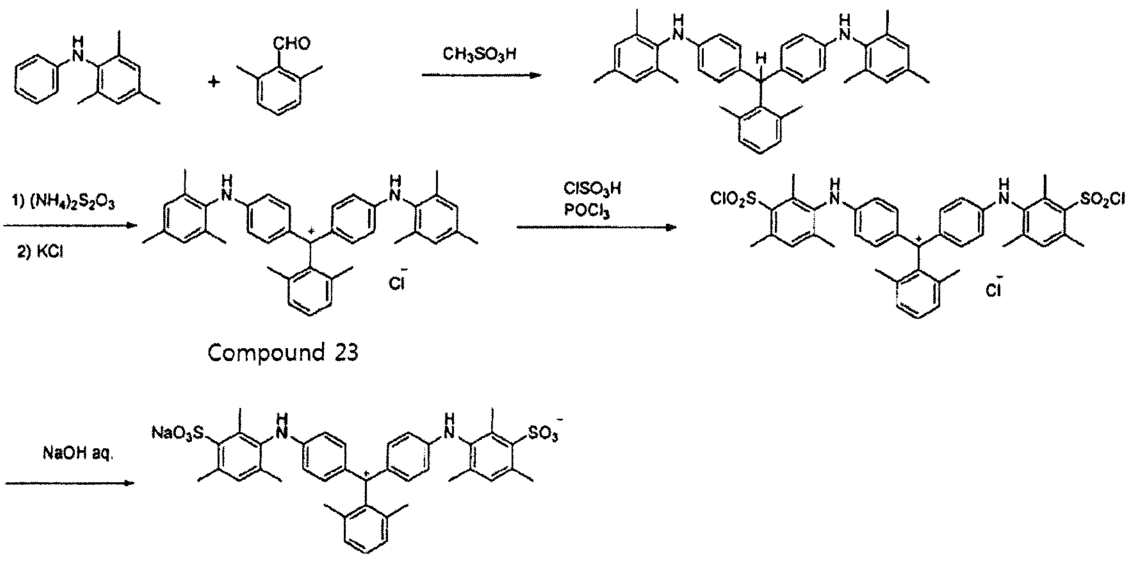


Compound 23

Compound 21

(Synthesis of Compound 34)

Commercially available Acid Blue 9 was chlorosulfonated with phosphorus oxychloride. As a result, Intermediate Product C was synthesized. One equivalent of Intermediate Product C was caused to react with two equivalents of 2,4-dimethoxyaniline in dimethylacetamide. As a result, Intermediate Product D was obtained. Using the same method as in the synthesis of Compound 19, Intermediate Product D was chlorosulfonylated, alkali-hydrolyzed, and neutralized. As a result, Compound 34 was obtained. The ESI-mass spectrum of the obtained crystals were measured, and a peak of 1177 ([M-2Na+H]$^-$, 100%) was found.

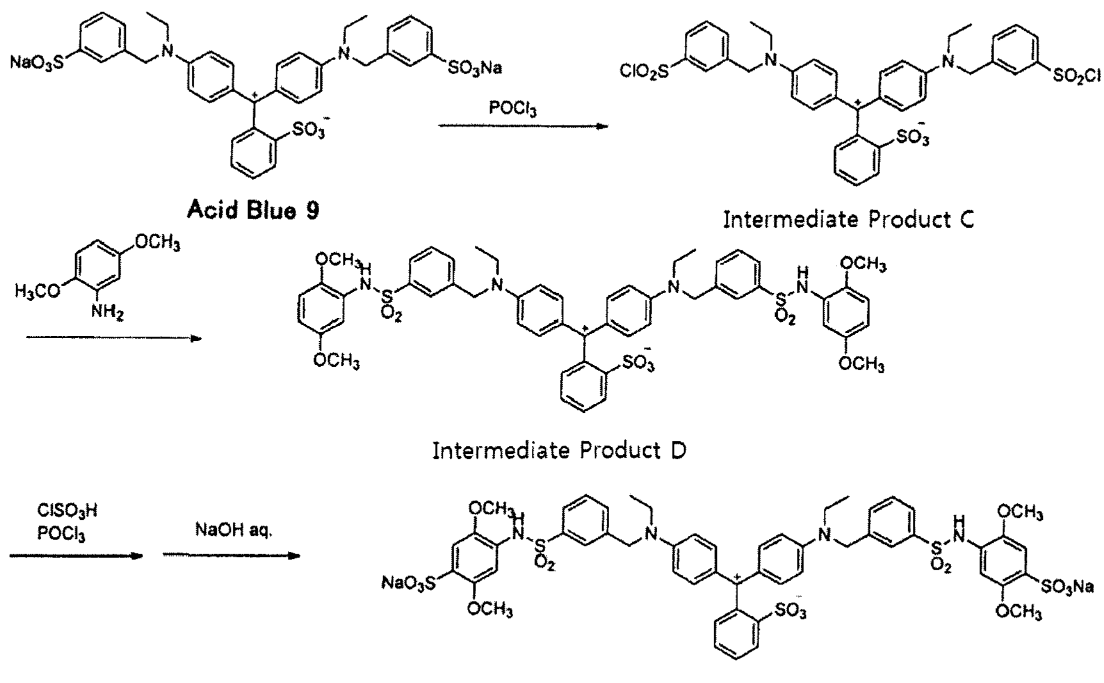


**Acid Blue 9**

Intermediate Product C

Intermediate Product D

Compound 34

(Synthesis of Compound 30)

Commercially available Acid Blue 7 was dissolved in dimethylacetamide, and 2,4-dimethoxyaniline was added thereto. As a result, Intermediate Product E was synthesized. Using the same method as in the synthesis of Compound 19, Intermediate Product E was chlorosulfonylated, alkali-hydrolyzed, and neutralized. As a result, Compound 30 was obtained. The ESI-mass spectrum of the obtained crystals were measured, and a peak of 978 ([M-3Na+2H]$^-$, 100%) was found.

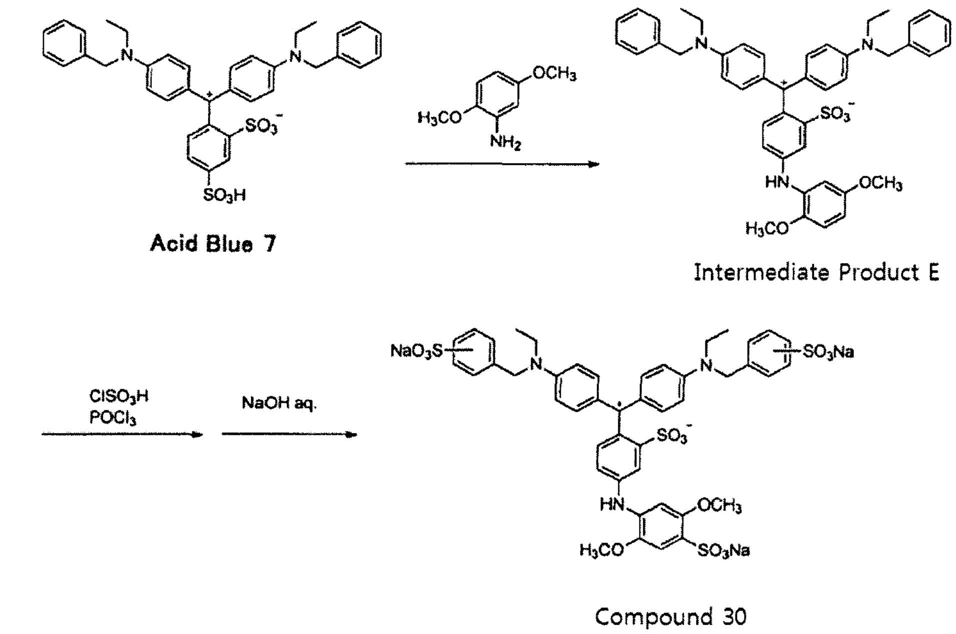


Acid Blue 7

Intermediate Product E

Compound 30

(Synthesis of Compound 29)

Compound 29 was obtained using the same method as in the synthesis of Compound 30, except that 2,4-dimethoxyaniline was changed to 4-amino-2,6-di-tert-butylphenol. The ESI-mass spectrum of the obtained crystals were measured, and a peak of 966 ([M-2Na+H]$^-$, 100%) was found.

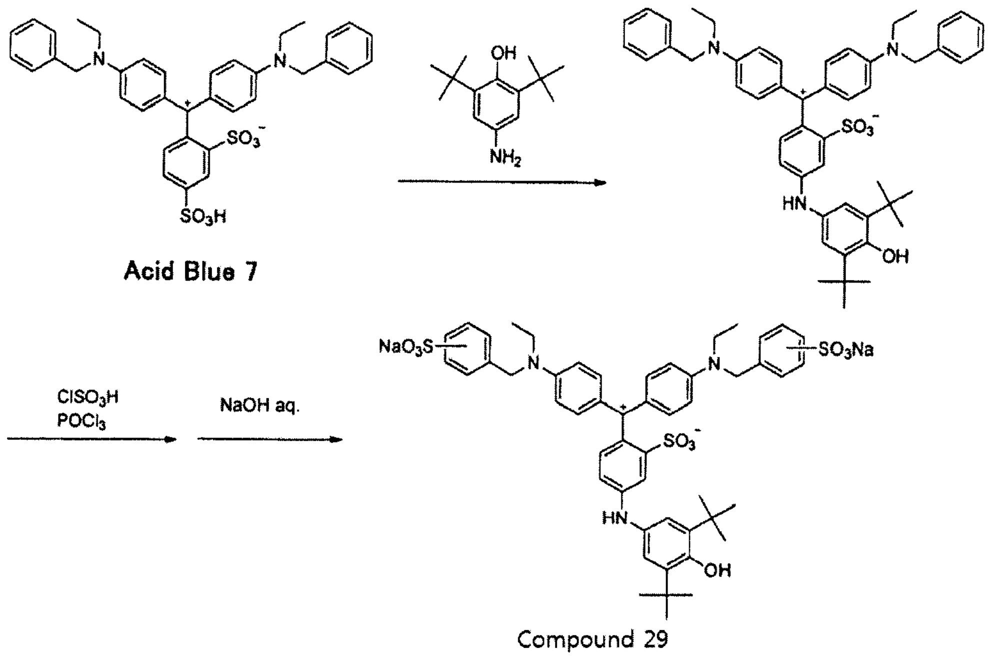


Acid Blue 7

Compound 29

(Synthesis of Compound 32)

Commercially available Acid Blue 7 was chlorosulfonylated with phosphorus oxychloride. As a result, Intermediate Product F was synthesized. Intermediate Product F was caused to react with one equivalent of glycine in dimethyl aldehyde, and then 1.2 equivalents of thionyl chloride was added dropwise thereto. The reaction solution was slowly heated to 23°C and was stirred. After confirming the completion of the reaction, a solution 2,4-dihydroxybenzophenone was dissolved in dimethylacetamide was added dropwise, and then triethylamine was added dropwise using the same method. The reaction solution was stirred at 90°C. After confirming the completion of the reaction, the solution was extracted with ethyl acetate, was alkali-hydrolyzed with sodium hydroxide, and was further neutralized. As a result, Compound 32 was obtained. The ESI-mass spectrum of the obtained crystals were measured, and a peak of 1080 ([M-2Na+H]$^-$, 100%) was found.

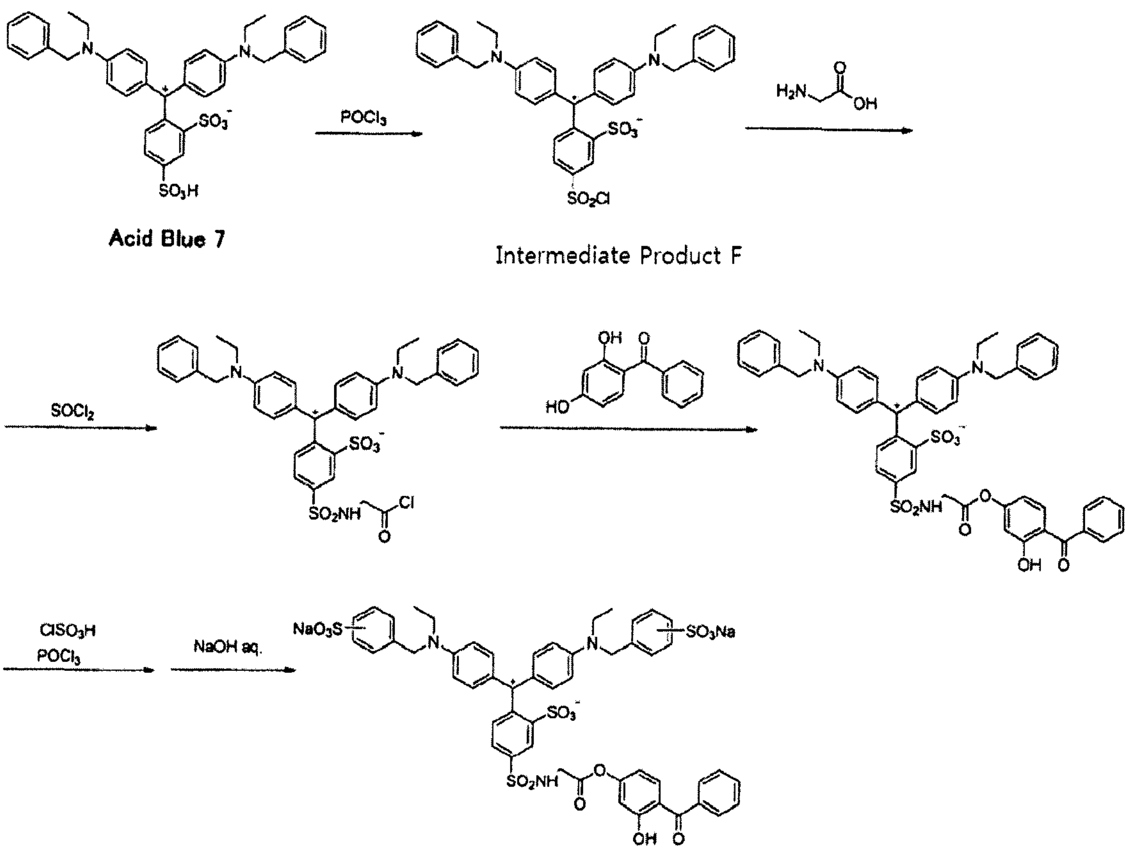

Acid Blue 7

Intermediate Product F

Compound 32

(Synthesis of Compound 37)

Using a method described in JP1996-333517A (JP-H08-333517A), one equivalent of 2,4-disulfobenzaldehyde, two equivalents of N-(p-nitrobenzyl)-N-ethylaniline, and 2.5 L/mol of methanesulfonic acid were dissolved in an amount of water, which was two times that of a reactant synthesis, to cause a condensation reaction to occur, and then the precipitated solid was washed with isopropanol. As a result, Intermediate Product G was obtained. Next, one equivalent of Intermediate Product G was oxidized with three equivalents of ammonium thiosulfate and then was neutralized with sodium hydroxide. As a result, Compound 37 was obtained. The ESI-mass spectrum of the obtained crystals were measured, and a peak of 757 ([M-Na]$^-$, 100%) was found.

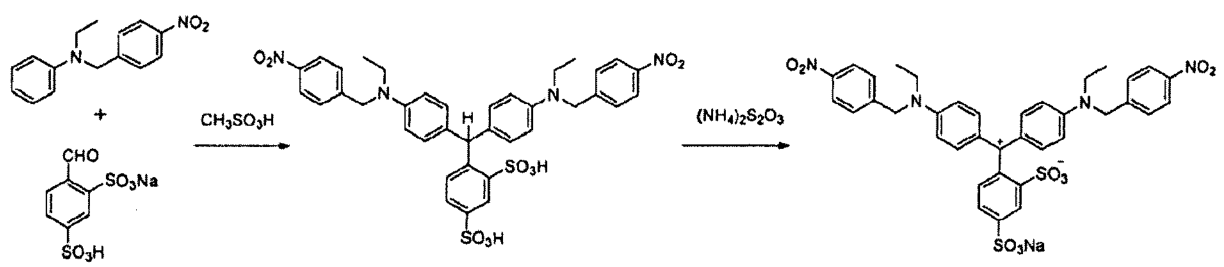


Intermediate Product G

Compound 37

(Synthesis of Compound 31)

Compound 31 was obtained using the same method as in the synthesis of Compound 30, except that 2,4-dimethoxyaniline was changed to 4-amino-2,2,6,6-tetrapiperidine. The ESI-mass spectrum of the obtained crystals were measured, and a peak of 966 ([M-2Na+H]-, 100%) was found.

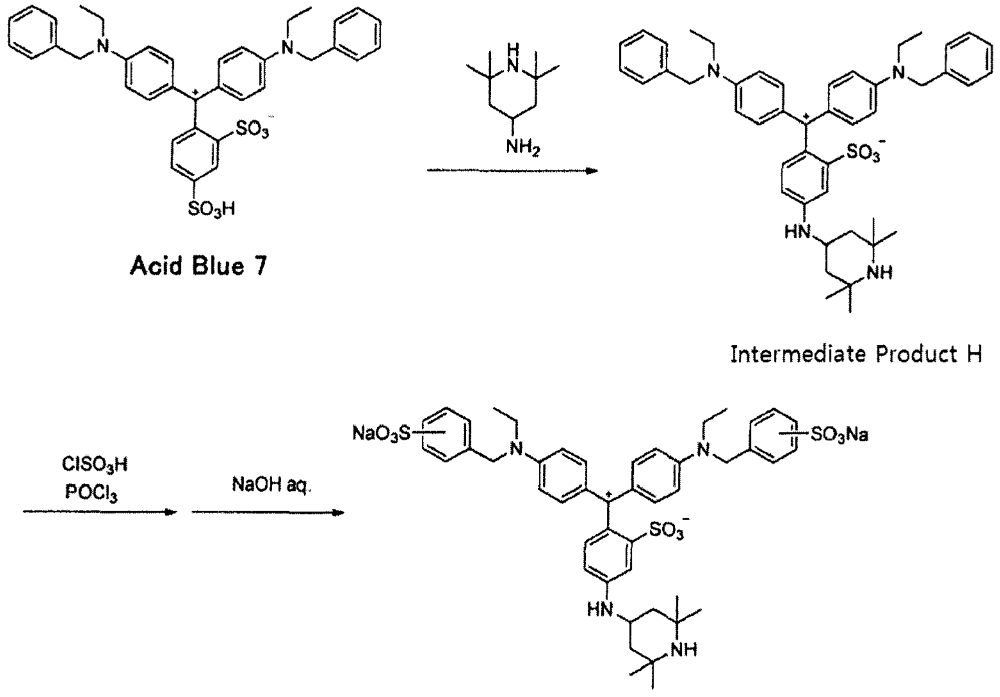


Acid Blue 7

Intermediate Product H

Compound 31

(Synthesis of Compound 43)

Compound 43 was obtained using the same method as in the synthesis of Compound 30, except that 2,4-dimethoxyaniline was changed to sodium 3-mercaptopropanesulfonate. The ESI-mass spectrum of the obtained crystals were measured, and a peak of 901 ([M-3Na+2H]-, 100%) was found.

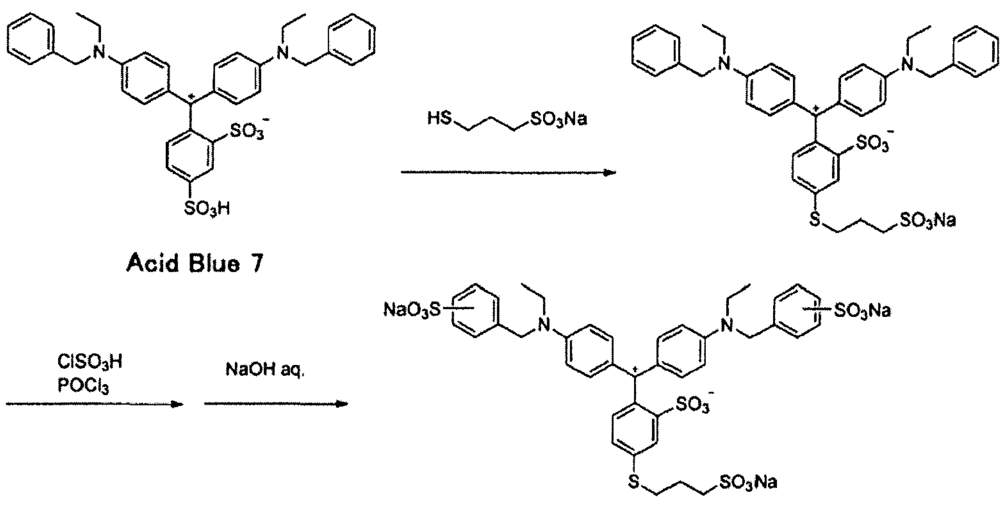


Acid Blue 7

Compound 43

(Synthesis of Compound 44)

Commercially available Acid Blue 9 was chlorosulfonated using a method described in JP2014-5462A, Two equivalents of 2-amino-4,6-dichloropyrimidine was added, and two equivalents of 2,5-dimethoxyaniline was further added. As a result, Intermediate Product J was synthesized. The reaction solution was chlorosulfonated, was alkali-hydrolyzed with sodium hydroxide, and was further neutralized. As a result, Compound 44 was obtained. The ESI-mass spectrum of the obtained crystals were measured, and a peak of 1431 ([M-2Na+H]$^-$, 100%) was found.

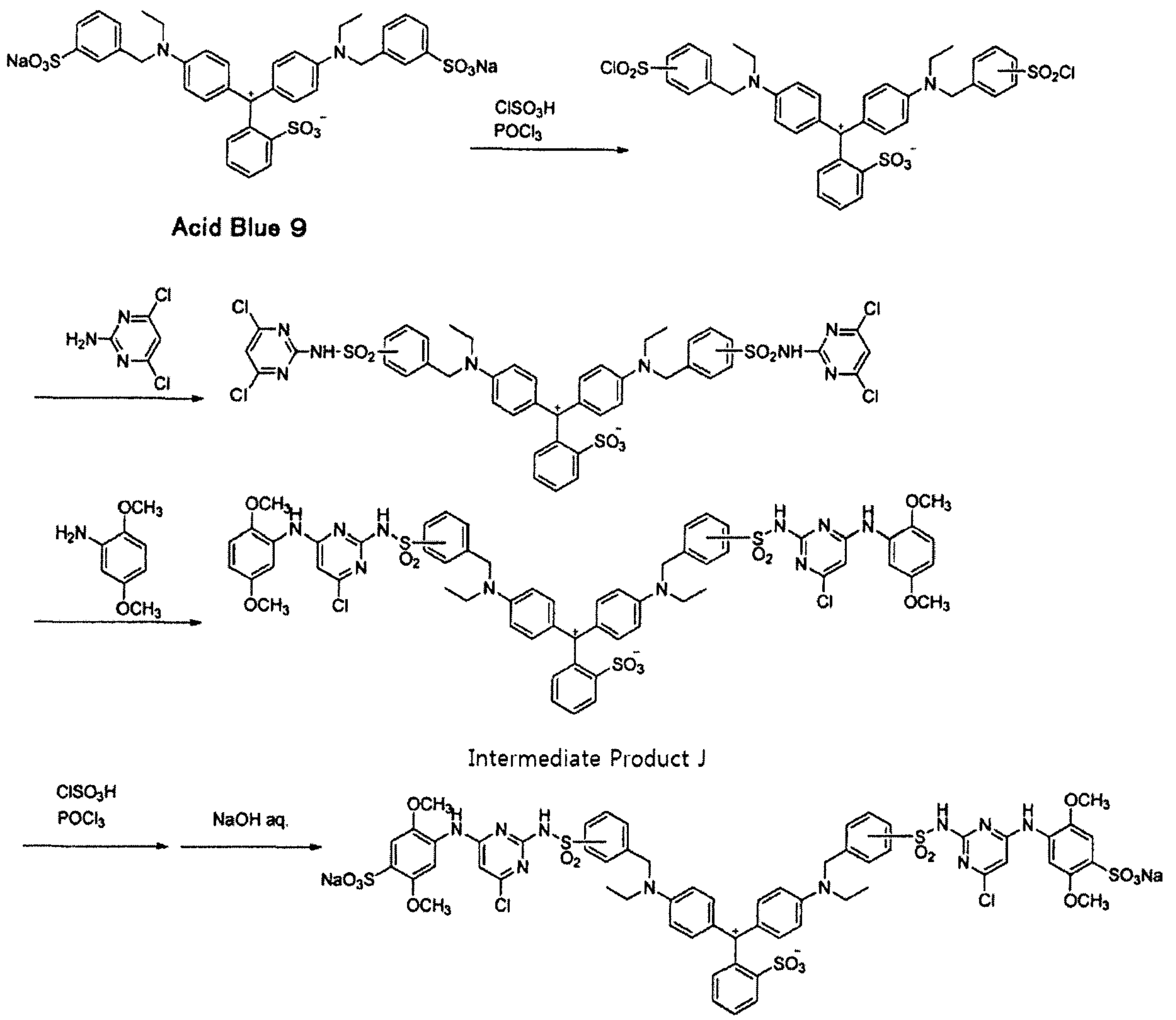


Acid Blue 9

Intermediate Product J

Compound 44

(Synthesis Example of Compound 20)

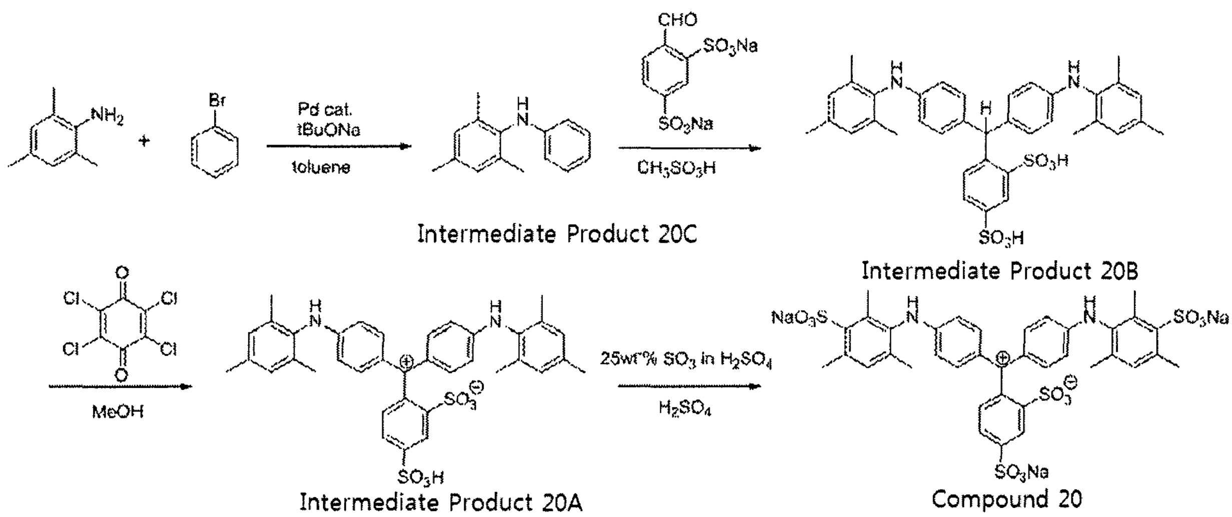


Intermediate Product 20C

Intermediate Product 20B

Intermediate Product 20A

Compound 20

30 g of 2,4,6-trimethylaniline, 34 g of bromobenzene, 39 g of t-butoxysodium, and 200 mL of toluene were put into a flask and were sufficiently stirred in a nitrogen gas flow. 210 mg of palladium acetate and 45 mg of tri-t-butylphosphonium tetraphenylborate complex ($tBu_3P\text{-}HBPh_4$) were added to the solution, and the reaction solution was heated to 110°C and was stirred for 6 hours. The obtained reaction solution was cooled, water was poured thereinto, and the solution was extracted with ethyl acetate. The obtained organic phase was dried with sodium sulfate and was condensed. Next, the condensate was purified by silica gel column chromatography (developing solution: ethyl acetate/hexane=1/20). As a result, 21 g of Intermediate Product 20C was obtained. 16 g of Intermediate Product 20C, 12 g of disodium 4-formylbenzene-1,3-disulfonate, and 80 mL of methanesulfonic acid were put into a flask and were stirred at 100°C for 6 hours. The obtained reaction solution was poured into 500 mL of iced water, and the obtained crystals of Intermediate Product 20B were separated by filtration (20 g). 9 g of Intermediate Product 20B, 3.4 g of chloranil, and 200 mL of methanol were mixed with each other, and the mixture was stirred at 50°C for 3 hours. After returning the temperature to room temperature, the obtained crystals were separated by filtration. As a result, 7 g of Intermediate Product 20A was obtained. 5 g of Intermediate Product 20A was added to 20 mL of sulfuric acid, and the solution was stirred while cooling it. 25 mL of 25% fuming sulfuric acid was added dropwise to the solution for 4 hours such that the internal temperature did not exceed 5°C. The reaction solution was poured into 200 g of ice, and the precipitated crystals were separated by filtration. The crystals were dissolved in methanol, and the solution was neutralized with sodium acetate and was purified by column chromatography (filler: SEPHADEX, developing solution: methanol). As a result, 1 g of Compound 20 was obtained.

Solution absorbance spectrum of Compound 20: λmax=612 nm (aqueous solution)

(Synthesis Example of Compound 51)

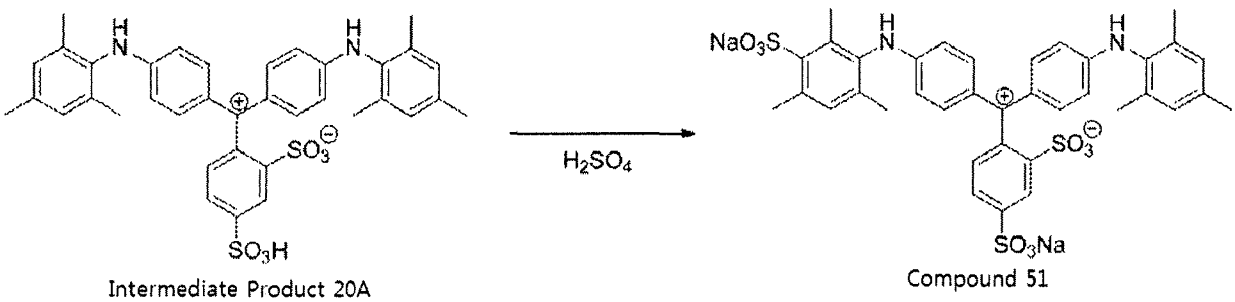


Intermediate Product 20A

Compound 51

5 g of Intermediate Product 20A was added to 25 mL of sulfuric acid, and the solution was stirred at 50°C for 4 hours. The reaction solution was poured into 80 g of ice, and the precipitated crystals were separated by filtration. The crystals were dissolved in methanol, and the solution was neutralized with sodium acetate and was purified by column chromatography (filler: SEPHADEX, developing solution: methanol). As a result, 2 g of Compound 51 was obtained.

Solution absorbance spectrum of Compound 51: λmax=613 nm (aqueous solution)

(Synthesis Example of Compound 56)

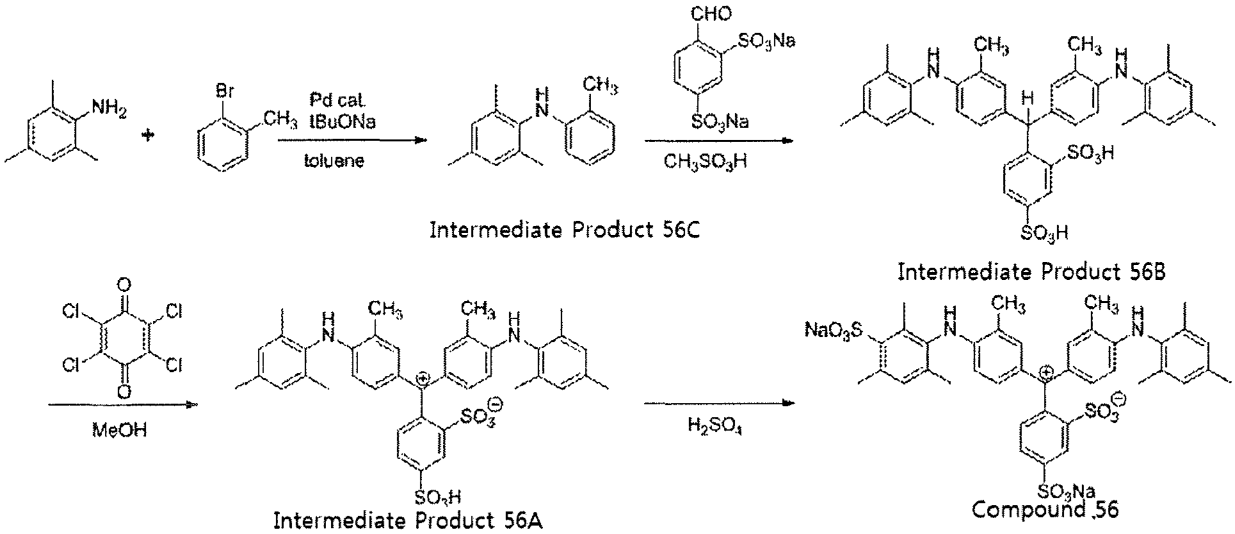

Intermediate Product 56C
Intermediate Product 56B
Intermediate Product 56A
Compound 56

Intermediate Product 56C was obtained using the same method as the method of synthesizing Intermediate Product 20C, except that the reaction was performed after changing bromobenzene to 2-bromotoluene.

Intermediate Product 56B was obtained using the same method as the method of synthesizing Intermediate Product 20B, except that the reaction was performed after changing Intermediate Product 20C to Intermediate Product 56C.

Intermediate Product 56A was obtained using the same method as the method of synthesizing Intermediate Product 20A, except that the reaction was performed after changing Intermediate Product 20B to Intermediate Product 56B.

Compound 56 was obtained using the same method as the method of synthesizing Compound 51, except that the reaction was performed after changing Intermediate Product 51A to Intermediate Product 56A.

Solution absorbance spectrum of Compound 56: λmax=616 nm (aqueous solution)

(Synthesis Example of Compound 58)

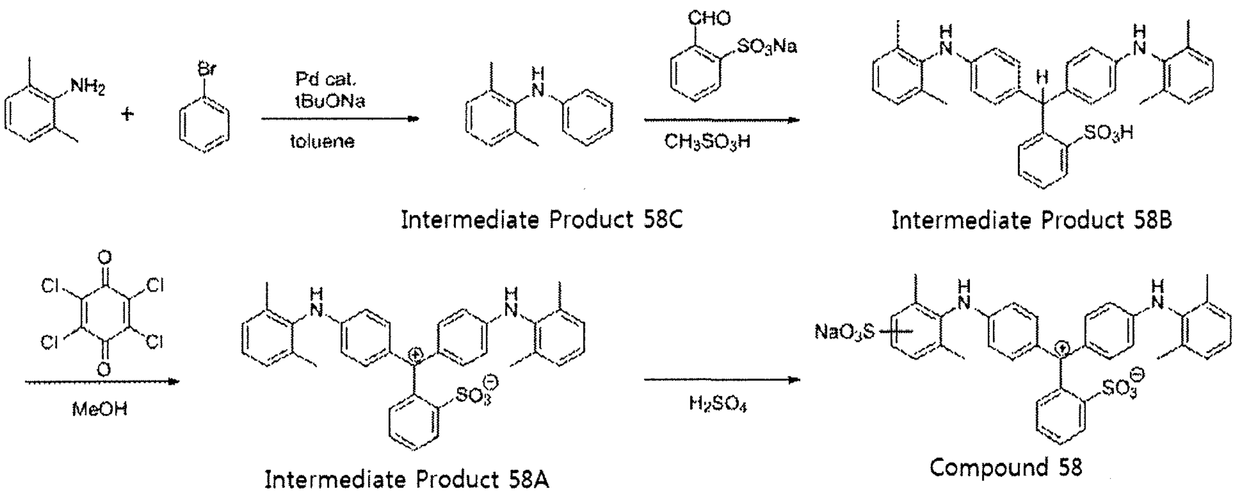

Intermediate Product 58C
Intermediate Product 58B
Intermediate Product 58A
Compound 58

Intermediate Product 58C was obtained using the same method as the method of synthesizing Intermediate Product 20C, except that the reaction was performed after changing 2,4,6-trimethylaniline to 2,6-dimethylaniline.

Intermediate Product 58B was obtained using the same method as the method of synthesizing Intermediate Product 56B, except that the reaction was performed after changing Intermediate Product 56C to Intermediate Product 58C and changing disodium 4-formylbenzene-1,3-disulfonate to sodium sulfobenzaldehyde.

Intermediate Product 58A was obtained using the same method as the method of synthesizing Intermediate Product 56A, except that the reaction was performed after changing Intermediate Product 56B to Intermediate Product 58B.

Compound 58 was obtained using the same method as the method of synthesizing Compound 56, except that the reaction was performed after changing Intermediate Product 56A to Intermediate Product 58A.

Solution absorbance spectrum of Compound 58: λmax=603 nm (aqueous solution)

(Synthesis Example of Compound 59)

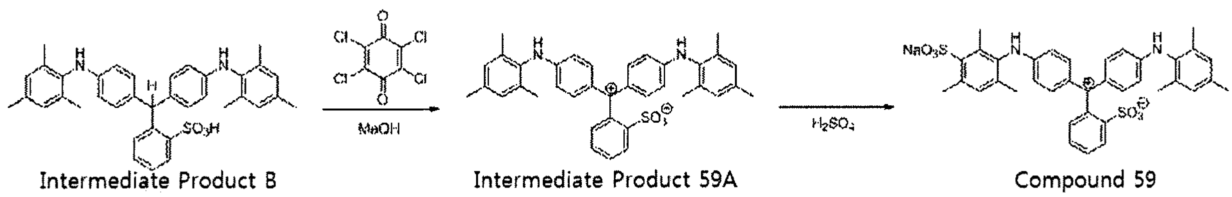


Intermediate Product B        Intermediate Product 59A        Compound 59

Intermediate Product 59A was obtained using the same method as the method of synthesizing Intermediate Product 20A, except that the reaction was performed after changing Intermediate Product 20B to Intermediate Product B.

Compound 59 was obtained using the same method as the method of synthesizing Compound 51, except that the reaction was performed after changing Intermediate Product 51A to Intermediate Product 59A.

Solution absorbance spectrum of Compound 59: λmax=605 nm (aqueous solution)

The measured solution absorbance spectrum of the solution was shown in Fig. 1.

(Synthesis Example of Compound 62)

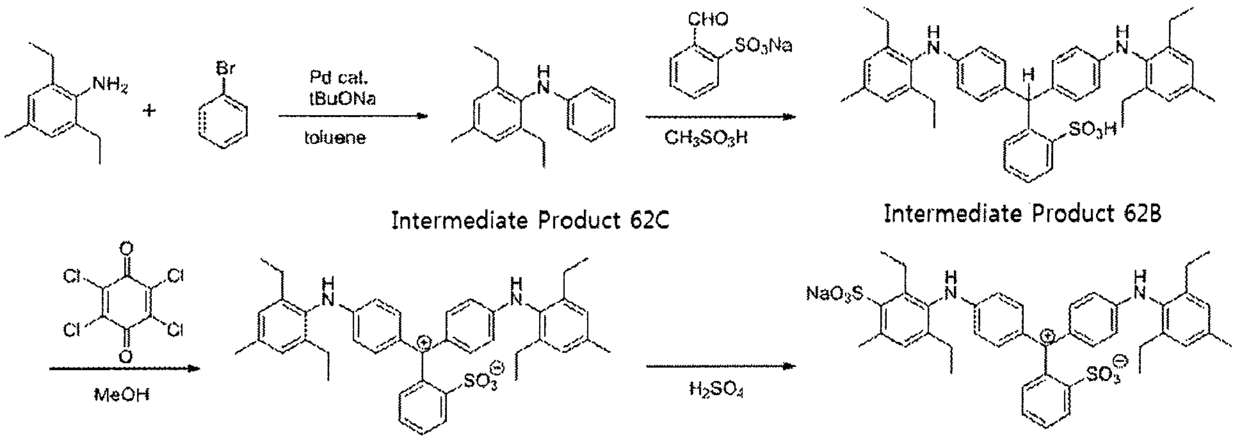


Intermediate Product 62C        Intermediate Product 62B

Intermediate Product 62A        Compound 62

Intermediate Product 62C was obtained using the same method as the method of synthesizing Intermediate Product 20C, except that the reaction was performed after changing 2,4,6-trimethylaniline to 2,6-diethyl-4-methylaniline.

Intermediate Product 62B was obtained using the same method as the method of synthesizing Intermediate Product 58B, except that the reaction was performed after changing Intermediate Product 58C to Intermediate Product 62C.

Intermediate Product 62A was obtained using the same method as the method of synthesizing Intermediate Product 56A, except that the reaction was performed after changing Intermediate Product 56B to Intermediate Product 62B.

Compound 62 was obtained using the same method as the method of synthesizing Compound 56, except that the reaction was performed after changing Intermediate Product 56A to Intermediate Product 62A.

Solution absorbance spectrum of Compound 62: λmax=607 nm (aqueous solution)

(Synthesis Example of Compound 65)

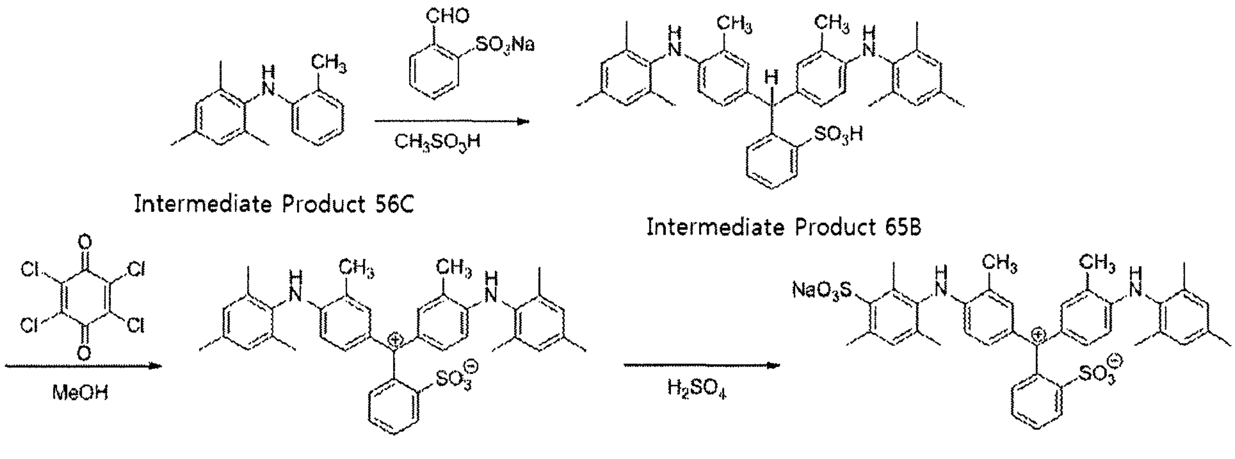


Intermediate Product 56C

Intermediate Product 65B

Intermediate Product 65A

Compound 65

Intermediate Product 65B was obtained using the same method as the method of synthesizing Intermediate Product 58B, except that the reaction was performed after changing Intermediate Product 58C to Intermediate Product 56C.

Intermediate Product 65A was obtained using the same method as the method of synthesizing Intermediate Product 56A, except that the reaction was performed after changing Intermediate Product 56B to Intermediate Product 65B.

Compound 65 was obtained using the same method as the method of synthesizing Compound 56, except that the reaction was performed after changing Intermediate Product 56A to Intermediate Product 65A.

Solution absorbance spectrum of Compound 65: Xmax=611 nm (aqueous solution)

The measured solution absorbance spectrum of the solution was shown in Fig. 1.

(Synthesis Example of Compound 67)

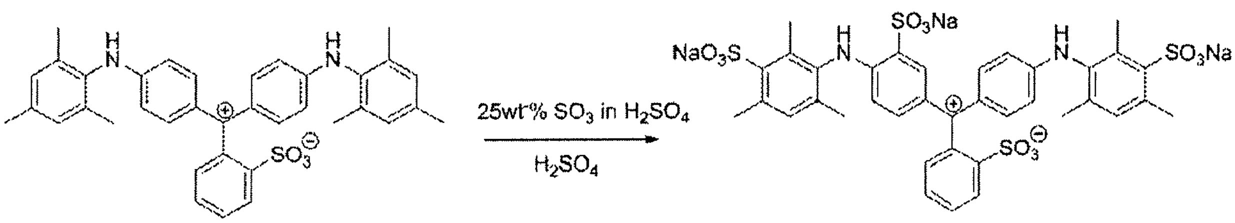


Intermediate Product 59A

Compound 67

15 g of 25 wt% fuming sulfuric acid was added dropwise to 15 g of sulfuric acid. This solution was cooled in iced water, and 3 g of Intermediate Product 59A was added thereto. The reaction solution was stirred at 5°C or lower for 3 hours and then was poured into 150 g of ice. The obtained solution was neutralized to pH 5.5 using a 50% sodium hydroxide aqueous solution, and the solvent was removed by distillation using an evaporator. The obtained crystals were dispersed in methanol, and insoluble matter was removed by filtration. The obtained solution was purified by column

chromatography (filler: SEPHADEX, developing solution: methanol). As a result, 0.8 g of Compound 67 was obtained.

Solution absorbance spectrum of Compound 67: λmax=600 nm (aqueous solution)

(Synthesis Example of Compound 101)

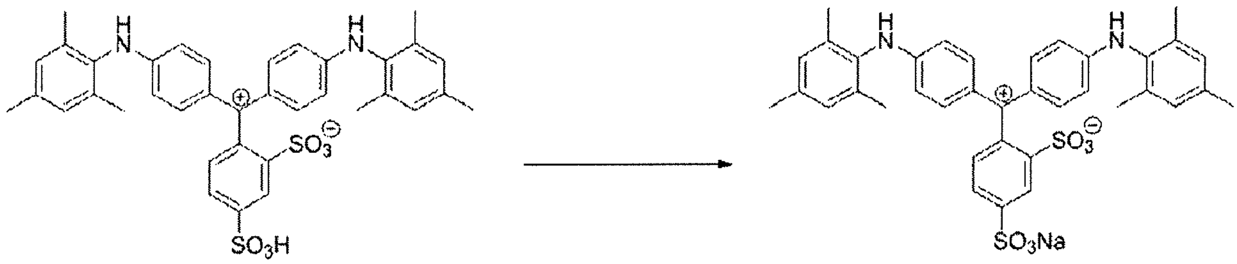

Intermediate Product 20A Compound 101

1 g of Intermediate Product 20A was dissolved in 100 mL of water, and the pH thereof was adjusted to 7.0 using a 0.1 M sodium hydroxide aqueous solution. The obtained solution was purified by column chromatography (filler: SEPHADEX, developing solution: methanol). As a result, 0.8 g of Compound 101 was obtained.

Solution absorbance spectrum of Compound 101: λmax=614 nm (aqueous solution)

(Synthesis Example of Compound 102)

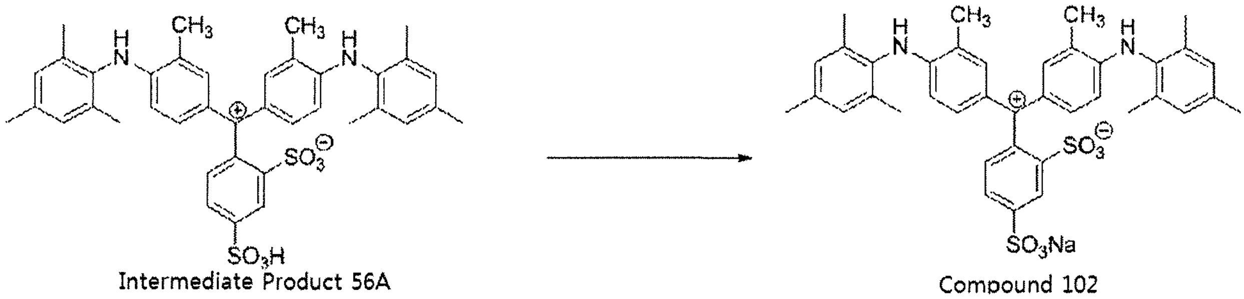

Intermediate Product 56A Compound 102

1 g of Intermediate Product 56A was dissolved in 100 mL of water, and the pH thereof was adjusted to 7.0 using a 0.1 M sodium hydroxide aqueous solution. The obtained solution was purified by column chromatography (filler: SEPHADEX, developing solution: methanol). As a result, 0.7 g of Compound 102 was obtained.

Solution absorbance spectrum of Compound 102: λmax=618 nm (aqueous solution)

(Synthesis of Compound 103)

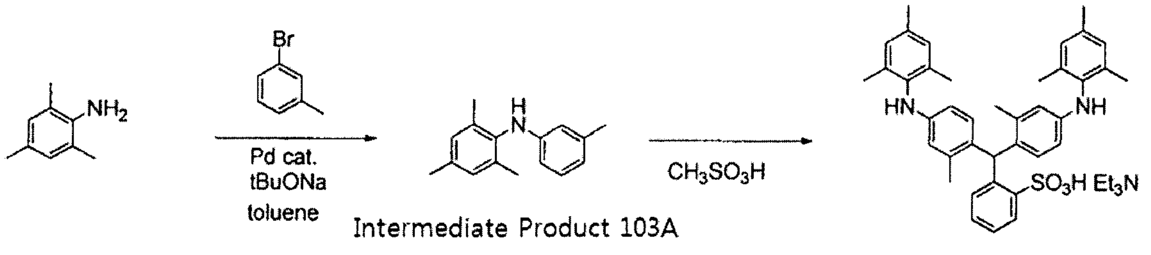


Intermediate Product 103A

Intermediate Product 103B

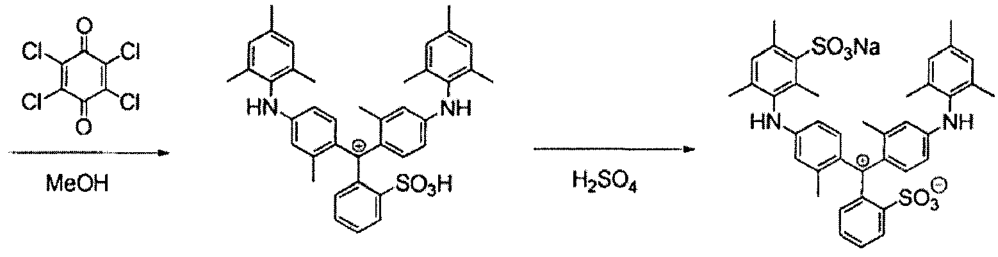


Intermediate Product 103C

Compound 103

21 g of 2,4,6-trimethylaniline, 24 g of 3-bromotoluene, 14.4 g of t-butoxysodium, and 200 mL of toluene were put into a flask and were sufficiently stirred in a nitrogen gas flow. 45 mg of palladium acetate and 210 mg of tri-t-butylphosphonium tetraphenylborate complex ($tBu_3P\text{-}HBPh_4$) were added to the solution, and the reaction solution was heated to 110°C and was stirred for 3 hours. The obtained reaction solution was cooled, water was poured thereinto, and the solution was extracted with ethyl acetate. The obtained organic phase was dried with sodium sulfate and was condensed. Next, the condensate was purified by silica gel column chromatography (developing solution: ethyl acetate/hexane=1/20). As a result, 35 g of Intermediate Product 103A was obtained.

29 g of Intermediate Product 103A, 10 g of sodium 2-sulfobenzaldehyde, and 100 mL of methanesulfonic acid were put into a flask and were stirred at 100°C for 12 hours. The obtained reaction solution was poured into 600 mL of iced water, and the obtained crystals were separated by filtration. The crystals were dissolved in 400 mL of isopropyl alcohol, 50 mL of triethylamine was added, and the solution was condensed under reduced pressure. The obtained residue was added to 200 mL of acetonitrile, and the precipitated crystals were separated by filtration. As a result, 23.5 g of Intermediate Product 103B was obtained.

10 g of Intermediate Product 103B, 4.1 g of chloranil, 50 mL of methanol, and 2 mL of concentrated hydrochloric acid were mixed with each other, and the mixture was stirred at 50°C for 48 hours. The obtained crystals were separated by filtration. As a result, 6 g of Intermediate Product 103C was obtained.

5.1 g of Intermediate Product 103C and 50 mL of sulfuric acid was mixed with each other, and the mixture was stirred at room temperature for 20 hours. The reaction solution was poured into 200 g of iced water, and a coarse body of the precipitated Compound 103 was separated by filtration. The coarse body of Compound 103 was dissolved in methanol, and the solution was neutralized with sodium acetate and was purified by column chromatography (filler: SEPHADEX, developing solution: methanol). As a result, 1 g of Compound 103 was obtained.

Solution absorbance spectrum of Compound 103: $\lambda max=627$ nm, $\varepsilon=68900$ $L \cdot mol^{-1} \cdot cm^{-1}$ (aqueous solution)
ESI-mass spectrum (Posi): 696.2 (M-Na+2H)

(Synthesis of Compound 104)

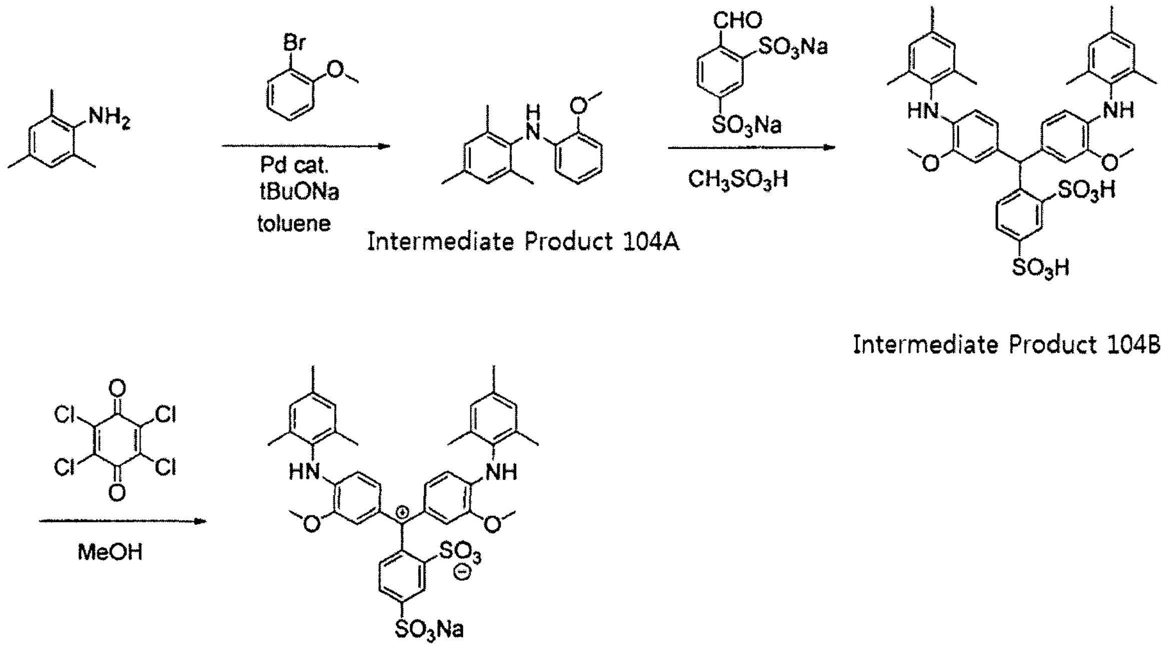


Intermediate Product 104A

Intermediate Product 104B

Compound 104

13.2 g of 2,4,6-trimethylaniline, 18.7 g of 2-bromoanisole, 20 g of t-butoxysodium, and 150 mL of toluene were put into a flask and were sufficiently stirred in a nitrogen gas flow. 90 mg of palladium acetate and 340 mg of tri-t-butylphosphonium tetraphenylborate complex ($tBu_3P\text{-}HBPh_4$) were added to the solution, and the reaction solution was heated to 110°C and was stirred for 3 hours. The obtained reaction solution was cooled, water was poured thereinto, and the solution was extracted with ethyl acetate. The obtained organic phase was dried with sodium sulfate and was condensed. 50 mL of methanol was added to the obtained oil, 10 mL of water was further added thereto, and the precipitated crystals were separated by filtration. As a result, 9 g of Intermediate Product 104A was obtained.

1.2 g of Intermediate Product 104A, 0.6 g of disodium 4-formylbenzene-1,3-disulfonate, and 8 mL of methanesulfonic acid were put into a flask and were stirred at 110°C for 10 hours. The obtained reaction solution was poured into 120 mL of ethyl acetate. The organic phase was removed by decantation, 50 mL of ethyl acetate was added to the obtained gummy oil, the solution was stirred, and the obtained crystals were separated by filtration. As a result, 1.2 g of Intermediate Product 104B was obtained.

7.3 g of Intermediate Product 104B, 3 g of chloranil, and 70 mL of methanol were mixed with each other, and the mixture was stirred for 1 hour. The reaction solution was neutralized to pH=5 with sodium acetate and was purified by column chromatography (filler: SEPHADEX, developing solution: methanol). As a result, 2 g of Compound 104 was obtained.

Solution absorbance spectrum of Compound 104: $\lambda max$=650 nm (aqueous solution)
ESI-mass spectrum (Posi): 728.2 (M-Na+2H)

(Synthesis of Compound 105)

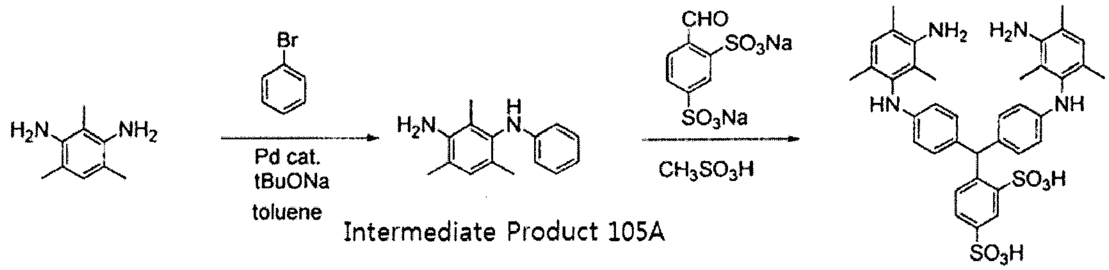


Intermediate Product 105A

Intermediate Product 105B

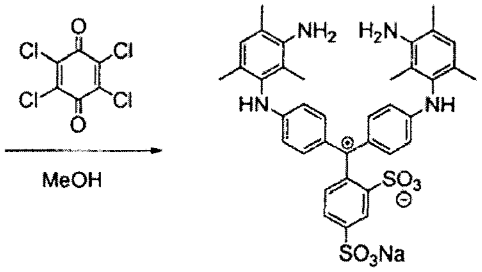


Compound 105

22.6 g of 2,4,6-trimethyl-1,3-phenylenediamine, 15.7 g of 2-bromobenzene, 20 g of t-butoxysodium, and 200 mL of toluene were put into a flask and were sufficiently stirred in a nitrogen gas flow. 90 mg of palladium acetate and 340 mg of tri-t-butylphosphonium tetraphenylborate complex ($tBu_3P$-$HBPh_4$) were added to the solution, and the reaction solution was heated to 110°C and was stirred for 10 hours. Organic matter was extracted from the obtained mixture using ethyl acetate and was purified by silica gel column chromatography. As a result, 11.2 g of Intermediate Product 105A was obtained in the form of crystals.

9.6 g of Intermediate Product 105A, 6.6 g of disodium 4-formylbenzene-1,3-disulfonate, and 100 mL of methanesulfonic acid were put into a flask and were stirred at 110°C for 5 hours. The obtained reaction solution was poured into 400 mL of saturated saline solution. The precipitated crystals were separated by filtration. As a result, 49 g of Intermediate Product 105B was obtained in the form of a wet cake (containing a large amount of saline).

15 g of the wet cake of Intermediate Product 105B, 2 g of chloranil, and 100 mL of methanol were mixed with each other, and the mixture was stirred at 50°C for 6 hours. The precipitated crystals were separated by filtration and were added to 50 mL of methanol. The solution was neutralized to pH=5 by adding sodium acetate. Solid matter was removed by filtration from the obtained mixture. The obtained solution was purified by column chromatography (filler: SEPHADEX, developing solution: methanol). As a result, 1.8 g of Compound 105 was obtained.

Solution absorbance spectrum of Compound 105: $\lambda max=616$ nm, $\varepsilon=100700$ $L \cdot mol^{-1} \cdot cm^{-1}$ (aqueous solution)

The measured solution absorbance spectrum was shown in Fig. 2.

ESI-mass spectrum (Posi): 698.2 (M-Na+2H)

(Synthesis of Compound 106 and Compound 107)

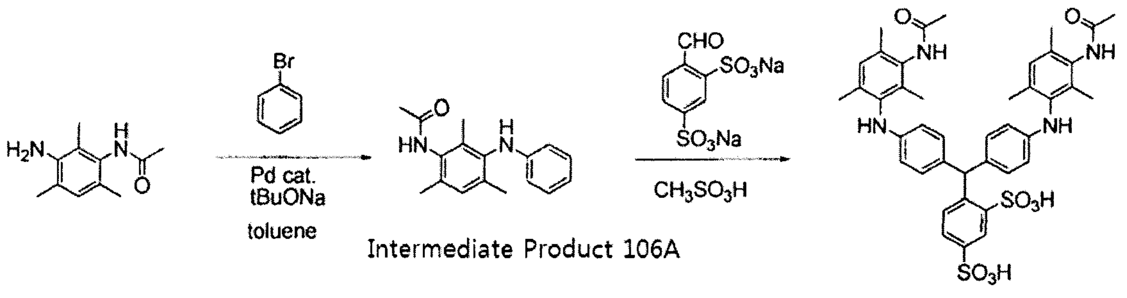


Intermediate Product 106A

Intermediate Product 106B

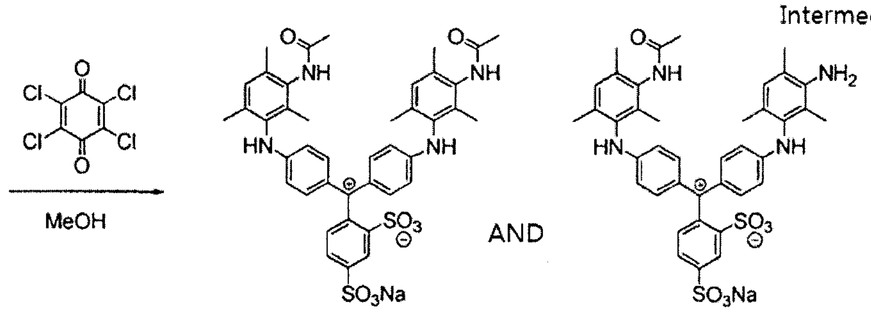


AND

Compound 106

Compound 107

19.2 g of 3-acetylamino-2,4,6-trimethylaniline, 20.3 g of 2-bromobenzene, 20 g of t-butoxysodium, and 200 mL of toluene were put into a flask and were sufficiently stirred in a nitrogen gas flow. 90 mg of palladium acetate and 340 mg of tri-t-butylphosphonium tetraphenylborate complex ($tBu_3P\text{-}HBPh_4$) were added to the solution, and the reaction solution was heated to 110°C and was stirred for 10 hours. The obtained reaction solution was cooled, water was poured thereinto, and the solution was extracted with ethyl acetate. The obtained organic phase was dried with sodium sulfate and was condensed. 50 mL of n-hexane was added to the condensate, and the precipitated crystals were separated by filtration. As a result, 22 g of Intermediate Product 106A was obtained.

5.4 g of Intermediate Product 106A, 3.1 g of disodium 4-formylbenzene-1,3-disulfonate, and 50 mL of methanesulfonic acid were put into a flask and were stirred at 100°C for 20 hours. The obtained reaction solution was poured into 200 mL of saturated saline solution. The precipitated crystals were separated by filtration. As a result, 25.4 g of Intermediate Product 106B (containing a large amount of saline) was obtained.

23 g of Intermediate Product 106B (containing a large amount of saline), 3 g of chloranil, 300 mL of methanol, and 2.5 mL of concentrated hydrochloric acid were mixed with each other, and the mixture was stirred at room temperature for 6 hours. The reaction solution was neutralized to pH=5 by adding sodium acetate. Solid matter was removed by filtration from the obtained mixture. The obtained solution was purified by column chromatography (filler: SEPHADEX, developing solution: methanol). As a result, 0.4 g of Compound 106 and 0.3 g of Compound 107, which was a by-product obtained by hydrolysis of one acetyl group, were obtained.

Solution absorbance spectrum of Compound 106: $\lambda max$=613 nm, $\varepsilon$=84800 $L\cdot mol^{-1}\cdot cm^{-1}$ (aqueous solution)
ESI-mass spectrum (Posi): 782.2 (M-Na+2H)
Solution absorbance spectrum of Compound 107: $\lambda max$=614 nm, $\varepsilon$=82300 $L\cdot mol^{-1}\cdot cm^{-1}$ (aqueous solution)
ESI-mass spectrum (Posi): 740.2 (M-Na+2H)

(Synthesis of Compound 108)

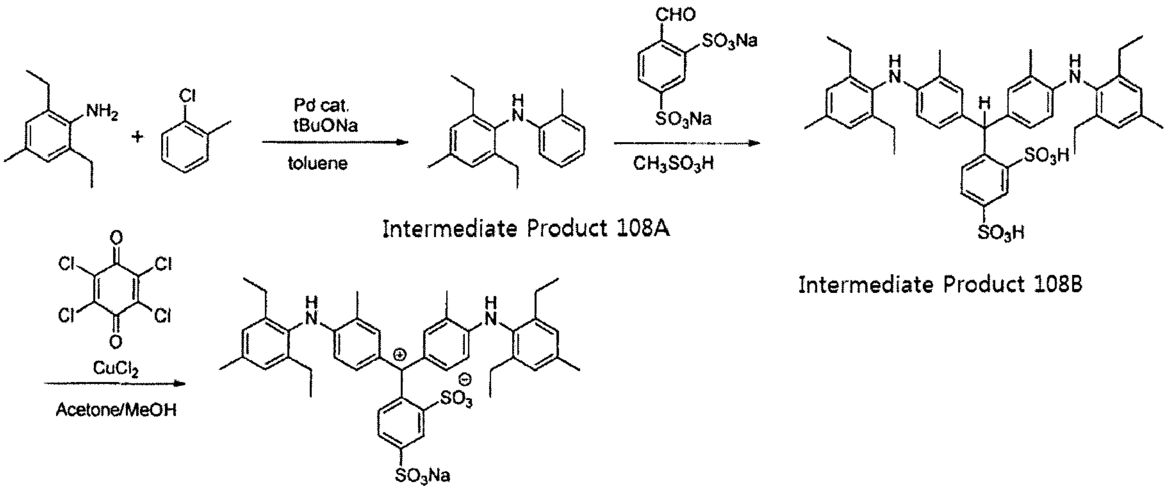


Intermediate Product 108A

Intermediate Product 108B

Compound 108

65 g of 2,6-diethyl-4-methylaniline, 50 g of 2-chlorotoluene, 92 g of t-butoxysodium, and 500 mL of toluene were put into a flask and were sufficiently stirred in a nitrogen gas flow. 90 mg of palladium acetate and 340 mg of tri-t-butylphosphonium tetraphenylborate complex ($tBu_3P-HBPh_4$) were added to the solution, and the reaction solution was heated to 110°C and was stirred for 3 hours. The obtained reaction solution was cooled, water was poured thereinto, and the solution was extracted with ethyl acetate. The obtained organic phase was dried with sodium sulfate and was condensed. Next, the condensate was purified by silica gel column chromatography (developing solution: ethyl acetate/hexane=1/20). As a result, 100 g of Intermediate Product 108A was obtained.

8 g of Intermediate Product 108A, 5 g of disodium 4-formylbenzene-1,3-disulfonate, and 50 mL of methanesulfonic acid were put into a flask and were stirred at 100°C for 6 hours. The obtained reaction solution was poured into 400 mL of iced water, and the obtained crystals of Intermediate Product 108B were separated by filtration (6 g).

5 g of Intermediate Product 108B, 1.7 g of chloranil, 80 mL of acetone, and 80 mL of methanol were mixed with each other, and the mixture was stirred for 5 hours. The obtained crystals were separated by filtration. As a result, 7 g of a coarse body of Compound 108 was obtained.

7 g of the coarse body of Compound 108 was dissolved in methanol, and the solution was neutralized with sodium acetate and was purified by column chromatography (filler: SEPHADEX, developing solution: methanol). As a result, 3 g of Compound 108 was obtained.

Solution absorbance spectrum of Compound 108: $\lambda$max=620 nm, $\varepsilon$=84700 $L \cdot mol^{-1} \cdot cm^{-1}$ (aqueous solution)
ESI-mass spectrum (Posi): 752.3 (M-Na+2H)
$^1$H NMR: $\delta$=9.08 (s,2H), 8.18 (s,1H), 7.61 (d,1H), 7.17 (d,2H), 7.11 (s,2H), 7.07 (s,4H), 6.92 (d,1H), 6.08 (d,2H), 2.41 (q,8H), 2.26 (s,6H), 2.10 (s,6H), 1.16 (t,12H), 400 MHz in DMSO-d6

(Synthesis of Compound 109)

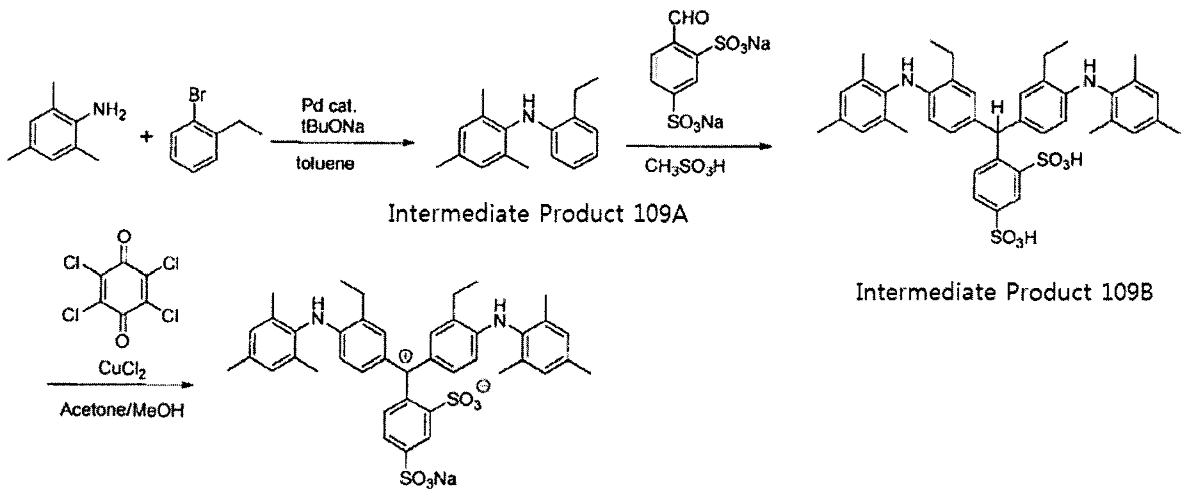


Intermediate Product 109A

Intermediate Product 109B

Compound 109

18 g of 2,4,6-trimethylaniline, 25 g of 1-bromo-2-ethylbenzene, 31 g of t-butoxysodium, and 250 mL of toluene were put into a flask and were sufficiently stirred in a nitrogen gas flow. 30 mg of palladium acetate and 115 mg of tri-t-butylphosphonium tetraphenylborate complex ($tBu_3P$-$HBPh_4$) were added to the solution, and the reaction solution was heated to 110°C and was stirred for 3 hours. The obtained reaction solution was cooled, water was poured thereinto, and the solution was extracted with ethyl acetate. The obtained organic phase was dried with sodium sulfate and was condensed. Next, the condensate was purified by silica gel column chromatography (developing solution: ethyl acetate/hexane=1/20). As a result, 30 g of Intermediate Product 109A was obtained.

8 g of Intermediate Product 109A, 5 g of disodium 4-formylbenzene-1,3-disulfonate, and 50 mL of methanesulfonic acid were put into a flask and were stirred at 100°C for 6 hours. The obtained reaction solution was poured into 400 mL of iced water, and the obtained crystals of Intermediate Product 109B were separated by filtration (17 g).

7 g of Intermediate Product 109B, 2.3 g of chloranil, 110 mL of acetone, and 110 mL of methanol were mixed with each other, and the mixture was stirred for 9 hours. The obtained crystals were separated by filtration. As a result, 7 g of a coarse body of Compound 109 was obtained.

7 g of the coarse body of Compound 109 was dissolved in methanol, and the solution was neutralized with sodium acetate and was purified by column chromatography (filler: SEPHADEX, developing solution: methanol). As a result, 1 g of Compound 109 was obtained.

Solution absorbance spectrum of Compound 109: $\lambda$max=620 nm, $\varepsilon$=90800 $L \cdot mol^{-1} \cdot cm^{-1}$ (aqueous solution)
ESI-mass spectrum (Posi): 724.3 (M-Na+2H)
$^1H$ NMR: $\delta$=9.14 (s,2H), 8.18 (s,1H), 7.60 (d,1H), 7.20 (s,1H), 7.17 (d,2H), 7.05 (s,4H), 6.95 (s,1H), 6.94 (d,1H), 6.09 (d,2H), 2.67 (q,4H), 2.29 (s,6H), 2.10 (s,12H), 1.20 (t,6H), 400 MHz in DMSO-d6

(Synthesis of Compound 110)

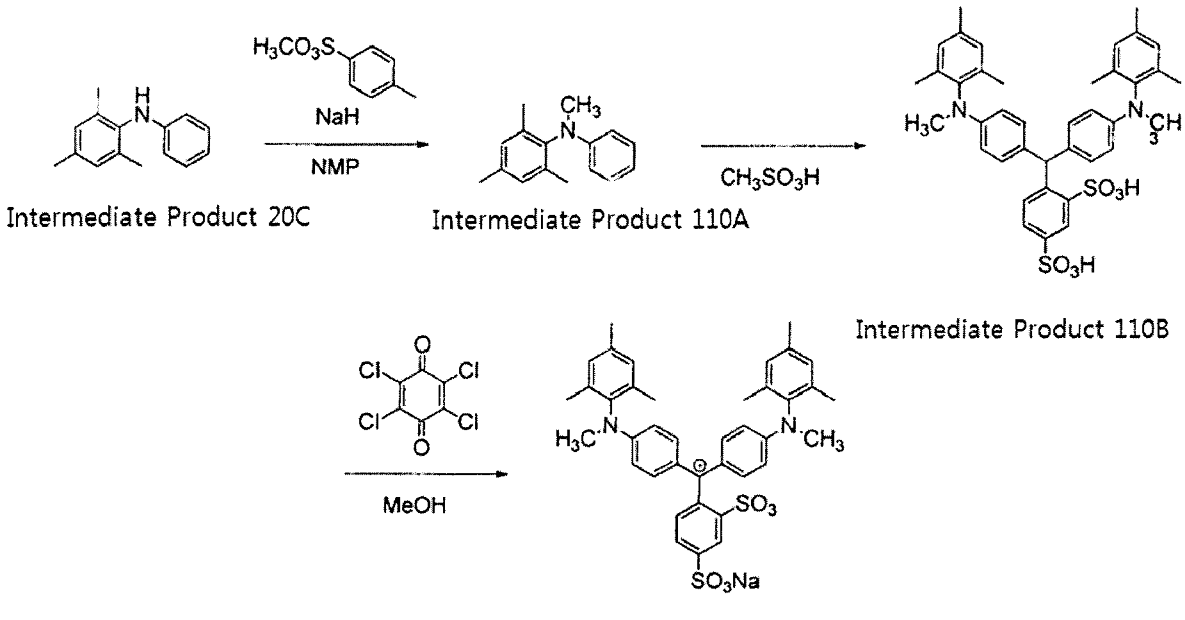


Intermediate Product 20C

Intermediate Product 110A

Intermediate Product 110B

Compound 110

3.0 g of sodium hydride (60% oil dispersion) was added to 50 mL of N-methylpyrrolidone, and the solution was stirred for 10 minutes. Next, 10.6 g of Intermediate Product 20C was added to the solution, and then 11.2 g of methyl p-toluenesulfonate was further added thereto. The reaction solution was stirred at 100°C for 2 hours. The reaction solution was cooled to room temperature and was added dropwise to water. Organic matter was extracted from the obtained mixture using ethyl acetate and was purified by silica gel column chromatography. As a result, 6.7 g of Intermediate Product 110A was obtained in the form of oil.

5.2 g of Intermediate Product 110A, 3.6 g of disodium 4-formylbenzene-1,3-disulfonate, and 25 mL of methanesulfonic acid were mixed with each other, and the mixture was stirred at 100°C for 3 hours. The obtained reaction solution was poured into 120 mL of a saturated saline solution, and the precipitated crystals were separated by filtration. As a result, 16.6 g of Intermediate Product 110B (containing a large amount of saline) was obtained.

13.7 g of Intermediate Product 110B (containing a large amount of saline), 3.5 g of chloranil, and 100 mL of methanol were mixed with each other, and 2 mL of concentrated hydrochloric acid was added to the mixture. The mixture was stirred at room temperature for 1 day, and sodium acetate was added thereto until the pH of the mixture reached 5. Insoluble matter was removed by filtration, and the obtained solution was purified by column chromatography (filler: SEPHADEX, developing solution: methanol). As a result, 5 g of Compound 110 was obtained.

Solution absorbance spectrum of Compound 110: $\lambda max=633$ nm, $\varepsilon=108200$ $L \cdot mol^{-1} \cdot cm^{-1}$ (aqueous solution)

The measured solution absorbance spectrum was shown in Fig. 2.

ESI-mass spectrum (Posi): 696.23 (M-Na+2H)

(Synthesis of Compound 201)

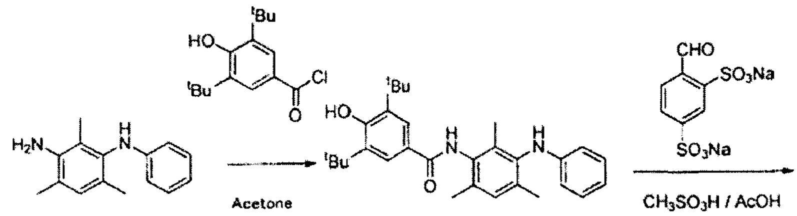


Compound 105A

Intermediate Product 201B

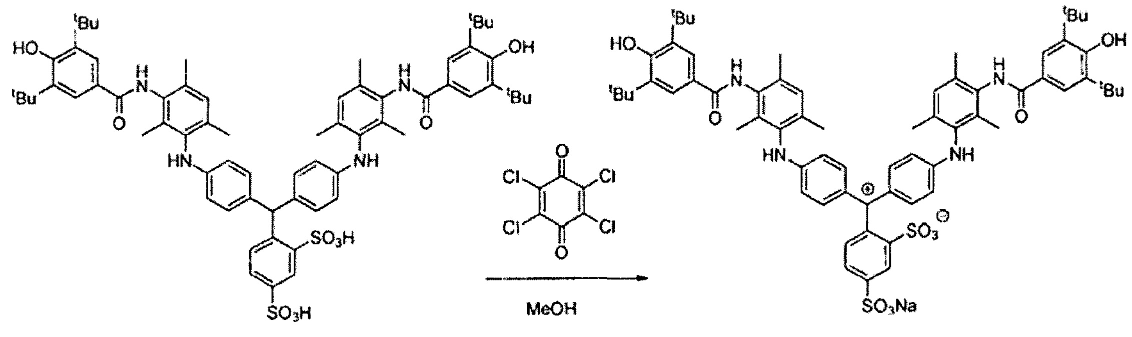


Intermediate Product 201C

Compound 201

6.0 g of Intermediate Product 105A was dissolved in 240 mL of acetone, and the solution was cooled to 0°C. Next, 7.2 g of 3,5-di-tert-butyl-4-hydroxybenzoylchloride was dividedly added to the solution. The reaction solution was stirred for 30 minutes and then was condensed, and column chromatography was performed. As a result, 8.5 g of Intermediate Product 201B was obtained.

3.3 g of 201B, 1.4 g of disodium 4-formylbenzene-1,3-disulfonate, 30 mL of acetic acid, and 2 mL of methanesulfonic acid were mixed with each other, and the mixture was stirred for 3 hours. The obtained reaction solution was poured into 120 g of iced water, and the precipitated crystals were separated by filtration. As a result, 6.6 g of Intermediate Product 201C (containing a large amount of saline) was obtained.

6.6 g of Intermediate Product 201C, 2.5 g of chloranil, and 100 mL of methanol were mixed with each other, and the mixture was stirred at room temperature for 3 hours. The reaction solution was neutralized to pH=5 by adding sodium acetate. Solid matter was removed by filtration from the obtained mixture. The obtained solution was purified by column chromatography (filler: SEPHADEX, developing solution: methanol). As a result, 3.8 g of Compound 201 was obtained.

Absorbance spectrum of the aqueous solution of Compound 201: $\lambda$max=614 nm, $\varepsilon$=6.32·$10^4$ L·$mol^{-1}$·$cm^{-1}$
ESI-mass spectrum (Posi): 1142.6 (M-Na+2H)
$\sigma$=10.08 (s,2H), 9.66 (s,2H), 8.18 (s,1H), 7.78 (s,4H), 10.08 (s,2H), 7.63 (s,2H), 7.48 (s,2H), 7.34 (d,4H), 7.17 (s,2H), 7.10 (d,2H), 6.97 (d,2H), 6.11 (d,2H), 2.18 (s,6H), 2.15 (s,6H), 2.01 (s,6H), 1.42 (s,6H), 400 MHz in DMSO-d6

(Synthesis of Compound 202)

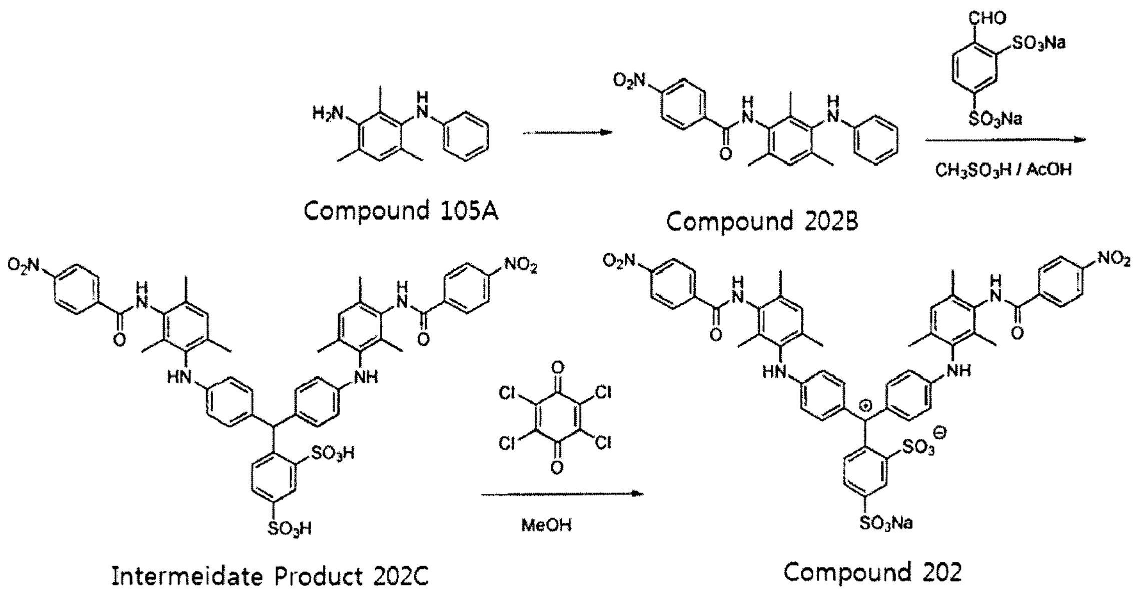


Compound 105A

Compound 202B

Intermeidate Product 202C

Compound 202

11.0 g of Intermediate Product 105A was dissolved in 300 mL of acetone, and the solution was cooled to 0°C. Next, 9.0 g of 4-nitrobenzoyl chloride was dividedly added to the solution. The reaction solution was stirred for 30 minutes and then was condensed, and column chromatography was performed. As a result, 12.5 g of Intermediate Product 202B was obtained.

6.6 g of 202B, 2.8 g of disodium 4-formylbenzene-1,3-disulfonate, 60 mL of acetic acid, and 4 mL of methanesulfonic acid were mixed with each other, and the mixture was stirred for 3 hours. The obtained reaction solution was poured into 120 g of iced water, and the precipitated crystals were separated by filtration. As a result, 6.0 g of Intermediate Product 202C (containing a large amount of saline) was obtained.

6.0 g of intermediate product 202C, 2 g of chloranil, and 100 mL of methanol were mixed with each other, and the mixture was stirred at 0°C for 6 hours. The precipitated crystals were separated by filtration and were added to 50 mL of methanol. The solution was neutralized to pH=5 by adding sodium acetate. Solid matter was removed by filtration from the obtained mixture. The obtained solution was purified by column chromatography (filler: SEPHADEX, developing solution: methanol). As a result, 2.8 g of Compound 202 was obtained.

Absorbance spectrum of the aqueous solution of Compound 202: $\lambda$max=613 nm, $\varepsilon=8.12\cdot10^4$ $L\cdot mol^{-1}\cdot cm^{-1}$
ESI-mass spectrum (Posi): 975.3 (M-Na+2H)
$\sigma$=10.26 (s,1H), 10.25 (s,1H), 10.78 (s,1H), 10.75 (s,1H), 8.38 (d,4H), 8.24 (d,4H), 8.19 (s,1H), 7.64 (d,1H), 7.35 (d,4H), 7.20 (s,2H), 7.12 (d,2H), 6.98 (d,1H), 6.12 (d,2H), 2.21 (s,6H), 2.16 (s,6H), 2.03 (s,6H), 400 MHz in DMSO-d6

(Synthesis of Compound 302)

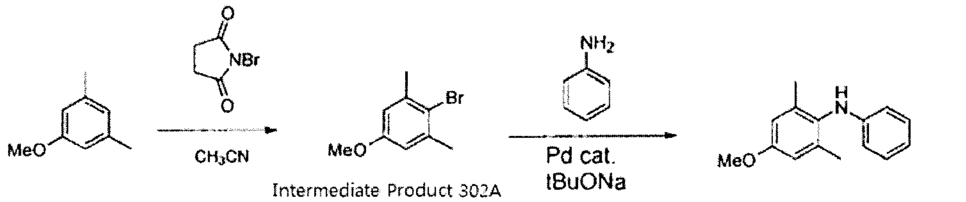


Intermediate Product 302A

Intermediate Procut 302B

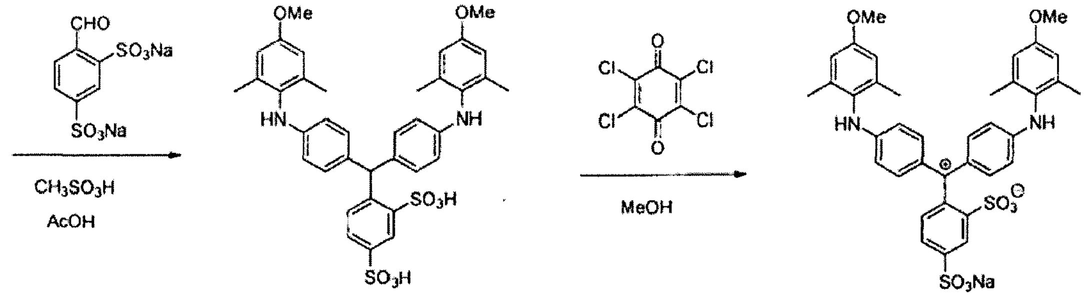


Intermediate Product 302C

Compound 302

13.6 g of 1,3-dimethyl-5-methoxybenzene, 19.8 g of N-bromosuccinimide, and 100 mL of acetonitrile were stirred under ice cooling and was further stirred at room temperature for 10 hours. Water is added to the obtained reaction solution, the solution was extracted with ethyl acetate, and a collected organic phase was condensed. As a result, 25 g of Intermediate Product 302A was obtained.

18.7 g of Intermediate Product 302A, 9.2 g of aniline, 17.3 g of t-butoxysodium, and 200 mL of toluene were put into a flask and were sufficiently stirred in a nitrogen gas flow. 45 mg of palladium acetate and 200 mg of tri-t-butylphosphonium tetraphenylborate complex ($tBu_3P\text{-}HBPh_4$) were added to the solution, and the reaction solution was heated to 110°C and was stirred for 3 hours. The obtained reaction solution was cooled, water was poured thereinto, and the solution was extracted with ethyl acetate. The obtained organic phase was dried with sodium sulfate and was condensed. The obtained residue was purified by silica gel column chromatography. As a result, 8.0 g of Intermediate Product 302B was obtained.

2.3 g of Intermediate Product 302B, 1.6 g of disodium 4-formylbenzene-1,3-disulfonate, 20 mL of acetic acid, and 0.5 mL of methanesulfonic acid were put into a flask and were stirred at room temperature for 1 hour. The obtained reaction solution was poured into 100 mL of acetonitrile. The precipitated crystals were separated by filtration. As a result, Intermediate Product 302C was obtained. The entire amount of the obtained Intermediate Product 302C, 1.5 g of chloranil, and 100 mL of methanol were mixed with each other, and the mixture was stirred at room temperature for 1 hour. The reaction solution was neutralized to pH=5 by adding sodium acetate. Solid matter was removed by filtration from the obtained mixture. The obtained solution was purified by column chromatography (filler: SEPHADEX, developing solution: methanol). As a result, 0.8 g of Compound 302 was obtained. ESI-MS (Posi) of the obtained compound was 701.2 (M-Na+2H). The absorbance spectrum of the aqueous solution was as follows: $\lambda max=614$ nm, $\varepsilon=9.57\cdot10^4$ $L\cdot mol^{-1}\cdot cm^{-1}$.

(Synthesis of Compound 303)

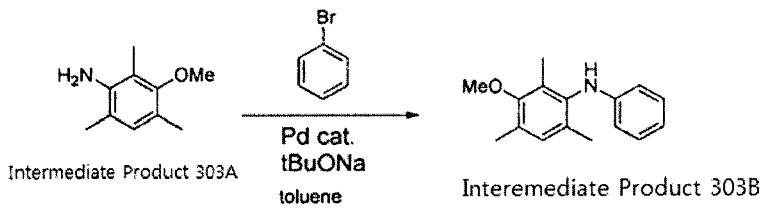


Intermediate Product 303A

Interemediate Product 303B

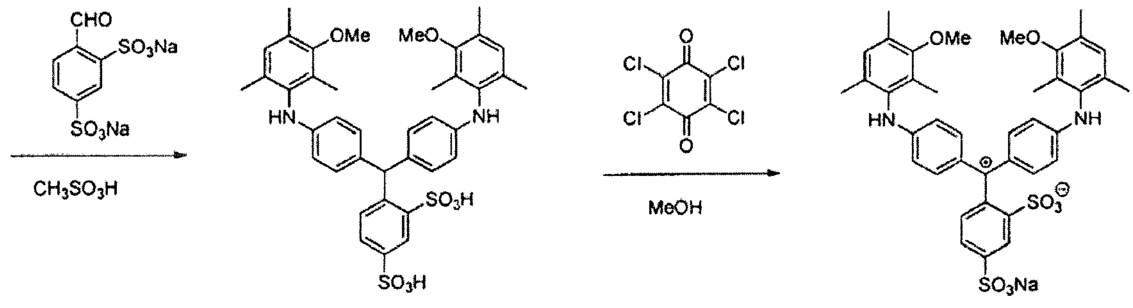


Interemediate Product 303C

Compound 303

Intermediate Product 303A was synthesized using a method described in J. Med. Chem., 1999, 43, 4485.

4.5 g of Intermediate Product 302A, 4.3 g of bromobenzene, 5.3 g of t-butoxysodium, and 50 mL of toluene were put into a flask and were sufficiently stirred in a nitrogen gas flow. 45 mg of palladium acetate and 200 mg of tri-t-butylphosphonium tetraphenylborate complex ($tBu_3P-HBPh_4$) were added to the solution, and the reaction solution was heated to 110°C and was stirred for 3 hours. The obtained reaction solution was cooled, water was poured thereinto, and the solution was extracted with ethyl acetate. The obtained organic phase was dried with sodium sulfate and was condensed. The obtained residue was purified by silica gel column chromatography. As a result, 5.5 g of Intermediate Product 303B was obtained.

3.1 g of Intermediate Product 303B, 2.0 g of disodium 4-formylbenzene-1,3-disulfonate, 25 mL of acetic acid, and 0.5 mL of methanesulfonic acid were put into a flask and were stirred at room temperature for 3 hours. The obtained reaction solution was poured into 300 mL of ethyl acetate. The precipitated crystals were separated by filtration. As a result, Intermediate Product 303C was obtained. The entire amount of the obtained Intermediate Product 303C, 4.0 g of chloranil, and 100 mL of methanol were mixed with each other, and the mixture was stirred under reflux for 10 minutes. The reaction solution was cooled to room temperature and then was neutralized to pH=5 by adding sodium acetate. Solid matter was removed by filtration from the obtained mixture. The obtained solution was purified by column chromatography (filler: SEPHADEX, developing solution: methanol). As a result, 0.2 g of Compound 303 was obtained. ESI-MS (Posi) of the obtained compound was 729.2 (M-Na+2H). The absorbance spectrum of the aqueous solution was as follows: $\lambda$max=613 nm, $\varepsilon$=9.05·$10^4$ L·$mol^{-1}$·$cm^{-1}$.

(Synthesis of Compound 401)

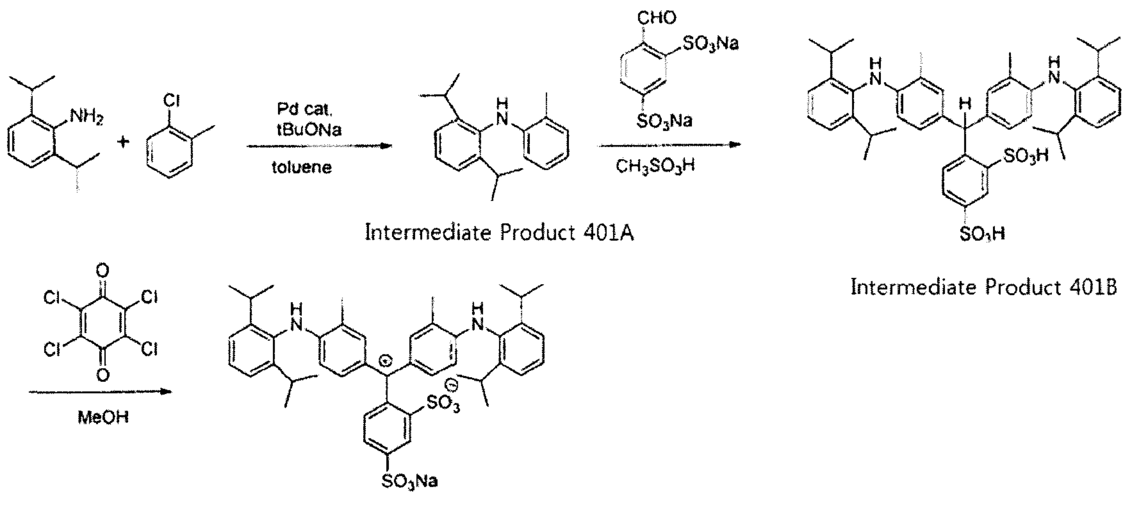


Intermediate Product 401A

Intermediate Product 401B

Compound 401

9.0 g of 2,6-diisopropylaniline, 6.3 g of 2-chlorotoluene, 11 g of t-butoxysodium, and 75 mL of toluene were put into a flask and were sufficiently stirred in a nitrogen gas flow. 12 mg of palladium acetate and 43 mg of 1,3-bis(2,6-diisopropylphenyl)imidazolium chloride were added to the solution, and the reaction solution was heated to 110°C and was stirred for 3 hours. The obtained reaction solution was cooled, water was poured thereinto, and the solution was extracted with ethyl acetate. The obtained organic phase was dried with sodium sulfate and was condensed. Next, the condensate was purified by silica gel column chromatography (developing solution: ethyl acetate/hexane=1/20). As a result, 12 g of Intermediate Product 401A was obtained.

12 g of Intermediate Product 401A, 7 g of disodium 4-formylbenzene-1,3-disulfonate, and 60 mL of methanesulfonic acid were put into a flask and were stirred at 60°C for 6 hours. The obtained reaction solution was poured into 300 mL of iced water, and the obtained crystals of Intermediate Product 401B were separated by filtration (6 g).

5 g of Intermediate Product 401B, 1.7 g of chloranil, and 80 mL of methanol were mixed with each other, and the mixture was stirred for 5 hours. The obtained crystals were separated by filtration. As a result, 5 g of a coarse body of Compound 401 was obtained.

5 g of the coarse body of Compound 401 was dissolved in methanol, and the solution was neutralized with sodium acetate and was purified by column chromatography (filler: SEPHADEX, developing solution: methanol). As a result, 3 g of Compound 401 was obtained.

Solution absorbance spectrum of Compound 401: $\lambda max=618$ nm, $\varepsilon=71700$ $L\text{-}mol^{-1}\cdot cm^{-1}$ (aqueous solution)

ESI-mass spectrum (Posi): 782.3 (M-Na+2H)

$^1H$ NMR: $\delta=8.64$ (s,1H), 7.96 (d,1H), 7.42 to 7.17 (m,10H), 6.18 (d,2H), 2.98 (dt,4H), 2.33 (s,6H), 1.20 (t,12H), 1.11 (t,12H), 400 MHz in MeOH-d4

(Synthesis of Compound 402)

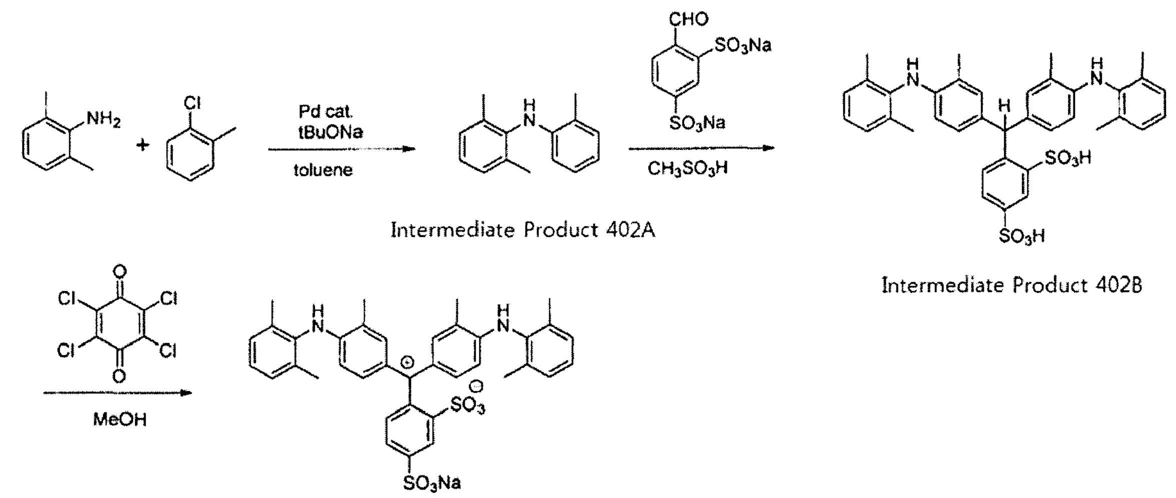


Intermediate Product 402A

Intermediate Product 402B

Compound 402

24 g of 2,6-dimethylaniline, 25 g of 2-chlorotoluene, 42 g of t-butoxysodium, and 300 mL of toluene were put into a flask and were sufficiently stirred in a nitrogen gas flow. 50 mg of palladium acetate and 170 mg of 1,3-bis(2,6-diisopropylphenyl)imidazolium chloride were added to the solution, and the reaction solution was heated to 110°C and was stirred for 3 hours. The obtained reaction solution was cooled, water was poured thereinto, and the solution was extracted with ethyl acetate. The obtained organic phase was dried with sodium sulfate and was condensed. Next, the condensate was purified by silica gel column chromatography (developing solution: ethyl acetate/hexane=1/20). As a result, 40 g of Intermediate Product 402A was obtained.

10 g of Intermediate Product 402A, 13 g of disodium 4-formylbenzene-1,3-disulfonate, and 100 mL of methanesulfonic acid were put into a flask and were stirred at 60°C for 6 hours. The obtained reaction solution was poured into 300 mL of iced water, and the obtained crystals of Intermediate Product 402B were separated by filtration (6 g).

5 g of Intermediate Product 402B, 1.7 g of chloranil, and 80 mL of methanol were mixed with each other, and the mixture was stirred for 5 hours. The obtained crystals were separated by filtration. As a result, 5 g of a coarse body of Compound 402 was obtained.

5 g of the coarse body of Compound 402 was dissolved in methanol, and the solution was neutralized with sodium acetate and was purified by column chromatography (filler: SEPHADEX, developing solution: methanol). As a result, 3 g of Compound 402 was obtained.

Solution absorbance spectrum of Compound 402: $\lambda$max=617 nm, $\varepsilon$=73600 $L \cdot mol^{-1} \cdot cm^{-1}$ (aqueous solution)
ESI-mass spectrum (Posi): 670.2 (M-Na+2H)
$^1$H NMR: $\delta$=8.65 (s,1H), 7.95 (d,1H), 7.29 (m,4H), 7.20 (m,7H), 6.17 (d,2H), 2.31 (s,6H), 2.17 (s,12H), 400 MHz in MeOH-d4

(Synthesis of Compound 403)

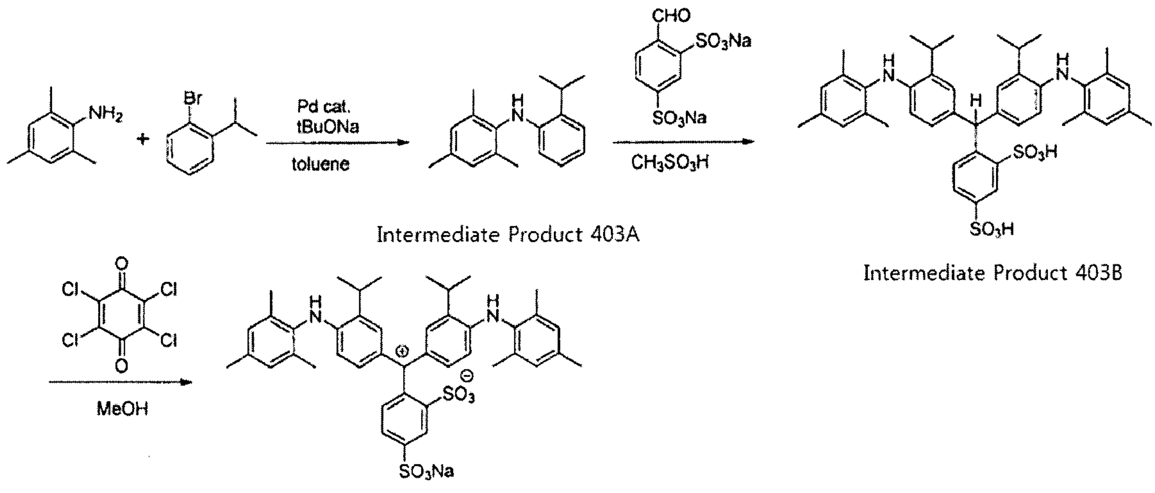


Intermediate Product 403A

Intermediate Product 403B

Compound 403

7 g of 2,4,6-trimethylaniline, 10 g of 2-chlorotoluene, 11 g of t-butoxysodium, and 75 mL of toluene were put into a flask and were sufficiently stirred in a nitrogen gas flow. 24 mg of palladium acetate and 85 mg of 1,3-bis(2,6-diisopropylphenyl)imidazolium chloride were added to the solution, and the reaction solution was heated to 110°C and was stirred for 3 hours. The obtained reaction solution was cooled, water was poured thereinto, and the solution was extracted with ethyl acetate. The obtained organic phase was dried with sodium sulfate and was condensed. Next, the condensate was purified by silica gel column chromatography (developing solution: ethyl acetate/hexane=1/20). As a result, 10 g of Intermediate Product 403A was obtained.

10 g of Intermediate Product 403A, 13 g of disodium 4-formylbenzene-1,3-disulfonate, and 100 mL of methanesulfonic acid were put into a flask and were stirred at 60°C for 6 hours. The obtained reaction solution was poured into 300 mL of iced water, and the obtained crystals of Intermediate Product 403B were separated by filtration (6 g).

5 g of Intermediate Product 403B, 1.7 g of chloranil, and 80 mL of methanol were mixed with each other, and the mixture was stirred for 5 hours. The obtained crystals were separated by filtration. As a result, 5 g of a coarse body of Compound 403 was obtained.

5 g of the coarse body of Compound 403 was dissolved in methanol, and the solution was neutralized with sodium acetate and was purified by column chromatography (filler: SEPHADEX, developing solution: methanol). As a result, 3 g of Compound 403 was obtained.

Solution absorbance spectrum of Compound 403: $\lambda$max=621 nm, $\varepsilon$=xxx L·mor$^{-1}$·cm$^{-1}$ (aqueous solution)
ESI-mass spectrum (Posi): 754.3 (M-Na+2H)
$^{1}$H NMR: $\delta$=8.63 (s,1H), 7.94 (d,1H), 7.47 (s,2H), 7.18 (m,3H), 7.02 (s,4H), 6.18 (s,2H), 3.20 (dt,2H), 2.31 (s,6H), 2.13 (s,12H), 1.30 (dd,12H), 400 MHz in MeOH-d4

[Dip Dyeing Evaluation]

Nylon 6 jersey (manufactured by Shikisensha Co., Ltd.; fabric described below was manufactured by Shikisensha Co., Ltd.) as fabric was dipped in 150 g of a dye bath including 1.5 g of a dye, 0.2 g of acetic acid, and water as shown in Tables 1 and 2, was heated to 98°C for 40 minutes, and was dyed at the same temperature for 30 minutes. After dyeing, the nylon 6 jersey was slowly cooled to 60°C and was washed with water. Using the dyed fabric, a dyed material which was dyed in one of colors including cyan to blue with a high density without color loss even after water washing was obtained. The evaluation results of the obtained dyed material are shown in Tables 1 and 2.

[[Evaluation Method]]

1. Light Fastness Evaluation

Using Xenon Fade-OMeter, dyed samples prepared according to ISO 105-B02 were irradiated with xenon light for 6 hours.

Before and after the irradiation of the xenon light, the lightness value L* and the chroma values a* and b* of each of the samples in the CIE L*a*b* color space (International Commission on illumination (1976)/JIS Z8781-4:2013) were measured using spectrodensitometer ("X-rite 938", manufactured by X-rite Inc.), and $\Delta$Eab as a color difference

between two samples was obtained based on ΔL*, Δa*, and Δb* which were differences between coordinate values L*, a*, and b* in the L*a*b* color space. A lower value represents that the behavior before and after the light irradiation is small and excellent. A ΔEab value of 40 or lower was set as an allowable range.

$$\text{Color Difference } \Delta Eab=(\Delta L^{*2}+\Delta a^{*2}+\Delta b^{*2})^{0.5}$$

2. Water Fastness Evaluation

The dyed samples prepared as described above were evaluated using a test method described in JIS-L0846 (2010) and was evaluated using an evaluation method described in this test method.
The higher the grade number, the better.

3. Chlorine Fastness Evaluation

The dyed samples prepared as described above were evaluated using a test method described in JIS-L0856 (2010) and was evaluated using an evaluation method described in this test method.

[Table 1]

| | Dye | Light Fastness ΔEab | Water Fastness | Chlorine Fastness |
|---|---|---|---|---|
| Example 1 | Compound 1 | 34 | Grade 4 | Grade 2 to 3 |
| Example 2 | Compound 19 | 34 | Grade 4 | Grade 2 to 3 |
| Example 3 | Compound 21 | 32 | Grade 4 | Grade 2 to 3 |
| Comparative Example 1 | Comparative Compound 1 | 50 | Grade 4 | Grade 2 |
| Comparative Example 2 | Comparative Compound 2 | 50 | Grade 4 | Grade 2 |
| Example 4 | Compound 34 | 32 | Grade 4 | Grade 3 |
| Example 5 | Compound 30 | 34 | Grade 4 | Grade 3 |
| Example 6 | Compound 29 | 34 | Grade 4 | Grade 3 |
| Example 7 | Compound 32 | 34 | Grade 4 | Grade 3 |
| Example 8 | Compound 37 | 36 | Grade 4 | Grade 3 |
| Example 9 | Compound 31 | 34 | Grade 4 | Grade 3 |
| Example 10 | Compound 43 | 36 | Grade 4 | Grade 3 |
| Comparative Example 3 | Acid Blue 9 | 51 | Grade 4 | Grade 2 |
| Example 11 | Compound 20 | 34 | Grade 4 | Grade 2 to 3 |
| Example 12 | Compound 56 | 33 | Grade 4 | Grade 2 to 3 |
| Example 13 | Compound 58 | 35 | Grade 4 | Grade 2 to 3 |
| Example 14 | Compound 59 | 34 | Grade 4 | Grade 2 to 3 |
| Example 15 | Compound 62 | 33 | Grade 4 | Grade 2 to 3 |
| Example 16 | Compound 65 | 33 | Grade 4 | Grade 2 to 3 |
| Example 17 | Compound 67 | 35 | Grade 4 | Grade 2 to 3 |
| Example 18 | Compound 101 | 34 | Grade 4 | Grade 2 to 3 |
| Example 19 | Compound 102 | 33 | Grade 4 | Grade 2 to 3 |
| Example 101 | Compound 103 | 34 | Grade 4 | Grade 2 to 3 |

(continued)

| | Dye | Light Fastness ΔEab | Water Fastness | Chlorine Fastness |
|---|---|---|---|---|
| Example 102 | Compound 104 | 33 | Grade 4 | Grade 2 to 3 |
| Example 103 | Compound 105 | 35 | Grade 4 | Grade 2 to 3 |
| Example 104 | Compound 106 | 32 | Grade 4 | Grade 2 to 3 |
| Example 105 | Compound 107 | 33 | Grade 4 | Grade 2 to 3 |
| Example 106 | Compound 108 | 32 | Grade 4 | Grade 2 to 3 |
| Example 107 | Compound 109 | 35 | Grade 4 | Grade 2 to 3 |
| Example 108 | Compound 110 | 34 | Grade 4 | Grade 2 to 3 |

[Table 2]

| | Dye | Light Fastness ΔEab | Water Fastness | Chlorine Fastness |
|---|---|---|---|---|
| Example 201 | Compound 201 | 26 | Grade 4 | Grade 2 to 3 |
| Example 202 | Compound 202 | 25 | Grade 4 | Grade 2 to 3 |
| Example 203 | Compound 302 | 35 | Grade 4 | Grade 2 to 3 |
| Example 204 | Compound 303 | 35 | Grade 4 | Grade 2 to 3 |
| Example 205 | Compound 401 | 30 | Grade 4 | Grade 2 to 3 |
| Example 206 | Compound 402 | 39 | Grade 4 | Grade 2 to 3 |
| Example 207 | Compound 403 | 24 | Grade 4 | Grade 2 to 3 |

Acid Blue 9

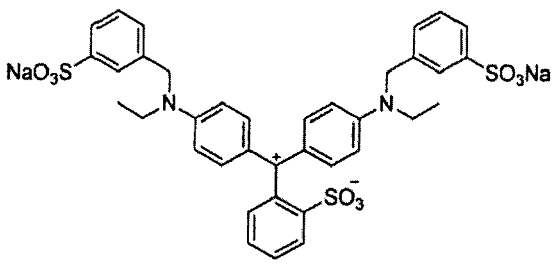

[Textile Printing Evaluation]

A solid image was printed on the nylon 6 jersey as the fabric with the following printing paste using a screen printing machine.

Printing Paste

- Paste: MEYPRO GUM NP [manufactured by Mayhall Chemical AG] 50 g
- pH adjuster: ammonium sulfate [manufactured by Wako Pure Chemical Industries, Ltd.] 5 g
- Colorant: dye shown in Tables 3 and 4 2g
- Water 43 g

The printed fabric was dried and then was treated with saturated steam at 105°C. Next, the fabric was washed with water to wash off a non-fixed portion of the dye. A fixing treatment was performed on the printed fabric in a 200 mL

bath including 0.1 g of acetic acid, 0.6 g of ammonium sulfate, and 6 g of SUNLIFE TN (a fixing agent, manufactured by Nicca Chemical Co., Ltd.) at 60°C for 5 minutes, and the printed fabric was dried. Using the dyed fabric, a dyed material which was dyed in one of colors including cyan to blue with a high density without color loss was obtained. The evaluation results of the dyed material are shown in Tables 3 and 4.

[[Evaluation Method]]

The printed solid image was evaluated using the same method as in the dip dyeing evaluation described above.

[Table 3]

| | Dye | Light Fastness ΔEab | Water Fastness | Chlorine Fastness |
|---|---|---|---|---|
| Example 20 | Compound 1 | 34 | Grade 4 | Grade 2 to 3 |
| Example 21 | Compound 19 | 34 | Grade 4 | Grade 2 to 3 |
| Example 22 | Compound 21 | 32 | Grade 4 | Grade 2 to 3 |
| Comparative Example 4 | Comparative Compound 1 | 50 | Grade 4 | Grade 2 |
| Comparative Example 5 | Comparative Compound 2 | 50 | Grade 4 | Grade 2 |
| Example 23 | Compound 34 | 32 | Grade 4 | Grade 3 |
| Example 24 | Compound 30 | 34 | Grade 4 | Grade 3 |
| Example 25 | Compound 29 | 34 | Grade 4 | Grade 3 |
| Example 26 | Compound 32 | 34 | Grade 4 | Grade 3 |
| Example 27 | Compound 37 | 36 | Grade 4 | Grade 3 |
| Example 28 | Compound 31 | 34 | Grade 4 | Grade 3 |
| Example 29 | Compound 43 | 36 | Grade 4 | Grade 3 |
| Comparative Example 6 | Acid Blue 9 | 50 | Grade 4 | Grade 2 |
| Example 30 | Compound 20 | 34 | Grade 4 | Grade 2 to 3 |
| Example 31 | Compound 56 | 33 | Grade 4 | Grade 2 to 3 |
| Example 32 | Compound 58 | 35 | Grade 4 | Grade 2 to 3 |
| Example 33 | Compound 59 | 34 | Grade 4 | Grade 2 to 3 |
| Example 34 | Compound 62 | 33 | Grade 4 | Grade 2 to 3 |
| Example 35 | Compound 65 | 33 | Grade 4 | Grade 2 to 3 |
| Example 36 | Compound 67 | 35 | Grade 4 | Grade 2 to 3 |
| Example 37 | Compound 101 | 34 | Grade 4 | Grade 2 to 3 |
| Example 38 | Compound 102 | 33 | Grade 4 | Grade 2 to 3 |
| Example 131 | Compound 103 | 33 | Grade 4 | Grade 2 to 3 |
| Example 132 | Compound 104 | 34 | Grade 4 | Grade 2 to 3 |
| Example 133 | Compound 105 | 34 | Grade 4 | Grade 2 to 3 |
| Example 134 | Compound 106 | 32 | Grade 4 | Grade 2 to 3 |
| Example 135 | Compound 107 | 33 | Grade 4 | Grade 2 to 3 |
| Example 136 | Compound 108 | 33 | Grade 4 | Grade 2 to 3 |
| Example 137 | Compound 109 | 34 | Grade 4 | Grade 2 to 3 |
| Example 138 | Compound 110 | 33 | Grade 4 | Grade 2 to 3 |

[Table 4]

| | Dye | Light Fastness ΔEab | Water Fastness | Chlorine Fastness |
|---|---|---|---|---|
| Example 208 | Compound 201 | 27 | Grade 4 | Grade 2 to 3 |
| Example 209 | Compound 202 | 26 | Grade 4 | Grade 2 to 3 |
| Example 210 | Compound 302 | 35 | Grade 4 | Grade 2 to 3 |
| Example 211 | Compound 303 | 35 | Grade 4 | Grade 2 to 3 |
| Example 212 | Compound 401 | 30 | Grade 4 | Grade 2 to 3 |
| Example 213 | Compound 402 | 39 | Grade 4 | Grade 2 to 3 |
| Example 214 | Compound 403 | 25 | Grade 4 | Grade 2 to 3 |

Separately, by using fabric made of silk, fabric made of wool, or nylon 66 jersey as the fabric instead of the nylon 6 jersey, textile printing was performed using the same method as described above. At this time, a dyed material which was dyed with a high density without color loss even after water washing was obtained, and light fastness and chlorine fastness were also excellent.

[Ink Jet Textile Printing Evaluation]

Inkjet textile printing was performed using a method described in JP2013-209786A.

<Pre-Treatment Step>

Regarding the nylon 6 jersey as the fabric, the following components were mixed with each other to prepare Pre-Treatment Agent A. The fabric was padded with Pre-Treatment Agent A obtained above at a squeezing rate of 90% and was naturally dried. As a result, pre-treated fabric was obtained.

(Pre-Treatment Agent A)

- Paste: guar gum [MEYPRO GUM NP, manufactured by Nissho Corporation] 2 g
- Hydrotropy agent: urea [manufactured by Wako Pure Chemical Industries, Ltd.] 5 g
- pH adjuster: ammonium sulfate [manufactured by Wako Pure Chemical Industries, Ltd.] 4 g
- Water 89 g

<Printing Step>

Next, an ink composition having the following composition was stirred for 1 hour while heated at 30°C to 40°C. The obtained solution was filtered under reduced pressure through a microfilter having an average pore size of 0.5 μm. As a result, an ink jet ink was prepared.

- Dye shown in Tables 5 and 6 5 mass%
- Glycerin (manufactured by Wako Pure Chemical Industries, Ltd.; aqueous organic solvent) 10 mass%
- Diethylene glycol (manufactured by Wako Pure Chemical Industries, Ltd.; aqueous organic solvent) 10 mass%
- Olefin E1010 (acetylenic glycol surfactant; manufactured by Nissin Chemical Co., Ltd.) 1 mass%
- Water 74 mass%

After setting each of the obtained ink jet ink solutions in an ink jet printer (DMP-2381, manufactured by Dimatix Inc.), a solid image was printed on the pre-treated fabric.

<Post-Treatment Step>

After drying the printed fabric, saturated steam was applied to the printed fabric at 100°C for 30 minutes in a steam treatment such that the dye was fixed on the fiber of the fabric. Next, the fabric was washed with cold water for

10 minutes, was washed with warm water at 60°C for 5 minutes, and then was naturally dried. Using the dyed fabric, a dyed material which was dyed in one of colors including cyan to blue with a high density without color loss was obtained.

FIG. 3 shows absorbance spectra of nylon 6 jersey dyed fabrics used in Example 52 (Compound 59) and Example 54 (Compound 65).

[[Evaluation Method]]

The printed solid image was evaluated using the same method as in the dip dyeing evaluation described above.

[Table 5]

| | Dye | Light Fastness ΔEab | Water Fastness | Chlorine Fastness |
|---|---|---|---|---|
| Example 39 | Compound 1 | 33 | Grade 4 | Grade 2 to 3 |
| Example 40 | Compound 19 | 33 | Grade 4 | Grade 2 to 3 |
| Example 41 | Compound 21 | 31 | Grade 4 | Grade 2 to 3 |
| Comparative Example 7 | Comparative Compound 1 | 49 | Grade 4 | Grade 2 |
| Comparative Example 8 | Comparative Compound 2 | 49 | Grade 4 | Grade 2 |
| Example 42 | Compound 34 | 31 | Grade 4 | Grade 3 |
| Example 43 | Compound 30 | 33 | Grade 4 | Grade 3 |
| Example 44 | Compound 29 | 33 | Grade 4 | Grade 3 |
| Example 45 | Compound 32 | 33 | Grade 4 | Grade 3 |
| Example 46 | Compound 37 | 35 | Grade 4 | Grade 3 |
| Example 47 | Compound 31 | 33 | Grade 4 | Grade 3 |
| Example 48 | Compound 43 | 35 | Grade 4 | Grade 3 |
| Comparative Example 9 | Acid Blue 9 | 49 | Grade 4 | Grade 2 |
| Example 49 | Compound 20 | 33 | Grade 4 | Grade 2 to 3 |
| Example 50 | Compound 56 | 32 | Grade 4 | Grade 2 to 3 |
| Example 51 | Compound 58 | 34 | Grade 4 | Grade 2 to 3 |
| Example 52 | Compound 59 | 33 | Grade 4 | Grade 2 to 3 |
| Example 53 | Compound 62 | 32 | Grade 4 | Grade 2 to 3 |
| Example 54 | Compound 65 | 32 | Grade 4 | Grade 2 to 3 |
| Example 55 | Compound 67 | 34 | Grade 4 | Grade 2 to 3 |
| Example 56 | Compound 101 | 33 | Grade 4 | Grade 2 to 3 |
| Example 57 | Compound 102 | 32 | Grade 4 | Grade 2 to 3 |
| Example 161 | Compound 103 | 33 | Grade 4 | Grade 2 to 3 |
| Example 162 | Compound 104 | 32 | Grade 4 | Grade 2 to 3 |
| Example 163 | Compound 105 | 34 | Grade 4 | Grade 2 to 3 |
| Example 164 | Compound 106 | 32 | Grade 4 | Grade 2 to 3 |
| Example 165 | Compound 107 | 32 | Grade 4 | Grade 2 to 3 |
| Example 166 | Compound 108 | 31 | Grade 4 | Grade 2 to 3 |
| Example 167 | Compound 109 | 33 | Grade 4 | Grade 2 to 3 |
| Example 168 | Compound 110 | 33 | Grade 4 | Grade 2 to 3 |

[Table 6]

| | Dye | Light Fastness ΔEab | Water Fastness | Chlorine Fastness |
|---|---|---|---|---|
| Example 215 | Compound 201 | 27 | Grade 4 | Grade 2 to 3 |
| Example 216 | Compound 202 | 26 | Grade 4 | Grade 2 to 3 |
| Example 217 | Compound 302 | 35 | Grade 4 | Grade 2 to 3 |
| Example 218 | Compound 303 | 34 | Grade 4 | Grade 2 to 3 |
| Example 219 | Compound 401 | 31 | Grade 4 | Grade 2 to 3 |
| Example 220 | Compound 402 | 39 | Grade 4 | Grade 2 to 3 |
| Example 221 | Compound 403 | 25 | Grade 4 | Grade 2 to 3 |

Separately, by using fabric made of silk, fabric made of wool, or nylon 66 jersey as the fabric instead of the nylon 6 jersey, ink jet textile printing was performed on each of the fabrics using the method described in JP2013-209786A. At this time, a dyed material which was dyed with a high density without color loss even after water washing was obtained, and light fastness and chlorine fastness were also excellent.

In addition, by using plain paper as the recording medium instead of the fabric, an image was formed by ink jet printing using a method described in JP2013-49776A and the formed image was evaluated. At this time, spectral characteristics and light fastness were excellent, and it was found that the ink has excellent characteristics as an ink for paper.

A coloring composition including Compound 44 as a reactive dye was printed on cotton by screen printing. At this time, a dyed material which was dyed in cyan with a high density without color loss even after water washing was obtained.

A coloring composition including Compound 23, which was an oil-soluble dye, as a disperse dye was printed on polyester by screen printing. At this time, a dyed material which was dyed in blue with a high density without color loss even after water washing was obtained.

Compound 23 which was an oil-soluble dye was evaluated as a color toner using a method described in JP2013-49776A. At this time, spectral characteristics and light fastness were superior, and it was found that the ink has excellent characteristics as a toner.

According to the present invention, a compound having an excellent color, a high color optical density, and excellent light fastness, water fastness, and chlorine fastness, and a coloring composition for dyeing or textile printing including the compound can be provided. In addition, an ink jet ink including the above-described coloring composition for dyeing or textile printing, a method of printing on fabric, and a dyed or printed fabric can be provided.

The present invention has been described in detail with reference to the specific embodiment. However, it is obvious to those skilled in the art that various modifications and changes can be made within a range not departing from the scope of the present invention.

The present application is based on Japanese Patent Application (JP2014-139182) filed on July 4, 2014, Japanese Patent Application (JP2014-226290) filed on November 6, 2014, and Japanese Patent Application (JP2015-31985) filed on February 20, 2015, the entire content of which is incorporated herein by reference.

## Claims

**1.** A compound represented by the following Formula (2-1),

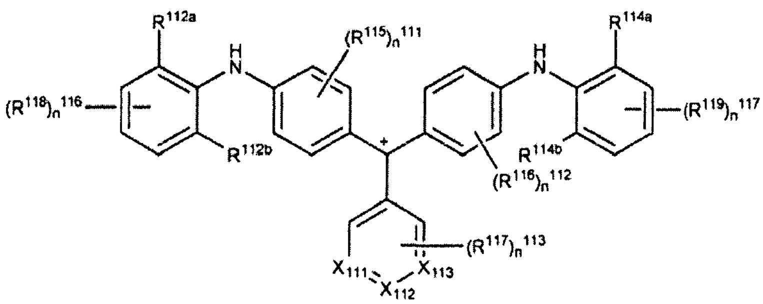

Formula (2-1)

in Formula (2-1), $R^{112a}$, $R^{112b}$, $R^{114a}$ and $R^{114b}$ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group, $R^{115}$, $R^{116}$, $R^{117}$, $R^{118}$, and $R^{119}$ each independently represent a substituent, $X_{111}$, $X_{112}$, and $X_{113}$ each independently represent CH or a nitrogen atom, the number of nitrogen atoms in each of the groups represented by $X_{111}$ to $X_{113}$ is 0 to 2, $n^{111}$ and $n^{112}$ each independently represent an integer of 0 to 4, $n^{113}$ represents an integer of 0 to 5, $n^{116}$ and $n^{117}$ each independently represent an integer of 0 to 3, in Formula (2-1), a substituent may be bonded after a hydrogen atom is removed, in a case where $n^{111}$, $n^{112}$, $n^{113}$, $n^{116}$, and $n^{117}$ each independently represent an integer of 2 or more, plural $R^{115}$'s $R^{116}$'s $R^{117}$'s, $R^{118}$'s, and $R^{119}$'s may be the same as or different from each other, and the compound represented by Formula (2-1) has a counter anion.

**2.** The compound according to claim 1 which is represented by the Formula (2-1) and has at least one sulfo group.

**3.** The compound according to claim 1 or 2, represented by any one of the following Formulae.

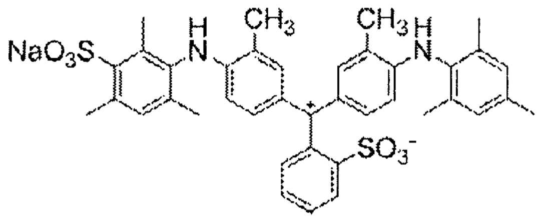

Compound 65

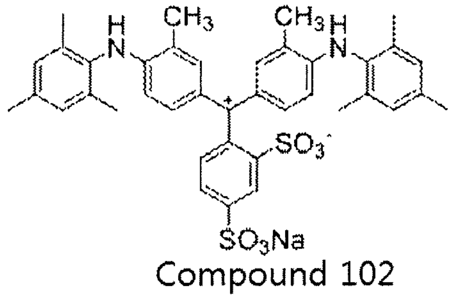

Compound 102

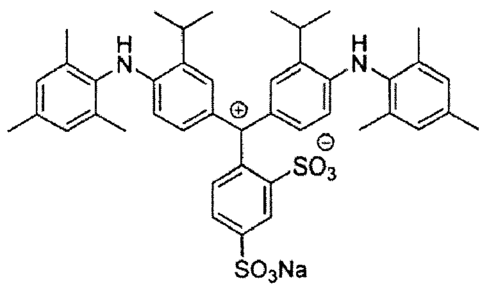

Compound 403

**4.** A coloring composition for dyeing or textile printing comprising the compound according to any one of claims 1 to 3.

**5.** An ink jet ink comprising the compound according to any one of claims 1 to 3.

**6.** A textile printing method comprising the following steps (1) to (4):

(1) a step of adjusting a color paste by adding the coloring composition for dyeing or textile printing according to claim 4 to a solution including at least a polymer compound and water;
(2) a step of printing the color paste of (1) on fabric;
(3) a step of applying steam to the printed fabric; and
(4) a step of washing the printed fabric with water and drying the washed fabric.

**7.** A textile printing method comprising the following steps (11) to (14):

(11) a step of applying a paste including at least a polymer compound and water to fabric;
(12) a step of printing the ink jet ink according to claim 5 on the fabric using an ink jet method;

(13) a step of applying steam to the printed fabric; and
(14) a step of washing the printed fabric with water and drying the washed fabric.

**8.** The textile printing method according to claim 6 or 7, wherein the fabric includes polyamide.

**9.** A fabric which is dyed or printed using the coloring composition for dyeing or textile printing according to claim 4.

**10.** A fabric which is printed using the method according to any one of claims 6 to 8.

FIG. 1

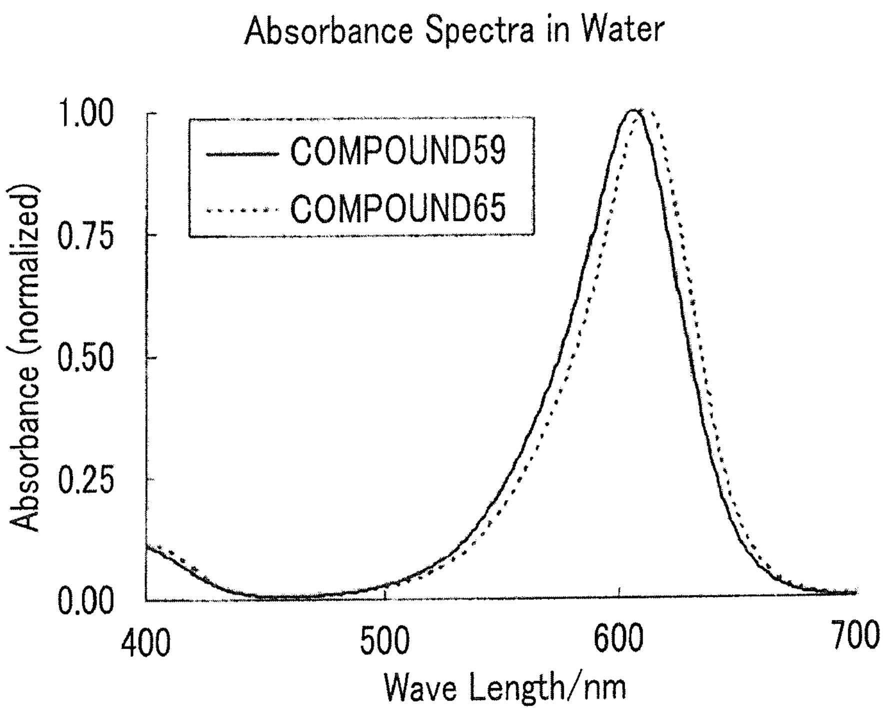
Absorbance Spectra in Water
1.00
0.75
0.50
0.25
0.00
Absorbance (normalized)
COMPOUND59
COMPOUND65
400
500
600
700
Wave Length/nm

FIG. 2

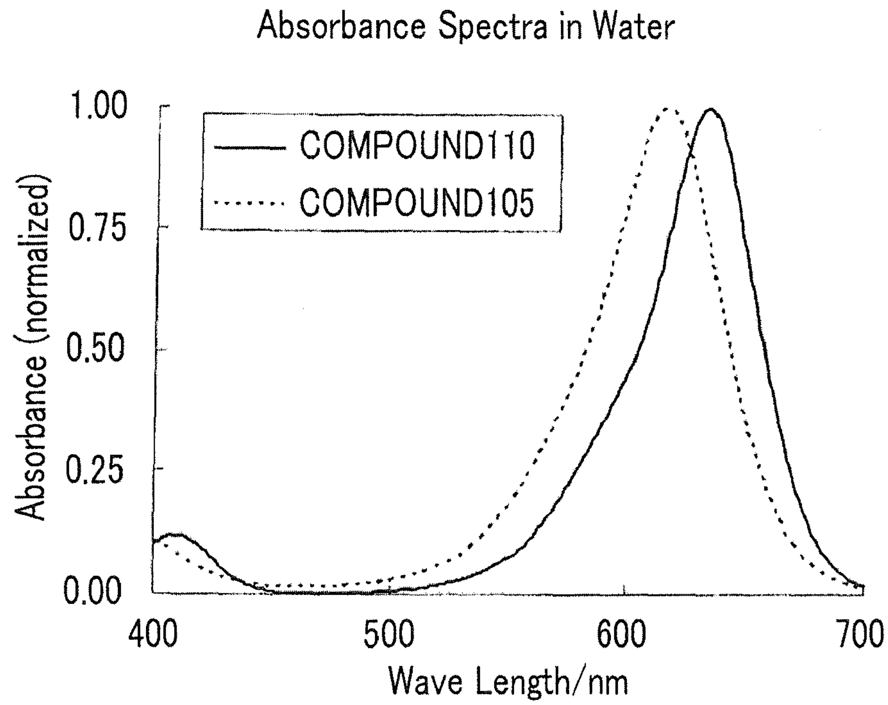
Absorbance Spectra in Water
1.00
0.75
0.50
0.25
0.00
Absorbance (normalized)
COMPOUND110
COMPOUND105
400
500
600
700
Wave Length/nm

FIG. 3

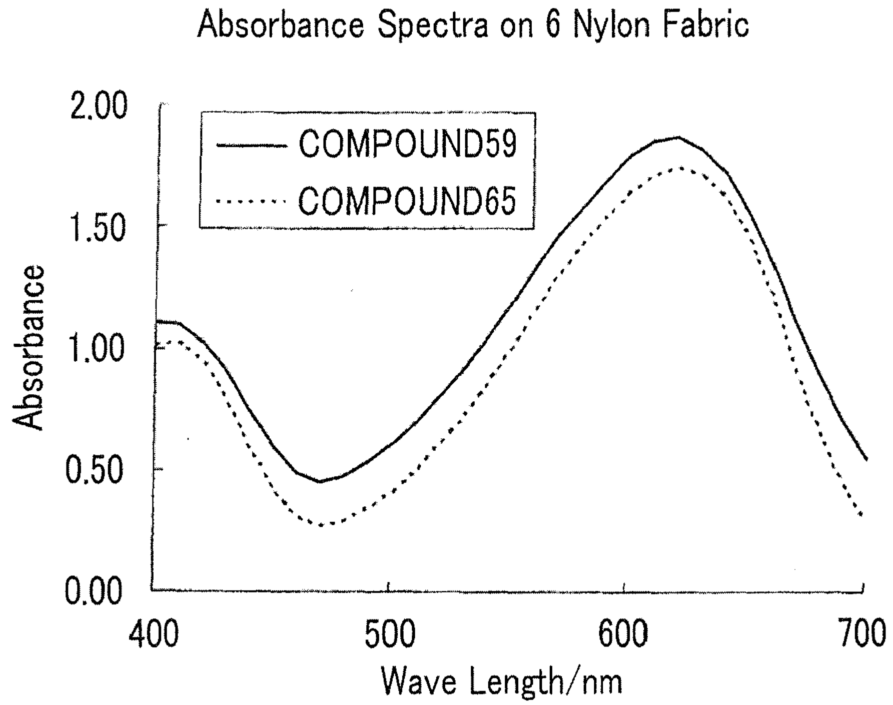
Absorbance Spectra on 6 Nylon Fabric
2.00
1.50
1.00
0.50
0.00
Absorbance
COMPOUND59
COMPOUND65
400
500
600
700
Wave Length/nm

Europäisches Patentamt
European Patent Office
Office européen des brevets

# EUROPEAN SEARCH REPORT

Application Number
EP 18 16 3310

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 01/76347 A2 (BASF CORP [US]; HARRISON ASHLEIGH SIMMS [US]; ELLIS GARY [US])<br>18 October 2001 (2001-10-18)<br>* compounds (III), (IV) *<br>* page 6, lines 6-10 *<br>* claims 1-21 *<br>----- | 1-5<br><br><br>1-10 | INV.<br>C09B11/10<br>B41M5/00<br>C09B67/20<br>C09D11/20<br>C09D11/328<br>D06P1/40<br>D06P3/24<br>D06P5/00<br>D06P5/20<br>C09B11/04<br>C09B11/12<br>C09D11/037<br>D06P5/30<br>D06P1/00<br>D06P1/46 |
| X<br><br>Y | US 3 925 094 A (PAPENFUSS THEODOR ET AL)<br>9 December 1975 (1975-12-09)<br>* compound (1) *<br>* column 1, line 10 - column 2, line 24 *<br>* column 6, lines 50-64 *<br>* examples 5, 7 *<br>* claims 1-5 *<br>----- | 1-5<br><br>1-10 | |
| X<br><br>Y | DE 23 59 620 A1 (HOECHST AG)<br>17 July 1975 (1975-07-17)<br>* page 2, paragraphs 3, 4 *<br>* page 5, paragraph 3 - page 6, paragraph 2 *<br>* page 10; compounds 1st, 3rd *<br>* claims 1-10 *<br>----- | 1-10<br><br>1-10 | TECHNICAL FIELDS SEARCHED (IPC) |
| X<br><br>Y | GB 1 530 701 A (CIBA GEIGY AG)<br>1 November 1978 (1978-11-01)<br>* compound of formulae (1) and (4) *<br>* table 1 *<br>* claims 1-3 *<br>----- | 1,2<br><br>1,2,4-10 | C09B<br>C09D<br>D06P |
| E | WO 2016/039272 A1 (FUJIFILM CORP [JP])<br>17 March 2016 (2016-03-17)<br>* page 24 *<br>----- | 1-10 | |

The present search report has been drawn up for all claims

1

| Place of search | Date of completion of the search | Examiner |
|---|---|---|
| Munich | 8 June 2018 | Constantinescu, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 16 3310

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2018

| Patent document cited in search report | Publication date | Patent family member(s) | Publication date |
|---|---|---|---|
| WO 0176347 A2 | 18-10-2001 | AU 5129601 A | 23-10-2001 |
| | | US 6653390 B1 | 25-11-2003 |
| | | US 2003221587 A1 | 04-12-2003 |
| | | WO 0176347 A2 | 18-10-2001 |
| US 3925094 A | 09-12-1975 | NONE | |
| DE 2359620 A1 | 17-07-1975 | NONE | |
| GB 1530701 A | 01-11-1978 | CH 593144 A5 | 30-11-1977 |
| | | DE 2602405 A1 | 19-08-1976 |
| | | GB 1530701 A | 01-11-1978 |
| WO 2016039272 A1 | 17-03-2016 | JP 6211713 B2 | 11-10-2017 |
| | | JP WO2016039272 A1 | 27-04-2017 |
| | | TW 201614012 A | 16-04-2016 |
| | | WO 2016039272 A1 | 17-03-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2939908 B
- JP 2002348502 A
- JP 7292581 A
- JP H07292581 A
- JP 2003073358 A
- JP 2006306933 A
- JP 6166969 A
- JP H06166969 A
- US 5336443 A
- JP 7316991 A
- JP H07316991 A
- JP 2013209786 A
- JP 2002371079 A
- JP 2008266466 A
- JP 19992693929 A
- JP H112693929 A
- JP 2014005462 A
- WO 10109867 A
- JP 6057644 A
- JP H0657644 A
- JP 2002339268 A
- JP 2000054277 A
- JP 7150482 A
- JP H07150482 A
- JP 2008174865 A
- JP 2012154006 A
- JP 2012012730 A
- JP 2068372 A
- JP H0268372 A
- JP 63031594 B
- JP S6331594 B
- JP 2002275769 A
- JP 2001081680 A
- JP 2004068208 A
- JP 11043873 A
- JP H1143873 A
- JP 2007217829 A
- JP 2006083495 A
- JP 2005154936 A
- JP 2002105875 A
- JP 2002348786 A
- JP 11081163 A
- JP H1181163 A
- JP 2061183 A
- JP H0261183 A
- JP 2001295186 A
- JP 2004060073 A
- JP 2003113583 A
- JP 8100379 A
- JP H08100379 A
- JP 2053976 A
- JP H0253976 A
- JP 2000226781 A
- JP 2004292989 A
- JP 2002249991 A
- JP 2002363872 A
- JP 6341070 A
- JP H06341070 A
- JP 2004197237 A
- JP 2008223192 A
- JP 2011179130 A
- JP 62257464 A
- JP S62257464 A
- JP 2047378 A
- JP H0247378 A
- JP 60094678 A
- JP S6094678 A
- JP 2002266236 A
- JP 2007321247 A
- JP 3287873 A
- JP H03287873 A
- JP 2004131919 A
- JP 9296379 A
- JP H09296379 A
- JP 7070953 A
- JP H0770953 A
- JP 7197384 A
- JP H07197384 A
- JP 7070950 A
- JP H0770950 A
- JP 3104977 A
- JP H03104977 A
- JP 2007303046 A
- JP 2007313717 A
- JP 2008248437 A
- JP 3045774 A
- JP H0345774 A
- JP 2001277656 A
- JP 2000290882 A
- JP 2001018390 A
- JP 2010083040 A
- JP 2011031418 A
- JP 2008202210 A
- JP 2006322131 A
- JP 2007100270 A
- JP 8333517 A
- JP H08333517 A

- JP 2013049776 A
- JP 2014139182 A
- JP 2014226290 A
- JP 2015031985 A

**Non-patent literature cited in the description**

- Dyeing Note. Shikisensha Co, vol. 24, 124-130
- *Dyeing Note,* 134-145
- *Dyeing Note,* 147-154
- *Dyeing Note,* 216-222
- *Dyeing Note,* 230-255
- *Dyeing Note,* 285, , 286
- *Dyeing Note,* 279-284
- *Dyeing Note,* 304-321
- *Dyeing Note,* 322-334
- *Dyeing Note,* 349-361
- *Dyeing Note,* 367-369
- *Dyeing Note,* 336-338
- *Dyeing Note,* 339-345
- *Dyeing Note,* 346-348
- *Dyeing Note,* 370-374
- *Dyeing Note,* 375-381
- *Dyeing Note,* 362-363
- *Dyeing Note,* 426-429
- *Dyeing Note,* 223-255
- *J. Med. Chem.,* 1999, vol. 43, 4485